**Europäisches Patentamt**

**European Patent Office**

**Office européen des brevets**

(19)

(11) Veröffentlichungsnummer: **0 333 808 B1**

(12)

# EUROPÄISCHE PATENTSCHRIFT

(45) Veröffentlichungstag der Patentschrift: **24.11.93**

(51) Int. Cl.5: **G05D 1/08**, B64G 1/38

(21) Anmeldenummer: **88908139.4**

(22) Anmeldetag: **16.09.88**

(86) Internationale Anmeldenummer:
**PCT/DE88/00581**

(87) Internationale Veröffentlichungsnummer:
**WO 89/02622 (23.03.89 89/07)**

(54) **VORRICHTUNG ZUR SOLLWERTREGELUNG UND/ODER STABILISIERUNG VON FREIBEWEGLICHEN KÖRPERN MIT GESPEICHERTEM DRALL.**

(30) Priorität: **16.09.87 DE 3731087**

(43) Veröffentlichungstag der Anmeldung:
**27.09.89 Patentblatt 89/39**

(45) Bekanntmachung des Hinweises auf die
Patenterteilung:
**24.11.93 Patentblatt 93/47**

(84) Benannte Vertragsstaaten:
**DE FR**

(56) Entgegenhaltungen:
**EP-A- 0 046 151**
**DE-C- 3 201 997**
**US-A- 4 504 032**

**Journal of Guidance and Control, Vol.3, No.4, July-August 1980, s.361-368; J.S. -C. Yuan: "Deadbeat Nutation Controller for Momentum Bias Stabilised Spacecraft" the whole document**

(73) Patentinhaber: **Deutsche Aerospace AG**

**D-81663 München(DE)**

(72) Erfinder: **SURAUER, Michael**
**Lindenstrasse 11**
**D-8224 Chieming(DE)**
Erfinder: **PORTE, Francois**
**Franziskanerstrasse 16**
**D-8000 München 80(DE)**
Erfinder: **BITTNER, Helmut**
**Zirler Strasse 4**
**D-8000 München 70(DE)**

EP 0 333 808 B1

EP 0 333 808 B1

**Beschreibung**

Die Erfindung betrifft eine Vorrichtung gemäß dem Oberbegriff des Patentanspruchs 1.

Raumfahrzeuge können infolge Rotation um eine ihrer Hauptachsen, die sogenannte Drallachse, oder infolge zu diesem Zweck eigens eingebauter Drallspeichereinrichtungen einen von Null verschiedenen Drehimpuls oder "Drall" aufweisen.

Die dynamische Bewegung von Körpern, die einen gespeicherten Drall besitzen, unterliegt bekanntlich den Gesetzen der Kreiseltheorie. Bei frei um ihre rotatorischen Achsen beweglichen Körpern, wie z.B. Raumfahrzeugen, bewirkt ein gespeicherter Drall insbesondere eine starke Verkopplung der die rotatorische Bewegung um die zur Drallachse orthogonalen Hauptachsen (Querachsen) des Körpers kennzeichnenden Bewegungsgrößen, wie Drehmomente, Winkelgeschwindigkeiten und Auslenkungen.

Soll nun ein solcher frei beweglicher Körper mit Hilfe eines geschlossenen Regelkreises aus einer Anfangslage nach vorgegebenen Raumrichtungen orientiert und bezüglich dieser Winkellage stabilisiert werden, so müssen die Regelgesetze, die das bewerkstelligen sollen, diesen Verhältnissen um so stärker Rechnung tragen, je schwacher die für die Stabilisierung verfügbaren Stellmomente im Verhältnis zu den Kreiselkopplungen sind. Werden z.B. aus Gründen der Einsparung an Stellenergie diskrete, etwa pulsförmige Stelleingriffe vorgenommen, wie das bei Verwendung von Reaktionsdüsen in Raumfahrzeugen häufig der Fall ist, so wird statt der Präzessionsbewegung im Fall kontinuierlicher Stellmomente eine oft unerwünschte Nutationsbewegung angefacht.

Zusätzliche Probleme treten bei der Sollwertregelung und Stabilisierung solcher Raumfahrzeuge auf Grund ihrer räumlichen Ausdehnung, ihres Schlankheitsgrades und/oder ihrer leichten, gewichtssparenden Bauweise durch das Vorhandensein schwach gedämpfter Strukturschwingungen und Gefahr ihrer Anregung durch pulsförmige Stelleingriffe auf.

Flexible, frei im Raum bewegliche Raumfahrzeuge der betrachteten Art, insbesondere auf Erdumlaufbahnen sich bewegende Satelliten, bestehen im allgemeinen aus einem drallerzeugenden, rotierenden Teil, beziehungsweise einer dessen Wirkung im Prinzip äquivalenten Drallspeichereinrichtung, wie z.B. einem Reaktionsschwungrad, sowie einem nicht rotierenden Teil, wie etwa einer entdrallten Plattform oder dem Satellitenzentralkörper selbst. Dieser nicht rotierende Teil soll mit einer seiner zur Drallachse orthogonalen Querachsen immer möglichst genau zur Erde ausgerichtet werden, weil er missionsbedingt, z.B. über Sende- und Empfangseinrichtungen, kontinuierlich Nachrichtenverbindungen zwischen verschiedenen Punkten der Erde aufrecht erhalten soll. Bewegt sich nun ein solches Raumfahrzeug auf seiner Umlaufbahn um die Erde, so muß sich auch der die Nutzlast tragende, entdrallte Teil pro Umlauf einmal um eine senkrecht zur Bahnebene orientierte Achse drehen, weshalb solche Raumfahrzeuge auch als "Dualspinner" bezeichnet werden.

Aus den geschilderten Verhältnissen geht hervor, daß bei solchen Raumfahrzeugen mindestens drei verschiedene Arten von periodischen, praktisch ungedämpften Schwingungsvorgängen auftreten, die durch das Regelsystem beherrscht werden müssen. Es sind dies die durch Bahnumlauf und Erdorientierung bedingten Bewegungen des fahrzeugeigenen Drallvektors gegenüber der Bahnnormalen, deren Richtung mit dem Bahndrall zusammenfallt und auch die mittlere Orientierung der zur Erde gerichteten Fahrzeugachse bestimmt. Diese Bewegung, deren Schwingungsperiode $1/w_O$ durch die Umlaufzeit gegeben ist, wird daher auch Bahnbewegung genannt. Dieser überlagert ist die Nutationsbewegung, d.h. die Bewegung des Raumfahrzeuges bezüglich seiner eigenen Drallachsenrichtung, deren Periode $1/w_N$ von der Größe des gespeicherten Dralls und den Querachsen-Trägheitsmomenten des Raumfahrzeuges abhängt. Daneben treten noch ein oder zwei Gruppen von schwach gedämpften Schwingungsvorgängen auf, wie beispielsweise Strukturschwingungen, deren Einfluß und Schwingungsfrequenz sich nach den geometrischen, Massen- und Elastizitätseigenschaften der verwendeten Strukturbauteile richtet oder Bewegungen von Flüssigkeiten wie etwa mitgeführten Treibstoffen in vorwiegend kugelförmigen und/oder zylindrischen Behältern, deren Schwingungsformen von der Tankgeometrie und Flüssigkeitseigenschaften wie Viskosität und Oberflächenspannung abhängen. Alle diese Schwingungen sind über ihre Wechselwirkung mit dem Raumfahrzeug und die Drallkopplung zwischen den Fahrzeugachsen miteinander verknüpft.

Soll ein solches Raumfahrzeug mit seinen drei, im allgemeinen orthogonal aufeinander stehenden Achsen bezüglich vorgegebener Raumrichtungen stabilisiert bzw. während seines Umlaufs mit einer dieser drei Achsen der Erde nachgeführt werden, so ist im allgemeinen auch die Messung von Abweichungen aller Fahrzeugachsen von den gewünschten Raumrichtungen mit Hilfe geeigneter Sensoren erforderlich, wobei vorzugsweise Erde und Sonne, aber auch helle Sterne als Referenzobjekte herangezogen werden. Zur Erstellung einer Dreiachsenreferenz für die Raumfahrzeugorientierung sind normalerweise zwei Referenzobjekte notwendig, wobei für jedes der Objekte die Orientierung bezüglich zweier, zueinander und zur Verbindungslinie orthogonaler Richtungen gemessen werden kann. Bei Raumfahrzeugen, die sich auf

2

EP 0 333 808 B1

Erdumlaufbahnen bewegen, können von der Erde als Bezugsobjekt kontinuierlich, z.B. mittels Infrarotsensoren oder RF-Sensoren, immer die Abweichungen einer zur Erde gerichteten Fahrzeugachse in zwei zueinander senkrechten Richtungen, d.h. also zwei Meßwerte abgeleitet werden. Die erforderliche dritte Referenzrichtung kann von der Sonne als Bezugsobjekt, z.B. mittels Sonnensensoren gewonnen werden, mit Ausnahme solcher Positionen des Raumfahrzeuges auf seiner Erdumlaufbahn, in denen Sonne, Erde und Satellit auf einer Linie liegen, d.h. die beiden als Referenz dienenden Raumrichtungen zusammenfallen. In der Praxis wird daher schon seit langem das Bestreben eines drallbehafteten Körpers, seine Richtung im Raum beizubehalten, zur Stabilisierung von Satelliten und Raumfahrzeugen ausgenutzt. Insbesondere ist es dadurch möglich, je nach Größe des gespeicherten Dralls über mehr oder weniger lange Zeiträume mit Zweiachsenreferenz, d.h. der Erde allein als Referenzobjekt zur Lagemessung, auszukommen. Die Bewegung um eine zum Drallvektor parallel liegende Fahrzeugachse wird dabei üblicherweise durch Beschleunigung bzw. Verzögerung der Drallspeichereinrichtug gegenüber dem entdrallten Teil des Fahrzeuges auf Grund der von einem Infrarotsensor gemessenen Ost/West-Abweichung der zur Erde zeigenden Fahrzeugachse innerhalb der Bahnebene bewerkstelligt und soll hier nicht näher betrachtet werden.

Zur Nachführung bzw. Stabilisierung beider zur Drallachse orthogonalen Fahrzeugachsen mittels nur eines weiteren, die Abweichungen der zum Erdmittelpunkt zeigenden Fahrzeugachse senkrecht zur Bahnebene erfassenden Meßsignals wird nun bewußt die Kreiselkopplung zwischen den Querachsen ausgenutzt. Diesbezügliche, bekannte Regeleinrichtungen bestehen üblicherweise neben dem Meßglied, z.B. einem Infrarotsensor, aus einem geeigneten Reglernetzwerk und einem Modulator, der impulsförmige Ansteuersignale für Stellglieder, insbesondere Reaktionsdüsen erzeugt, die so angeordnet sind, daß sie nicht nur Momente bezüglich der einen zu regelnden Fahrzeugachse, sondern gleichzeitig auch Momentenkomponenten entgegengesetzten Vorzeichens um die dazu orthogonale Fahrzeugquerachse erzeugen. Als Regler bzw. Modulatoren kommen gewöhnlich einfache Tiefpaßfilter oder Vorhaltglieder 1. Ordnung in Verbindung mit Pseudorate(PR)- oder Pulsweiten- Pulsfrequenz(PWPF)-Modulatoren zur Anwendung. Zusätzlich müssen solche Regeleinrichtungen mit einer Nutationsdampfungseinrichtung ausgestattet sein, die sicherstellt, daß durch aufeinanderfolgende, jeweils bei Erreichen einer Ansprechschwelle ausgelöste Impulse kein Aufschaukeln der Nutationsschwingungen bzw. Grenzzyklusschwingungen auftreten kann. Die besagten Nutationsdämpfungseinrichtungen beruhen auf dem sogenannten Posicast-Prinzip, das besagt, daß an sich ungedämpfte, periodische Vorgänge, wie im vorliegenden Fall die Nutation, dadurch stabilisiert werden können, daß ein durchgeführter, erster diskreter Stelleingriff nach einer festen Zeit, vorzugsweise im Bereich von 3/8 bis einer halben Periodendauer des periodischen Vorganges, mit gleichem Vorzeichen und Energieinhalt wiederholt wird.

Bei spintstabilisierten Satelliten, die sich wegen der Eigenrotation des Fahrzeug-Hauptkörpers durch einen besonders hohen gespeicherten Drall auszeichnen, werden meistens zusätzliche, von der Regelung der Hauptachsenrichtungen des entdrallten Fahrzeugteils getrennte, eigens zur Nutationdämpfung dienende Regelkreise eingesetzt, die mit eigenen Sensoren, z.B. Beschleunigungsmessern, zur Ansteuerung der in diesem Fall mit dem rotierenden Fahrzeugteil umlaufenden Reaktionsdüsen augestattet sind. Zur Ausrichtung der Fahrzeugachsen bzgl. der Erde, insbesondere der Drallachsenrichtung im Raum, werden in diesem Fall üblicherweise Kommandos von der Erde zum Fahrzeug gesendet, deren Ausführung bordseitig über (Lage-) sensorgesteuerte Logikschaltungen getriggert wird.

Die bekannten Einrichtungen weisen in der Praxis eine Reihe schwerwiegender Nachteile auf. Zunächst arbeitet eine Regelung der genannten Art bei weitem nicht optimal, was den Aufwand an Stellenergie anbelangt. Dieser Umstand liegt darin begründet, daß Stelleingriffe jeweils dann ausgelöst werden, wenn die gemessene Ablage von der Sollrichtung gerade eine zulässige Schwelle erreicht, ohne Rücksicht darauf, ob der Stelleingriff bezuglich der Nutationbsbewegung zu einem günstigen oder gerade ungünstigen. d.h. die Nutationsbewegung vergrößernden Zeitpunkt erfolgen. Dies führt nicht nur dazu, daß aus Gründen der Stabilitätssicherung gegenüber zweiseitigen Grenzzyklen die Schwellenwerte für die Auslösung von Stelleingriffen relativ groß, d.h. mindestens gleich dem durch einen Stellimpuls erzeugten maximalen Durchmesser des Nutationskegels, gewählt werden müssen, was die Genauigkeit der Nachführung der zu regelnden Achse nachteilig beeinflußt, sondern es ist auch die Wirksamkeit der nachfolgenden Nutationsdämpfung dementsprechend unsicher und von den Zufälligkeiten des Auslösemomentes des ersten Stelleingriffs abhängig.

Dieser Unsicherheitsbereich wird noch vergrößert durch die unvermeidlichen Schwankungen systembedingter Parameter, wie z.B. des tatsächlich abgegebenen "effektiven" Stellimpulses um ca. 20 %, Drallschwankungen im zulässigen Operationsbereich von gewöhnlich ± 10 %, Schwankungen der Trägheitsmomente, Meßwertrauschen und dergleichen. Vor allem aber sind die bekannten Einrichtungen nicht geeignet, gleichzeitig die Stabilität zusätzlicher, schwach gedämpfter Schwingungsvorgange, wie Strukturschwingungen und Treibstoffbewegungen, sicherzustellen, vor allem wenn sich deren Frequenzen nicht genügend

3

stark von den Nutationsschwingungen unterscheiden bzw. ihre Ankopplung an das Raumfahrzeug nicht genügend schwach ist, so daß eine gegenseitige Beeinflussung ausgeschlossen wäre.

Wegen der schwachen Eigendämpfung der besagten Schwingungsvorgänge ist eine Anregung selbst über subharmonische Stelleingriffe möglich. In anderen Fällen, wie beispielsweise bei sogenannten drallstabilisierten oder spinstabilisierten Satelliten, liegt wegen des hohen Dralls die Nutationsfrequenz in gefährlicher Nähe des Schwingungsbereichs der elastischen Verformungen.

Ein weiterer Nachteil der Vorgenannten, bekannten Einrichtungen ist darin zu sehen, daß die Regelgenauigkeit bezüglich der zweiten, nur indirekt über die Drallkopplung stabilisierten Querachse des Raumfahrzeuges häufig nicht den gestellten Anforderungen entspricht. Ihre Abweichung von der gewünschten Winkellage wird fast ausschließlich bestimmt durch die Größe des gespeicherten Dralls, das um diese Achse wirkende äußere Störmoment und durch die Größe des um die erste, direkt geregelte Fahrzeugachse zugelassenen und aus den vorstehend erläuterten Stabilitätsgründen nicht beliebig reduzierbaren Regelfehlers.

Der Erfindung liegt die Aufgabe zugrunde, eine Vorrichtung der eingangs genannten Art zu schaffen, welche eine bessere Ausnutzung der Stellenergie gewährleistet, die Stabilität von Schwingungsvorgängen elastischer Strukturen oder bewegter Flüssigkeiten sicherstellt sowie eine größere Regelgenauigkeit der Winkelbewegung um beide Querachsen ermöglicht, auch bei Verwendung nur eines einachsigen Lagesensors für die Querachsenregelung.

Gemäß der Erfindung wird dies durch die im kennzeichnenden Teil des Patentanspruchs 1 enthaltenen Merkmale erreicht.

In weiterer, vorteilhafter Ausgestaltung gemäß Anspruch 2 werden mit Hilfe eines entweder nur zeitweise oder auch kontinuierlich verfügbaren, z.B. über Sonnensensoren gewinnbaren, zusätzlichen, den Ausrichtfehler der zweiten Querachse darstellenden Meßsignals beide, zur Drallachse und zueinander orthogonale Querachsen in energieoptimaler und die Stabilität aller beschriebenen, schwach gedämpften Schwingungsvorgänge sichernden Weise mit dem kleinstmöglichen Fehler bezüglich vorgegebener Sollrichtungen geregelt.

In J.S.-C. Yuan: "Deadbeat Nutation Controller for Momentum Bias Stabilized Spacecraft" aus Journal of Guidance and Control, Vol. 3, No. 4, Juli - August 1980 ist zu Beginn eine Vorrichtung der eingangs erwähnten Art beschrieben, die bei der Lageregelung eines drallbehafteten Raumfahrzeuges zur Anwendung kommt. Dort sind ein die Abweichung von der Sollorientierung des Raumfahrzeuges um eine der beiden Querachsen messender Lagesensor und ein Paar von Stellgliedern, nämlich Reaktionsdüsen mit in der Roll-Gier-Ebene versetztem Momentenvektor, vorhanden. Letztere werden von einem Pseudorate-Modulator bzw. -Regler aktiviert, der eine Totzone enthält.

Aus der EP-A1 0 046 151 ist weiterhin eine Vorrichtung zur Lagestabilisierung von Raumfahrzeugen vorbekannt, wobei schwach gedämpfte Strukturschwingungen eine Rolle spielen, diskontinuierliche Stelleingriffe vorgenommen werden und Beobachter, Zustandsregler sowie Modulatoren mit Relais-Charakteristik zur Anwendung kommen. Es ist dort jedoch kein gespeicherter Drall vorhanden, der ja die dynamische Kopplung zwischen den beiden Querachsen bewirkt.

Die erfindungsgemäße Vorrichtung ist nachfolgend für einen dreiachsenstabilisierten Satelliten auf geosynchroner Umlaufbahn, ausgehend vom Stand der Technik, anhand von Ausführungsbeispielen näher erläutert. Sie ist jedoch gleichermaßen für spinstabilisierte Satelliten einsetzbar. Es zeigen in schematischer Weise:

| | |
|---|---|
| Figur 1a | die Achsenbezeichnungen und Sollorientierung eines dreiachsenstabilisierten Satelliten auf einer äquatorialen Umlaufbahn um die Erde, |
| Figur 1b | eine typische und für den vorliegenden Fall geeignete Anordnung von regelungstechnischen Komponenten in einem Satelliten nach Figur 1a, |
| Figur 1c | eine andere sinnvolle Anordnung von Meßgliedern in einem Satelliten der genannten Art, |
| Figur 2 | das Blockschaltbild eines Regelkreises herkömmlicher Bauart, |
| Figur 3 | das Blockschaltbild einer weiteren, verbesserten Regelvorrichtung |
| Figur 4a | das Blockschaltbild einer Vorrichtung gemäß der Erfindung, |
| Figur 4b | eine Variante des Blockschaltbildes nach Figur 4a zur besseren Realisierung, |
| Figur 4c | eine geometrische Veranschaulichung der Phasenbedingungen für einen optimalen Stelleingriff pro Nutationsperiode, |
| Figur 4d | eine geometrische Veranschaulichung der Phasenbedingungen für zwei optimale Stelleingriffe pro Nutationsperiode, |
| Figur 5a | das Blockschaltbild einer verbesserten, an variable Systemparameter anpaßbaren, erfindungsgemäßen Vorrichtung, |
| Figur 5b | das Blockschaltbild einer durch Kompensation der beobachtbaren Störeinflüsse bzgl. |

ihrer Ausrichtgenauigkeit verbesserten Vorrichtung,

Figur 5c     das Blockschaltbild eines erweiterten Ausführungsbeispieles einer Vorrichtung nach Figur 5b,

Figur 6a     das Blockschaltbild einer Vorrichtung zur erheblichen Verbesserung der Ausrichtgenauigkeit bezüglich einer zweiten Querachse bei wengistens zeitweise verfügbaren Meßwerten bezüglich dieser Querachse,

Figur 6b     eine weiter verbesserte Ausgestaltung der Vorrichtung nach Figur 6a mit Störgrößenschätzung und -kompensation,

Figur 6c, 6d     verschiedene vorteilhafte Ausführungsbeispiele einer erfindungsgemäßen Vorrichtung nach dem Prinzip der Figur 6b,

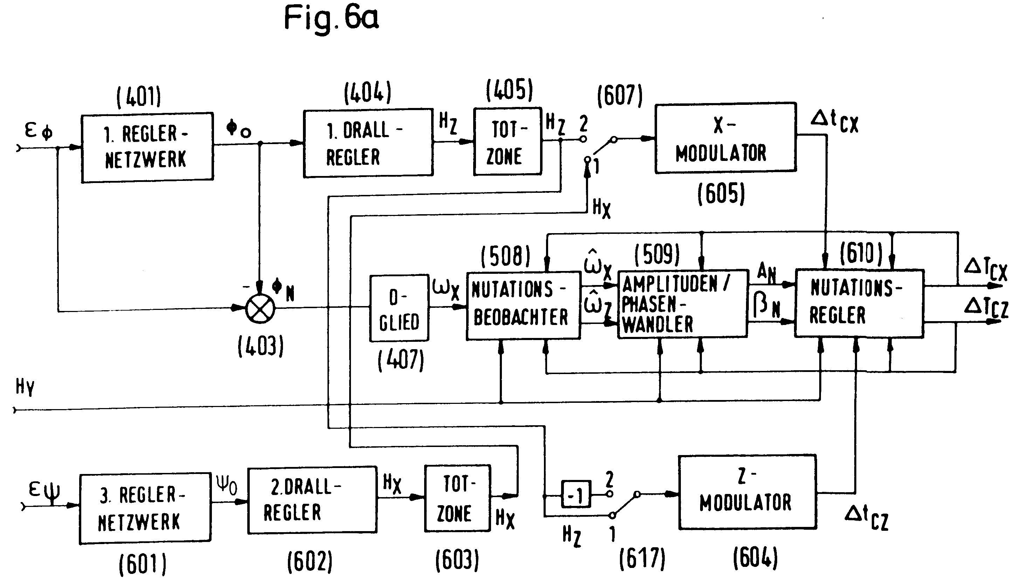

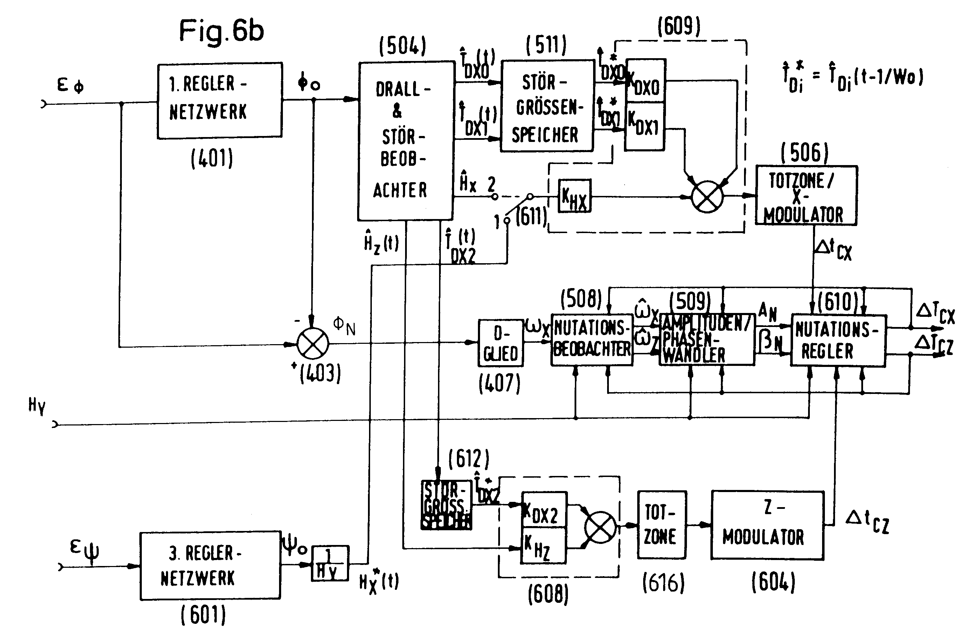

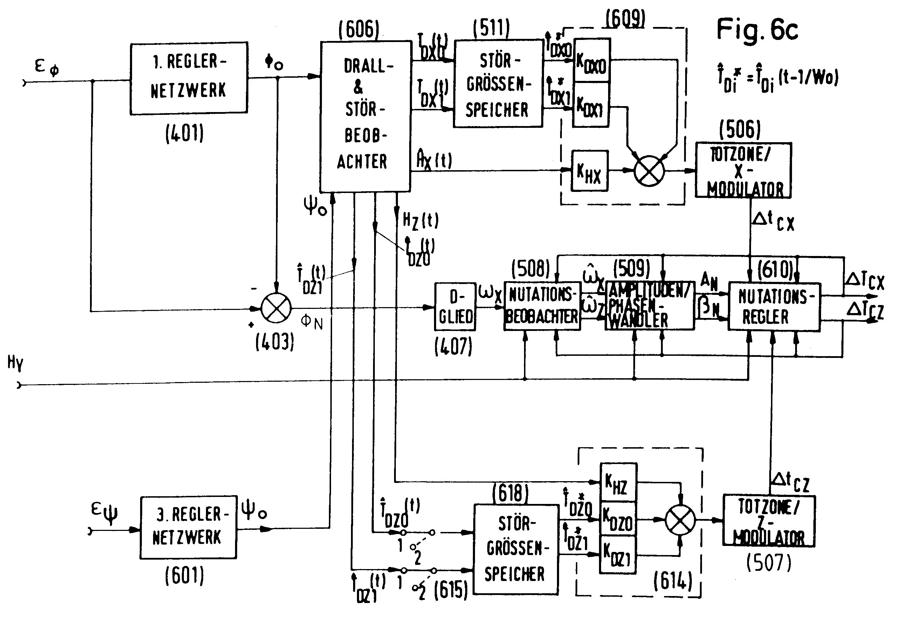

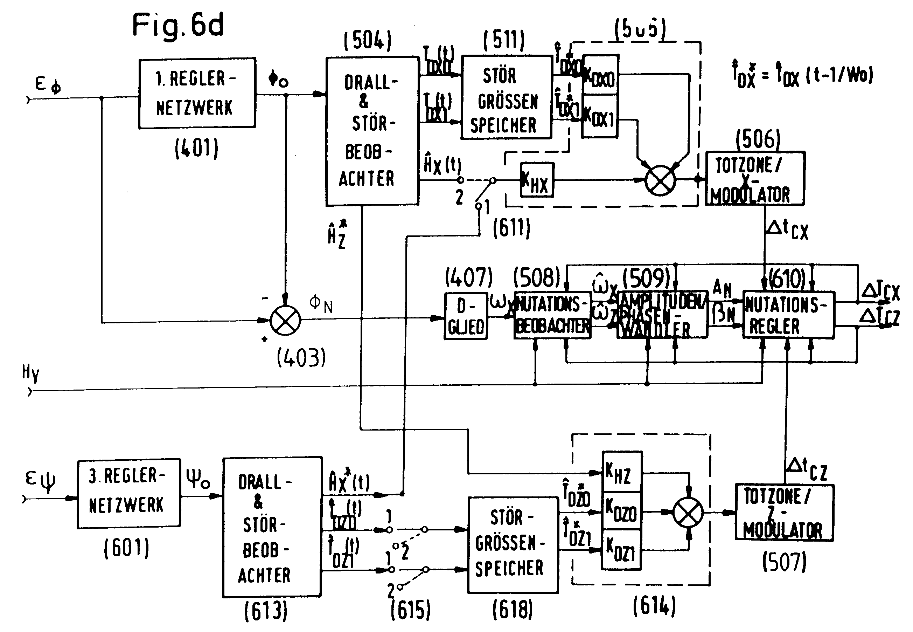

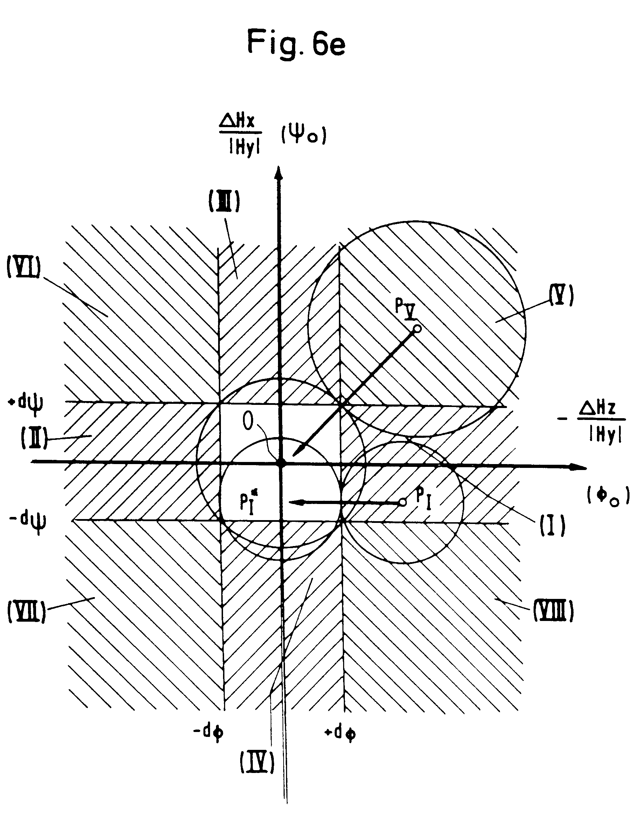

Figur 6 e     eine geometrische Veranschaulichung der erfindungsgemäßen Vorschriften zur Verküpfung der Modulatorausgangssignale und der Auswirkungen der Stelleingriffe,

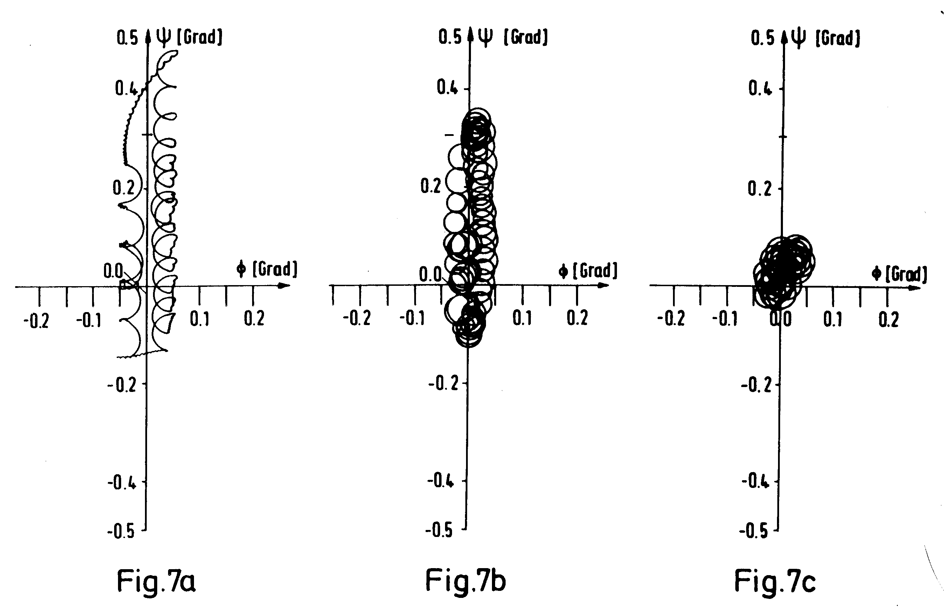

Figur 7a-7c     Simulationsergebnisse einer Darstellung der Achsenbewegungen von Raumfahrzeugen der betrachteten Art, die mit Vorrichtungen gemäß der Erfindung ausgestattet sind,

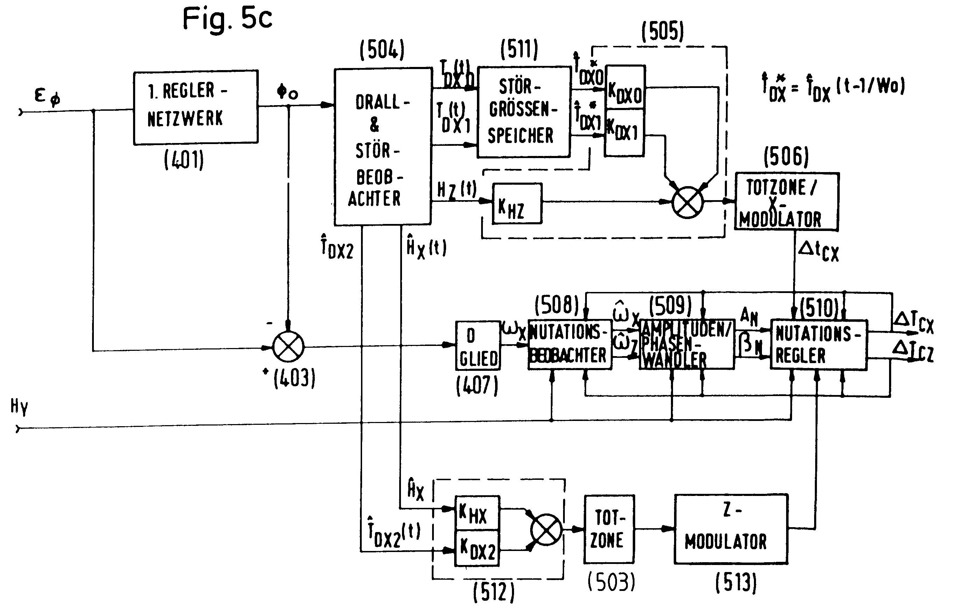

Tabelle 1     eine tabellarische Zusammenstellung der Vorschriften zur Erzeugung von Stelleingriffen bei einer Ausgestaltung der Erfindung nach Figur 5c und

Tabelle 2     eine tabellarische Zusammenstellung der erfindungsgemäßen Vorschriften zur Erzeugung von Stelleingriffen bei Vorrichtungen gemäß der Figuren 6a - 6e.

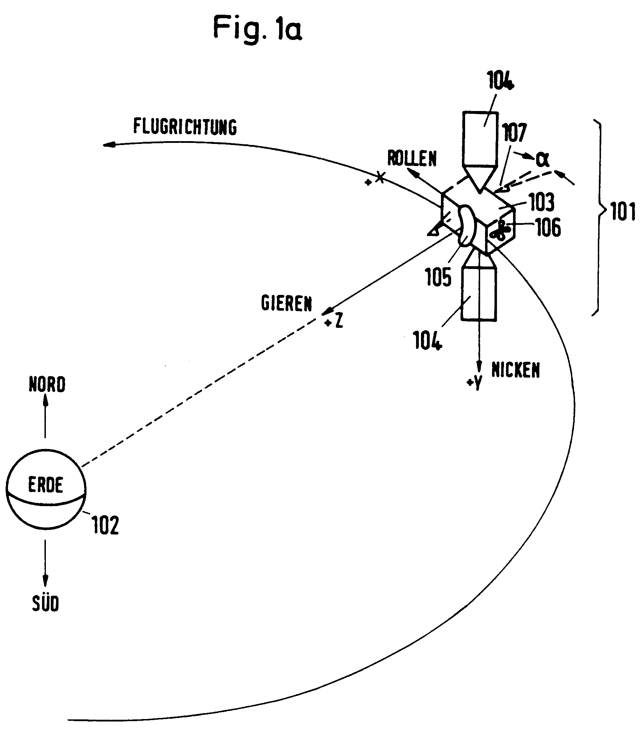

Figur 1a zeigt stark vereinfacht die typische geometrische Konfiguration eines dreiachsenstabilisierten geostationären Nachrichtensatelliten (Raumfahrzeug 101) auf seiner Umlaufbahn um die Erde 102 . Das Raumfahrzeug 101 besteht aus einem würfelförmigen Zentralkörper 103 , an dem großflächige, biegeelastische Solargeneratoren 104 drehbar gelagert sind, und der eine oder mehrere auf die Erde 102 ausgerichtete Antennen 105 trägt, deren Strahlungsrichtung mit Hilfe des Regelungssystems des Raumfahrzeuges 101 innerhalb vorgegebener, enger Grenzen beibehalten werden soll. Dem Raumfahrzeug 101 ist ein Achsensystem X (Rollachse), Y (Nickachse), Z (Gierachse) so zugeordnet, daß bei idealer Funktion des Regelungssystems die Rollachse in die augenblickliche Flugrichtung, die Gierachse auf den Erdmittelpunkt und die Nickachse in Richtung der Bahnnormalen zeigt. Zur Erzeugung von Drehmomenten um diese Achsen dienen auf verschiedenen Seiten angeordnete Reaktionsdüsen 106, 107 , die nur schematisch und soweit in dieser Darstellung sichtbar gezeigt sind. Insbesondere sind die Rollmomente erzeugenden Reaktionsdüsen 107 durch Schrägeinbau um einen Winkel $\alpha$ so angeordnet, daß sie bei Aktivierung neben Rollmomenten gleichzeitig Giermomentenkomponenten entgegengesetzten Vorzeichens zum Rollmoment erzeugen.

Im Normalbetrieb des Raumfahrzeuges 101 treten nun vor allem durch Solardruck, Restmagnetismus des Raumfahrzeuges in Wechselwirkung mit dem Erdmagnetfeld sowie Inhomogenitäten des Gravitiationsfeldes der Erde 102 Störmomente auf, die die Achsenrichtungen des Raumfahrzeuges 101 von ihrer Sollage abbringen, was durch Eingreifen des Regelungssystems verhindert werden muß.

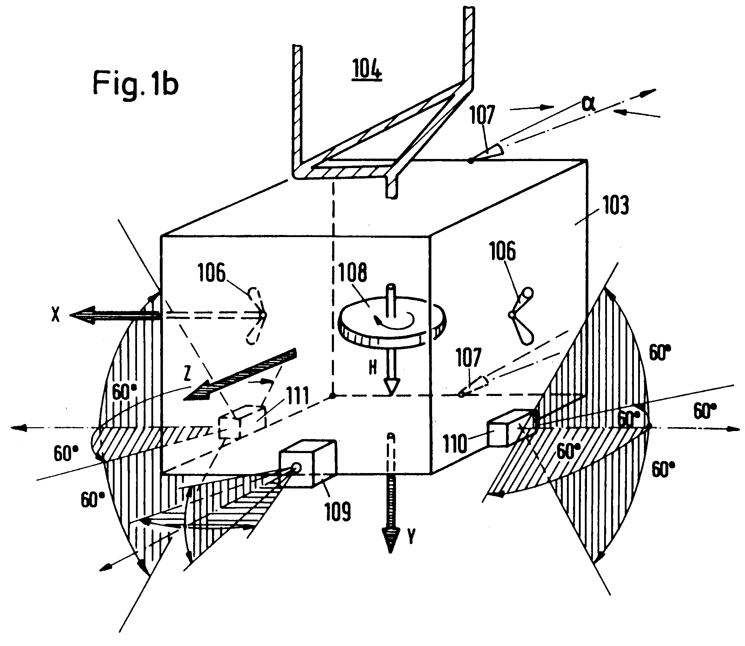

Figur 1b zeigt in ebenfalls sehr stark vereinfachter perspektivischer Darstellung eine typische Anordnung regelungstechnischer Komponenten, soweit sie im Zusammenhang mit der vorliegendne Erfindung von Bedeutung sind. Diese Komponenten sind üblicherweise am Zentralkörper 103 des Raumfahrzeuges angeordnet und bestehen neben den vorwiegend Rollmomente 107 und Giermomente erzeugenden Reaktionsdüsen 106 aus einer Drallspeichereinrichtung, z.B. einem elektromotorisch angetriebenen sogenannten Drallrad 108 , und Lagemeßsensoren 109,110, 111 , welche Abweichungen der Achsen von ihrer Sollrichtung gegenüber Referenzobjekten wie der Erde durch einen Infrarotsensor 109 bzw. der Sonne durch Sonnensensoren 110, 111 ermitteln. Soll die Z-(Gier-) Achse eines solchen Raumfahrzeuges immer zur Erde ausgerichtetbleiben, so liefert ein Infrarotsensor 109 bei geeigneter Anordnung Meßsignale für Winkelbewegungen um die X-(Roll-) Achse bzw. Y-(Nick-)Achse, von denen im vorliegenden Fall jedoch nur die Rollwinkelmessung betrachtet werden soll. Winkelbewegungen um die zur Erde zeigende Gierachse lassen sich mit Hilfe der in Richtung des ± X-Achsen zeigenden Sonnensensoren 110 auf solchen Abschnitten einer Erdumlaufbahn ermitteln, in denen sich die Sonne in deren Gesichtsfeld befindet, was bei den in Figur 1b angedeuteten Sensorgesichtsfeldern von ± 60° während 2x einem Drittel der Umlaufperiode der Fall ist. Steht die Sonne dagegen in den ± 30° breiten Sektoren zwischen den vorstehend genannten Sonnensensorgesichtsfeldern, so ist im Beispiel nach Fig. 1b keine Gierinformation verfügbar. In diesen Gebieten ist jedoch die Qualität eine Giermessung mit Sonnensensoren ohnehin erheblich eingeschränkt und im Bereich der Kollinearität von Sonne, Erde und Satellit vollkommen ausgeschlossen.

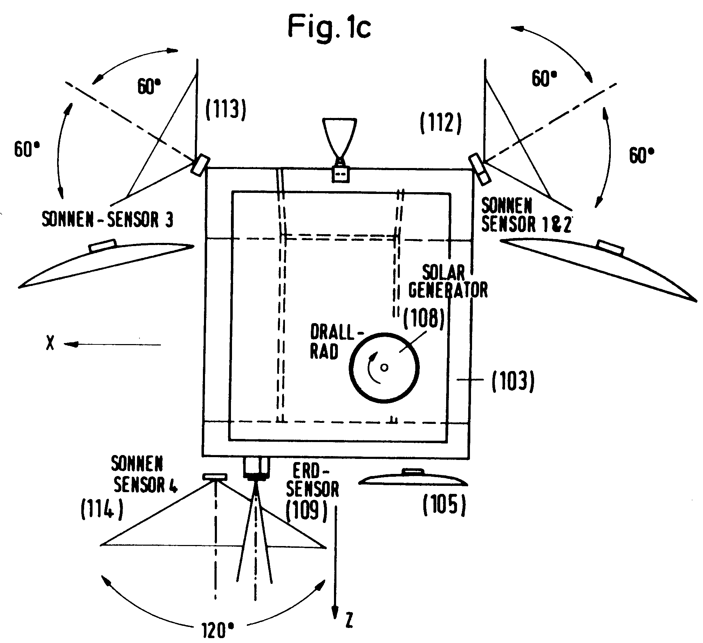

Fig. 1c zeigt eine andere mögliche Anordnung von Meßgliedern in einem dreiachsenstabilisierten Satelliten in ebenfalls stark vereinfachter, schematischer Darstellung und anderer Perspektive. In diesem Fall sind Sonnensensoren 112, 113, 114 mit Gesichtsfeldern von ± 60° um ihre Einbaurichtung so angeordnet, daß sie Meßwerte bei beliebigen Sonnenständen rund um das Fahrzeug zu liefern vermögen. Dadurch läßt sich gegenüber einer Anordnung gemäß Fig. 1b der Sektor nicht verfügbarer Gierinformation wesentlich verringern, ohne daß sich jedoch an den vorstehend diskutierten grundsätzlichen geometrischen Einschränkungen im Bereich der Kollinearität der Blickrichtungen zu Erde und Sonne etwas ändert.

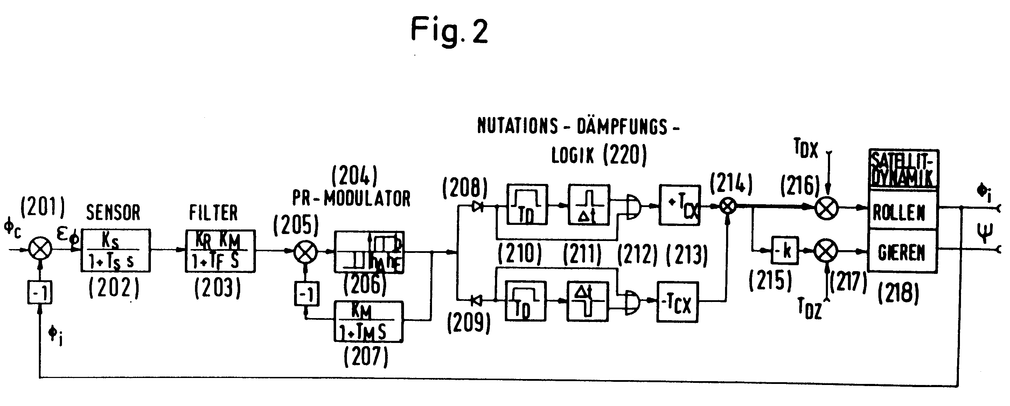

Figur 2 zeigt nun ein Prinzipschaltbild eines Regelkreises herkömmlicher Bauart zur Sollwertregelung einer zur Drallrichtung orthogonalen ersten Querachse, in diesem Fall der Rollachse, und gleichzeitigen Stabilisierung um eine zweite Querachse, hier der Gierachse, eines solchen Raumfahrzeuges mittels nur eines, die Abweichung $\epsilon_\phi$ um die erste Querachse von der Sollorientierung des Raumfahrzeuges messenden Lagesensors 202 . Die Abweichung $\epsilon_\phi$ der Winkellage ($\phi_i$) um die erste Querachse von der Sollorientierung ( $\phi_C$ ) wird von einem Lagesensor 202 ermittelt, dessen dynamische Eigenschaften vereinfacht durch ein Verzögerungsglied erster Ordnung mit einer Verzögerungszeitkonstante $T_S$ und eines Verstärkungsfaktor $K_S$ angedeutet sind. Im allgemeinen ist die Dynamik des Meßvorganges schnell genug, d.h. die sie repräsentierende Zeitkonstante $T_S$ klein genug, daß sie den Regelvorgang nicht stört und daher vernachlässigt werden kann. Als Reglernetzwerk ist im Fall der Figur 2 lediglich ein Filter erster Ordnung 203 mit einer Zeitkonstanten $T_F$ und einem Verstärkungsfaktor $K_R K_M$ vorgesehen, dessen Ausgangssignal einem Pseudo-Rate-(PR-)Modulator 204 zugeführt wird, der aus einem Summierglied 205 , einer Relaischarakteristik 206 und einem Rückführnetzwerk 207 besteht und die Aufgabe hat, die ihm zugeführten Reglerausgangssignale in eine diesen in Mittel äquivalente Folge von vorzeichenrichtigen Ansteuerimpulsen für die Stellmomente erzeugenden Reaktionsdüsen umzuwandeln. Statt Verzögerungsgliedern als Reglernetzwerke in Verbindung mit PR-Modulatoren werden in bekannten und funktionsmäßig völlig gleichwertigen Regeleinrichtungen auch Vorhaltglieder zusammen mit Pulsweiten-Pulsfrequenz-(PWPF-)Modulatoren eingesetzt. Die Modulatorausgangsimpulse werden den Reaktionsdüsen über eine Nutationsdämpfungslogik 220 zugeführt, die, wie bereits erwähnt, jeden vom Modulator abgegebenen primären Stellimpuls nach 3/8 bis 1/2 der Dauer der Nutationsperiode mit gleichem Vorzeichen wiederholt, sofern in der Zwischenzeit vom Modulator keine weiteren, gleichsinnigen Primärimpulse abgegeben worden sind. Funktionsmäßig besteht deshalb eine solche Nutationsdämpfungslogik z.B., wie in Fig.2 angedeutet, aus logischen ODER-Gattern 212 , denen in parallelen Zweigen jeder Modulatorimpuls einmal direkt und zum anderen über Zeitzähler 210 für die Verzögerungszeit $T_D$ und Einzelimpulsgeneratoren 211 zur Erzeugung der Nutationsdämpfungsimpulse vorgegebener Impulsdauer $\Delta t$ zugeführt werden, und deren Ausgangssignale die Ventile der entsprechenden Reaktionsdüsen 213 zur Erzeugung der Stellmomente $T_{CX}$ ansteuern. Die Vorzeichentrennung der vom Modulator erzeugten Ansteuerimpulse ist durch entsprechend gepolte Dioden 208, 209 schematisch dargestellt. Die Summe der so erzeugten Stellmomente ± $T_{CX}$ - in Fig. 2 durch ein Summierglied 214 gebildet - wirkt auf die über den Drall verkoppelte dynamische Bewegung des Raumfahrzeuges um seine beiden Querachsen ein, wobei durch ein im Zusammenhang mit Fig. 1b beschriebenen Schrägeinbau (Winkel $\alpha$ ) der Reaktionsdüsen Stelleingriffe $T_{CX}$ nicht nur auf die erste Querachse, die Rollachse, einwirken, sondern gleichzeitig auch Momentenkomponenten entgegengesetzten Vorzeichens (-k, |k| ≪ 1) um eine zweite Querachse, die Gierachse, erzeugt werden, was in bekannter Weise unter Ausnutzung der Drallkoppelung eine Stabilisierung der zweiten Querachse bewirkt. Als Einstellregel für die Reglerparameter einer solchen gekoppelten Roll-Gier-Regelung nach dem bekannten sogenannten WHECON-Prinzip gilt:

$$T_F < \frac{tg\,\alpha}{w_O} \qquad\qquad (1\ a)$$

$$(3/8)T_N \leqq T_D \leqq (1/2)T_N \qquad (1\ b)$$

$$1/T_N = w_N = \frac{H_y}{\sqrt{I_x I_z}} \qquad\qquad (1\ c)$$

wobei:

$\alpha$      - den Schrägeinbauwinkel der vorwiegend Rollmomente erzeugenden Stellglieder,

$w_O$      - die Kreisfrequenz der Umlaufperiode des Fahrzeuges, z.B. 7,27 • $10^{-5}$ (1/sec) bei geostationären Satelliten

$T_F$      - die Reglerzeitkonstante (Fig. 2)

$T_D$        - die Verzögerungszeit des Nutationsdämpfungsimpulses gegenüber dem Primärimpuls

$T_N = 1/w_N$   - N die Nutationsperiode,

$H_Y$         - den gespeicherten Drall sowie

$I_X, I_Z$      - die Querachsenträgheitsmomente des Raumfahrzeuges bedeuten.

Es wurde bereits an anderer Stelle ausgeführt, daß ein Regelkreis der vorstehend beschriebenen, bekannten Art zwar in der Lage ist, die Bahnbewegung und bei nominalen Werten der Systemparameter Nutationsschwingungen zu dämpfen, aber großen Stellenergieaufwand für die Nutationsdämpfung erfordert, bei Parameterabweichungen von ihren Nominalwerten in seinem Nutationsdämpfungsverhalten weitgehend unwirksam wird und nicht geeignet ist, gleichzeitig auch andere Schwingungsvorgange im System, z.B. herrührend von Strukturelastizitäten und Treibstoffbewegungen, zu beherrschen.

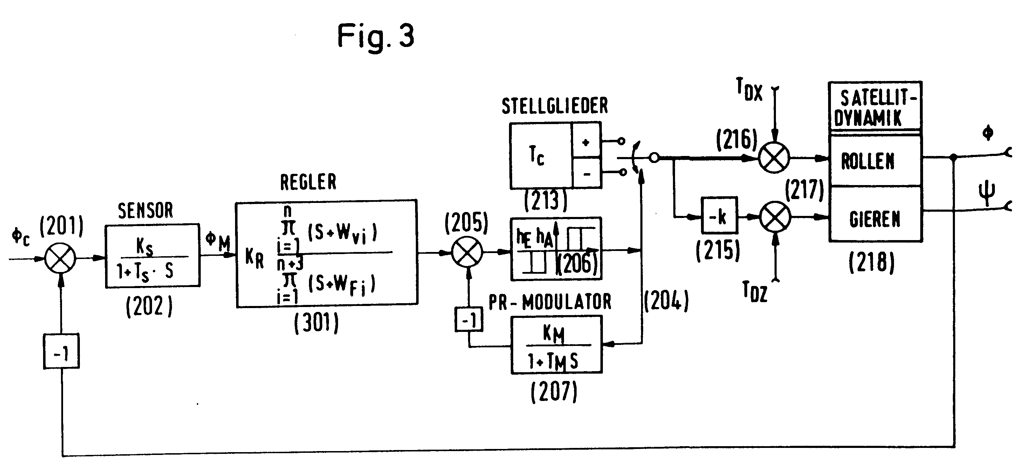

Figur 3 zeigt eine verbesserte Vorrichtung zur Lageregelung, die durch eine spezielle Struktur der Regler-Übertragungsfunktion die Notwendigkeit für den Einbau einer zusätzlichen Nutationsdämpungseinrichtung erübrigt, sich durch große Unempfindlichkeit gegenüber systembedingten Parameterschwankungen und minimalen Stellenergiebedarf auszeichnet und überdies die Stabilität zusätzlicher, schwach gedämpfter Schwingungsvorgänge sicherstellt. Dies wird durch einen Regler erreicht, dessen Übertragungsfunktion einen um drei Ordnungen höheren Grad des Nennerpolynoms als sein Zählerpolynom aufweist. Im einfachsten Fall ist demnach z.B. bei Verwendung eines PR-Modulators mindestens ein Regler folgender Form vorzusehen:

$$\frac{K_R}{(s + w_{F1})(s + w_{F2})(s + w_{F3})} \qquad (2\ a)$$

Bei Verwendung eines PWPF-Modulators und Berücksichtigung der bereits erwähnten Äquivalenzbedingungen mindestens ein Regler folgender Struktur seiner Übertragungsfunktion:

$$\frac{K_R\ (s + w_{v1})}{(s + w_{F1})(s + w_{F2})(s + w_{F3})(s + w_{F4})} \qquad (2\ b)$$

In allgemeingültiger, kürzerer Produktdarstellung muß die Regler-Übertragungsfunktion die Form haben:

$$K_R \cdot \frac{\prod\limits_{i=1}^{n}(s + w_{vi})}{\prod\limits_{i=1}^{n+3}(s + w_{Fi})} \qquad (2\ c)$$

wobei

$K_R$     - die Reglerverstärkung

$w_{Fi}$    - die Kreisfrequenzen der (n + 3) Reglerpole (i = 1 ... n + 3)

$w_{Vi}$    - die Kreisfrequenzen der n Reglernullstellen (i = 1 ... n)

       und

$$\prod\limits_{i=1}^{n}(\cdots)$$

- das Produkt von n Faktoren der in Klammern angegebenen Form bedeuten.

In der Praxis liefern die Minimalstrukturen der Regler-Übertragungsfunktionen nach den Gleichungen (2a) und (2b) häufig noch zu geringe Dämpfung der Nutationsschwingung. Es empfiehlt sich daher, Zähler- und Nennerterm gleich um mindestens eine Ordnung zu erhöhen.

Eine Erhöhung der Ordnung der Zählerpolynome bringt bekanntermaßen auch eine Verschlechterung der Signal-Rausch-Verhältnisse im Regelkreis mit sich. Es sind jedoch bereits nichtlineare, einfach und doppelt adaptive Frequenzbereichsfilter entwickelt worden, die sich durch besonders geringe Phasenverluste im Durchlaßbereich und hohe Abfallsteilheit zum Sperrbereich auszeichnen und sich in Verbindung mit den hier vorliegenden Regeleinrichtungen in sehr vorteilhafter Weise kombinieren lassen, sofern dies erforderlich werden sollte.

Je nach Anwendungsfall können die Pol- und Nullstellenfrequenzen ($w_{Fi}$, $w_{Vi}$) reell sein und entsprechen dann den Kehrwerten der Reglerzeitkonstanten, oder auch paarweise konjungiert komplex, wobei sich solche Paare dann zu Übertragungsgliedern zweiter Ordnung mit Dämpfungskoeffizienten kleiner als 1 zusammenfassen lassen. Diese Reglerstruktur enthält auch den Sonderfall eines integralen Reglers, wenn eine der Polfrequenzen gleich Null gewählt wird. Da integrale Regler im allgemeine besondere Maßnahmen bei der Einstellung ihrer Anfangsbedingungen erfordern, ist es für die Realisierung solcher Netzwerke dann zweckmäßig, den Integralanteil als. Parallelschaltung zu realisieren. Die Umformung der Regler-Übertragungsfunktionen (Gleichungen 2 a-2 c) durch Partialbruchzerlegung zur Abspaltung des Integralanteils ist jedem Fachmann geläufig. Wenn die dynamischen Verhältnisse und Stabilitätsbedingungen nach allgemein bekannten Regeln oder projektspezifischen Anforderungen einen Vorhalt höherer als erster Ordnung (Gleichung 2 b), d.h. zusätzliche Nullstellen der Regler-Übertragungsfunktion, verlangen, so muß auch der Nenner um entsprechend viele Terme erweitert werden.

In manchen Fällen, insbesondere bei spinstabilisierten Satelliten, kann es vorkommen, daß infolge einer relativ hohen Nutationsfrequenz die dominierende Sensorzeitkonstante nicht mehr vernachlässigbar ist, sondern im dynamischen Bereich der Reglerbandbreite liegt, was dann praktisch einem zusätzlichen Pol der Regler-Übertragungsfunktion gleichkommt. Es ist offensichtlich, daß der Lagesensor dann als Bestandteil der Regler-Übertragungsfunktion anzusehen und mit zu berücksichtigen ist. Dieselben Überlegungen gelten für die Einbeziehung der Modulatorverzögerung $T_M$ bei Einsatz von PWPF-Modulatoren. Für die Wahl der Parameter des Reglers sind die allgemein gültigen Einstellregeln für die Amplituden- und Phasenbilanz im geschlossenen Regelkreis einzuhalten, d.h. es muß für die Übertragungsfunktion $Y_O(jw)$ des gesamten offenen Kreises einschließlich Dynamik der Regelstrecke

$$Y_o(jw) = \frac{Z(jw)}{N(jw)} \qquad (2\ d)$$

bei der sogenannten Durchtrittsfrequenz $w_{CO}$, die durch die Bedingung definiert ist:

$$|Y_O(jw_{CO})| = 1 \qquad (2\ e)$$

die Phasenbeziehung gelten

$$\arg Z(jw_{CO}) - \alpha > \arg N(jw_{CO}) \qquad (2\ f)$$

wobei argZ, argN den Phasenwinkel des Zählerm(Z)- bzw. Nennerterms (N) und $\alpha$ den Schrägeinbauwinkel des Stellgliedes bedeuten.

Für die praktisch ungedämpfte Nutationsschwingung läßt sich daraus bei reellen Pol- und Nullstellenfrequenzen mit brauchbarer Näherung für die Regler-Übertragungsfunktion die vereinfachte Bedingung ableiten:

$$\arctg\left[w_N \cdot \sum_{i=1}^{n} \frac{1}{w_{Vi}}\right] > \arctg\left[w_N \sum_{i=1}^{n} \frac{1}{w_{Fi}}\right] + \alpha \qquad (2\ g)$$

da wegen der Steilheit des Amplituden-Phasen-Verlaufs Durchtrittsfrequenz $w_{CO}$ und Nutationsfrequenz $w_N$ praktisch zusammenfallen. In jedem Fall lassen sich mit dieser Reglerstruktur die gestellten Forderungen nach Folgeregelung und Stabilisierung von elastischen, drallbehafteten Körpern in energieoptimaler Weise erfüllen, indem je nach Lage der Eigenfrequenzen des zu regelnden Körpers die entsprechenden ungedämpften oder sehr schwach gedämpften Schwingungsvorgange in einen der drei bekannten Stabilitätsbereiche verschoben werden, in denen bei Kreisverstärkung

$$| Y_O (jw)| \geq 1 \qquad (2 \text{ h})$$

Stabilität durch Phasenvorhalt

$$-180° < \arg Y_O (jw) < +180° \qquad (2 \text{ i})$$

oder durch Phasenverzögerung

$$-540° < \arg Y_O (jw) < -180° \qquad (2 \text{ k})$$

sichergestellt wird oder durch Betragsabsenkung die Bedingung

$$|Y_O (jw)| < 1 \qquad (2 \text{ l})$$

Vorrichtungen der vorstehend im Zusammenhang mit Figur 3 beschriebenen Art stellen nicht nur eine Vereinfachung in der Realisierung durch Wegfall bislang erforderlicher Nutationsdämpfungseinrichtungen dar, sondern auch eine erhebliche Verbesserung insbesondere hinsichtlich Stellenergieverbrauch und Beherrschung aller erwähnten Schwingungsprobleme. Sie sind jedoch in der praktischen Anwendung immer noch beträchtlichen Einschränkungen unterworfen, wenn es gilt, besonders hohe Ansprüche an die Ausrichtgenauigkeit um die besagten, quer zur Drallachse liegenden Achsen zu erfüllen, insbesondere dann, wenn die Stelleingriffe in diskreter Form unter Vorgabe bestimmter Minimalimpulsinkremente erfolgen, wie in den betrachteten Beispielen angenommen.

Es wurde bereits erwähnt, daß bei Verwendung nur eines, die Abweichung zum eine erste Querachse von der Sollorientierung messenden Lagesensors die Ausrichtgenauigkeit um eine zweite, unter Ausnutzung der Drallkopplung gleichzeitig stabilisierte Querachse vom Nachführfehler um die erste und bei gegebenem Drall vor allem von der Größe der Störmomente um die zweite Querachse abhängt. Bei Satelliten dieser Art ist die typische Ausrichtgenauigkeit um die besagte zweite Querachse 4 bis 10 mal schlechter als um die erste, direkt geregelte Querachse. Der Ausrichtfehler um diese erste Querachse wird durch die dort vorgesehene effektive Totzone bestimmt und muß zur Vermeidung unzulässiger Grenzzyklusschwingungen immer etwas größer gewählt werden als der Durchmesser des Nutationskegels, der unter ungünstigsten Verhältnissen durch einen diskreten Stelleingriff, z.B. einen Minimalimpuls der Reaktionsdüsen, auftreten kann. Dieser Fehler wird über die Achsenkopplung mit einem gewissen Verstärkungsfaktor auch als unvermeidbare Ungenauigkeit in die zweite Querachse transformiert.

Die vorliegende Erfindung bewirkt nun eine Verbesserung der Ausrichtgenauigkeit um beide Querachsen unter Beibehaltung der bereits beschriebenen Vorteile.

Dabei werden die vorteilhaften, bereits beschriebenen speziellen Reglerstrukturen schließlich mit einbezogen. Im Rahmen weiterer Ausgestaltungen wird unter bestmöglicher Ausnutzung ohnehin an Bord solcher Raumfahrzeuge verfügbarer Informationen, Meßwerte und Eingriffsmöglichkeiten, d.h. ohne Mehraufwand an Regelungskomponenten, die Ausrichtgenauigkeit um beide Querachsen schrittweise bis zur Erfüllung höchster Ansprüche verbessert.

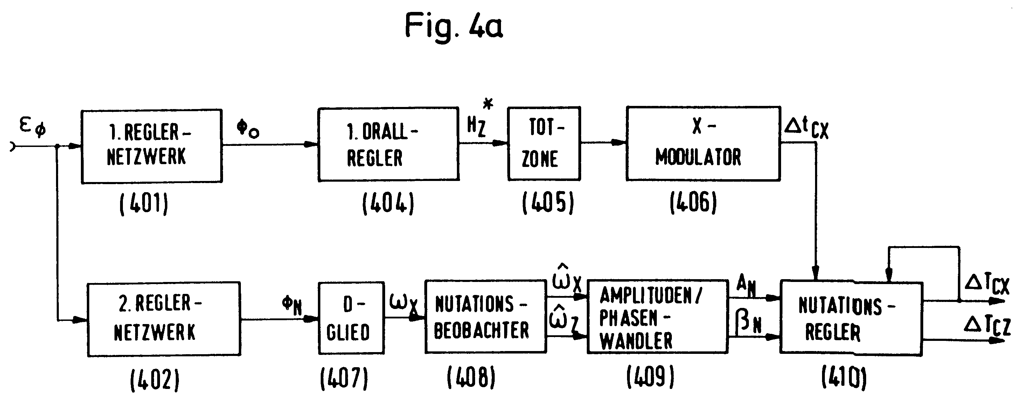

Figur 4a zeigt das prinzipielle Blockschaltbild einer Vorrichtung für Lageregelung gemäß der Erfindung.

Zur Abtrennung des Bahnbewegungsanteils $\phi_O$ im ersten Reglernetzwerk 401 dienen Tiefpaßfilter erster bis vierter Ordnung. Die für Nutation und höherfrequente Bewegungsvorgänge repräsentativen Signalanteile $\phi_N$ werden aus dem Meßsignal über das zweite Reglernetzwerk 402 mit Hochpaßcharakter gewonnen. Es ist offensichtlich, daß zur beabsichtigten Trennung der Signalanteile die Eckfrequenzen beider Netzwerke zwischen der Bahn-Umlauffrequenz des Raumfahrzeuges und seiner Nutationsfrequenz liegen müssen und insbesondere gleich gewählt werden können.

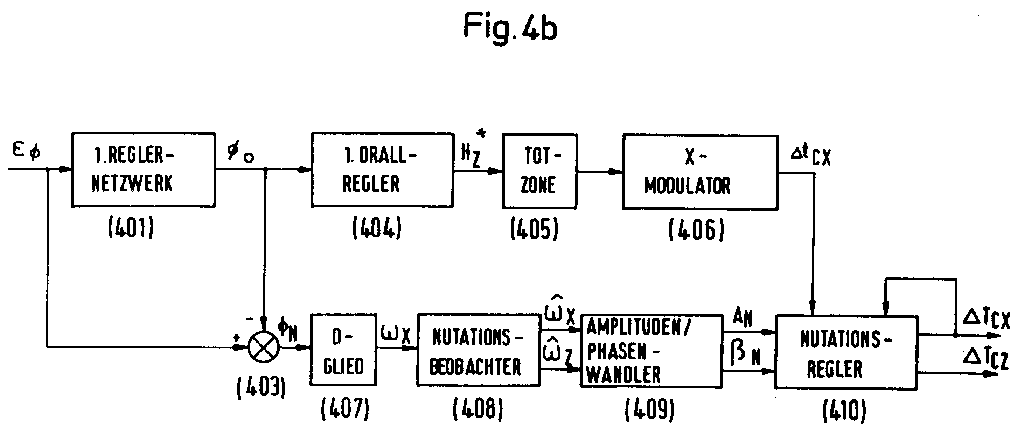

Wie in Figur 4b gezeigt, genügt es daher in der Praxis meistens, lediglich das erste Reglernetzwerk 401 zu realisieren und den darüber gebildeten Signalanteil für die Bahnbewegung des Fahrzeuges in einem Summierglied 403 vom Meßsignal für $\epsilon_\phi$ zur Bildung des die Nutationsbewegung darstellendes Signalanteils $\phi_N$ zu subtrahieren. Bei getrennter Realisierung der Reglernetzwerke 401, 402 kann das zweite Reglernetzwerk 402 gegebenenfalls zur Unterdrückung eventuell unerwünschter, der Nutationsschwingung überlagerter, höherfrequenter Signalanteile als Bandpass ausgebildet werden. Das im ersten Reglernetzwerk 401 gewonnene Signal $\phi_O$ für die Bahnbewegungskomponente um die erste Querachse, die Rollachse des betrachteten Raumfahrzeuges, ist angenähert proportional zur Drehimpuls- oder Drallkomponente $\dot{H}_Z$ in Richtung der zweiten Querachse, hier der Gierachse, mit dem im Fahrzeug gespeicherten Drall $H_Y$ als Proportionalitätsfaktor.

Der Drallregler 404 in den Figuren 4a, 4b besteht im einfachsten Fall aus einem dimensionsbehafteten Verstärkungsfaktor. Zur Verbesserung der Stabilität und Bewegungsdynamik können jedoch auch zusätzlich Vorhaltglieder, vorzugsweise erster oder zweiter Ordnung, bzw. vollständige oder auch reduzierte, z.B. der Schätzung nur einer Drallkomponente dienende, nach bekannten Regeln der Beobachtertheorie gebildete Schatzalgorithmen für eine ($H_X$) oder beide Querachsenkomponenten des Fahrzeugdralls ($H_Z$, $H_X$) bzw. solchen Beobachtern äquivalente elektrische Netzwerke eingesetzt werden. Eine besonders vorteilhafte Kombination von ersten Reglernetzwerk 401 und Drallregler 404 ergibt sich dann, wenn für die Gesamtübertragungsfunktion die Merkmale der Reglerstruktur nach den bereits beschriebenen Vorschriften erfüllt werden, d.h. ein Tiefpaß dritter Ordnung als erstes Reglernetzwerk 401 in Verbindung mit Konstanten oder PD-Gliedern als Drallregler 404 verwendet wird. Von Vorteil sind weiterhin Integralanteile in der Übertragungsfunktion des Drallreglers 404 . Diese bilden dann ein Maß für Schätzwerte konstanter Störmomentenkomponenten, deren Kompensation zur Genauigkeitserhöhung beiträgt. Auf Störgrößenschätzung und Kompensation wird später noch ausführlicher eingegangen.

Die Gleichungen für einen vollständigen Beobachter der Drallkomponenten lauten:

$$\begin{bmatrix} \hat{\dot{H}}_X \\ \hat{\dot{H}}_Z \end{bmatrix} = \begin{bmatrix} 0 & w_0 \\ -w_0 & 0 \end{bmatrix} \cdot \begin{bmatrix} \hat{H}_X \\ \hat{H}_Z \end{bmatrix} + \begin{bmatrix} k_{11} \\ k_{21} \end{bmatrix} (H_Y \phi_0 - \hat{H}_Z) + \begin{bmatrix} T_{CX} \\ T_{CZ} \end{bmatrix} + \begin{bmatrix} T_{DX} \\ T_{DZ} \end{bmatrix} \qquad (3a)$$

wobei

| | |
|---|---|
| $w_O$ | - die Frequenz der Bahnbewegung, |
| $\hat{H}_X, \hat{H}_Z$ | - Schätzwerte für die Drallkomponenten ($H_X$, $H_Z$) in Richtung der Querachsen, transformiert in ein mit dem Raumfahrzeugschwerpunkt mitgeführt gedachtes Bahnkoordinatensystem, |
| $k_{11}$, $k_{24}$ | - Verstärkungsfaktoren |
| $H_Y$ | - den gespeicherter Drall |
| $\phi_O$ | - den für die Komponente der Bahnbewegung um die erste Querachse (Rollachse) repräsentativen Meßsignalanteil |
| $T_{CZ}, T_{CX}$ | -Stellmomente und |
| $T_{DZ}, T_{DX}$ | -Störmomente bedeuten |

Für den zunächst betrachteten stationären, d.h. eingeschwungenen Zustand des Regelkreises können die Stell- und Störmomententerme ignoriert werden, da sie sich dann im Mittel gerade aufheben. Auf ihren Einfluß soll später noch eingegangen werden.

Mit der Ausführung einer solchen Vorschrift lassen sich, wie Gleichung 3 a zeigt, Schätzwerte für die Drallkomponenten sowohl in Richtung der zweiten ($\hat{H}_Z$) als auch der ersten Querachse ($\hat{H}_X$) ermitteln. Da die Drallkomponente in Richtung der zweiten Querachse ($H_Z$) mit guter Näherung aus dem Ausgangssignai des ersten Reglernetzwerks über den erwähnten Proportionalitätsfaktor $H_Y$ gewinnbar ist, kann ein Vereinfachter Beobachter insbesondere dazu dienen , ein Maß für die erste Querachsenkomponente $H_X$ zu gewinnen. Ein solcher vereinfachter Beobachter ist durch eine einfache Übertragungsfunktion mit einem Zählerterm erster und einem Nennerterm zweiter Ordnung darstellbar. Auf dessen Verwendung soll in einer später noch zu beschreibenden, weiteren Ausgestaltung der Erfindung Bezug genommen werden. Im Augenblick ist für die weitere Verwendung lediglich ein Schätzwert für die Drallkomponente ($\hat{H}_Z$) in Richtung der zweiten Querachse von Belang.

Eine Realisierung der Beobachtergleichung 3 a als Rechenalgorithmus in einer programmierbaren, digitalen Bordelektronik bereitet dem Fachmann keinerlei Schwierigkeiten. Eine Umsetzung in äquivalente, analoge Netzwerke ist in der Praxis wegen der extrem langsamen Bewegungen und der unvermeidlichen Verstärkerdrift problematisch.

Die Totzone 405 im Drallregelzweig der erfindungsgemäßen Vorrichtung wird mit dem Ausgangssignal des Drallreglers 404 beaufschlagt und liefert erst dann ein Ausgangssignal, wenn vorgegebene Schwellwerte (z.B. ± d) überschritten werden. Als Vorteil macht sich hier bemerkbar, daß die Ansprechschwellen des Totzonegliedes infolge des Fehlens überlagerter Nutationsschwingungen wesentlich kleiner als in herkömmlichen Systemen gewählt werden können, was die Ausrichtgenauigkeit zum die erste Querachse wesentlich verbessert und folglich auch den entsprechenden, in die zweite Querachse transformierten Fehleranteil reduziert. Die Auslösung eines Stelleingriffs wird im vorliegenden Fall nicht von der momentan vom Sensor gemessenen Ablage abhängig gemacht, sondern davon, ob die Abweichung des Drallvektors von seiner Sollrichtung ein vorgegebenes Maß überschreitet.

Der Modulator 406 , der bei Verwendung diskontinuierlich arbeitender Stellglieder, wie Reaktionsdüsen, die Aufgabe hat, das Ablagesignal in eine äquivalente Folge von Steuerimpulsen umzusetzen, kann in der bereits beschriebenen Weise als PWPF- oder PR-Modulator (Figur 2) ausgebildet sein. Da es im vorliegenden Fall, wie später noch ausgeführt wird, auf die Phasenlage der vom Modulator erzeugten Impulse nicht so genau ankommt, können auch einfacher realisierbare Schaltungen wie Pulsweiten-Modulatoren eingesetzt werden.

Da solche Modulatoren (z.B. 204 in Figur 2) bereits eine Ansprechschwelle ($h_E$ in Figur 2) enthalten, ist es nicht nur zweckmäßig, sondern zur Einhaltung der Genauigkeitsanforderungen geradezu notwendig, die Schwellwerte des Totzonegliedes 405 und des Modulators 406 zu verknüpfen. Eine einfache, für die vorliegende Erfindung sehr zweckmäßige Ausführungsform eines solchen Modulators sieht z.B. vor, daß beim Überschreiten einer ersten Ansprechschwelle ($\pm d_1$) die Wiederholungsfrequenz vorgegebener, physikalisch realisierbarer Minimalimpulse proportional zum Eingangssignal erhöht wird und beim Überschreiten einer zweiten Ansprechschwelle ($\pm d_2$, $|d_2| > |d_1|$ ) bei konstant gehaltener zulässiger Höchstfrequenz der Wiederholungsrate die Pulsdauer proportional zum Eingangssignal vergrößert wird, und zwar jeweils so, daß im Mittel die erzeugten Impuls-Zeit-Flächen linear mit dem Eingangssignal zunehmen.

Der aus dem Meßsignal über ein zweites Reglernetzwerk 402 (Figur 4a) oder über ein erstes Reglernetzwerk 401 Verbindung mit einem Summierglied 403 gebildete, für die Nutationsbewegung repräsentative Signalanteil $\phi_N$ wird in der erfindungsgemäßen Anordnung einem Differenzierglied 407 etwa mit der Übertragungsfunktion

$$\frac{T_H \cdot s}{1 + T_H \cdot s} \qquad\qquad (3\,b)$$

zugeführt, wodurch aus der Winkelbewegung ( $\phi_N$ ) ein Maß für die Winkelgeschwindigkeit $w_X$ um die gemessene Querachse (Rollachse) gebildet wird. Der nachgeschaltete Nutationsbeobachter 408 dient dazu, aus der auf Messung und Differentiation beruhenden Komponente der Nutationsbewegung um die erste Querachse ($w_X$) über ein Modell des physikalischen Vorgangs Schätzwerte für die vollständige Nutationsdynamik zu bilden, d.h. die nicht direkt gemessene Schwingungskomponente ($w_Z$) um die zweite Querachse zu ergänzen. Statt eines Nutationsbeobachters zweiter Ordnung können wiederum in bekannter Weise vereinfachte Beobachter (für $w_Z$) oder äquivalente Netzwerke eingesetzt werden. Bei Ausgestaltung des ersten und zweiten Reglernetzwerkes nach Figur 4b können insbesondere Zusatzfilter zur Beseitigung unerwünschter höherfrequenter Signalanteile mit dem Beobachter 408 und/oder dem Differenzierglied 407 zu einem entsprechenden Gesamtübertragungsverhalten kombiniert werden. Die Gleichungen für den besagten vollständigen Nutationsbeobachter lauten:

$$\begin{bmatrix} \hat{w}_x \\ \hat{w}_z \end{bmatrix} = \begin{bmatrix} 0 & -\frac{1}{I_x}\left[(I_Y - I_Z)w_0 - H_Y\right] \\ -\frac{1}{I_z}\left[(I_X - I_Y)w_0 + H_Y\right] & 0 \end{bmatrix} \cdot \begin{bmatrix} \hat{w}_x \\ \hat{w}_z \end{bmatrix} +$$

$$+ \begin{bmatrix} k_1 \\ k_2 \end{bmatrix} (w_x - \hat{w}_x) + \begin{bmatrix} \frac{1}{I_x} T_{cx} \\ \frac{1}{I_z} T_{cz} \end{bmatrix} \qquad (3c)$$

wobei

$\widehat{w}_X, \widehat{w}_Z$      - Schätzwerte der Winkelgeschwindigkeiten $w_X$, $w_Z$ um die X- bzw. Z-Achse,

$I_X$, $I_Z$      - Trägheitsmomente des Raumfahrzeuge um die entsprechenden Achsen,

$T_{CX}, T_{CX}$      - Stellmomente um die jeweiligen Achsen (X,Z),

$k_1, k_2$      - Verstärkungsfaktoren,

$H_Y$      - den gespeicherten Drall,

$w_O$      - die Bahnumlauffrequenz

und Punkte über den jeweiligen Variablen Ableitungen nach der Zeit bedeuten. Die Realisierung solcher Beobachter durch entsprechende Algorithmen in einem digitalen Bordrechner bzw. ihre Umwandlung in äquivalente Übertragungsfunktionen und Analogschaltungen ist jedem Fachmann geläufig. Die mit dem sehr kleinen numerischen Wert der Bahnumlauffrequenz multiplizierten Terme in den Gleichungen (3c) sind an sich vernachlässigbar und nur der Vollständigkeit halber angegeben. Die frei wählbaren Verstärkungskoeffizienten $k_1$, $k_2$ sind so zu wählen, daß der Beobachter in kürzerer, z.B. der halben Dauer einer Nutationsperiode einschwingt.

An dieser Stelle wird ausdrücklich darauf hingewiesen, daß sich die Bildung der Winkelgeschwindigkeitskomponenten $w_X, w_Z$ für die Nutationsbewegung aus einem Meßsignal für die Abweichung $\epsilon_\phi$ um eine erste Querachse von der Sollorientierung über erste und zweite Reglernetzwerke 401, 402 nach Figur 4a oder ersatzweise durch eine entsprechende Anordnung noch Figur 4b über ein erstes Reglernetzwerk 401 und Differenzbildung in einem Summierglied 403 mit nachgeschaltetem Differenzierglied 407 dann erübrigt, wenn über zusätzliche Meßwertgeber wie z.B. Geschwindigkeitskreisel - eventuell in Verbindung mit Hochpaßfiltern zur Beseitigung des Bahnbewegungsanteils $w_O$ - ein Meßsignal für die besagte Bewegungsgröße ($w_X$) der Nutationsschwingung direkt verfügbar ist. Liegen darüber hinaus Meßsignale für die Winkelgeschwindigkeiten $w_X$, $w_Z$ um beide Querachsen vor, dann werden diese Meßwerte zweckmäßigerweise direkt verwendet, womit dann der Nutationsbeobachter ebenfalls ersetzt wird. In der Vergangenheit hat sich die Verwendung solcher Kreiselgeräte für Langzeitmissionen vorwiegend aus Zuverlässigkeitsgründen für die Normalbetriebsregelung auch dann verboten, wenn solche Geräte zur Durchführung anderer operationeller Betriebsphasen, beispielsweise Akquisitionsmanöver, ohnehin an Bord von Raumfahrzeugen verfügbar waren. Der technologische Fortschritt auf dem Gebiet der Laser- und Glasfaserkreisel, die im Gegensatz zu den entsprechenden klassischen, elektromechanischen Komponenten kaum mehr oder überhaupt keine mechanisch bewegten Teile mehr enthalten, lassen jedoch für die Zukunft eine erhebliche Steigerung der Zuverlässigkeit und auch Verbilligung der Kreiselgeräte erwarten, was ihren Einsatz in den erfindungsgemäßen Vorrichtungen nicht nur für kurze, sondern auch über lange Zeiträume ermöglicht. Die vorliegende Erfindung ist damit nicht auf die Verwendung nur eines einzigen Meßgliedes pro Achse in Verbindung mit den beschriebenen elektrischen Schaltungen, Netzwerken oder Algorithmen zur Bildung der erforderlichen Signalanteile beschränkt, sondern kann im allgemeinen sogar in einfacherer Weise unter Zuhilfenahme geeigneter zusätzlicher Meßwerte realisiert werden. Dies gilt sinngemäß auch dann, wenn in der weiteren Erfindungsbeschreibung auf solche Möglichkeiten nicht jedesmal eigens Bezug genommen wird.

In einem Amplituden-Phasen-Wandler 409 werden gemäß Figuren 4a und 4b aus den geschätzten Komponenten $\widehat{w}_X$, $\widehat{w}_Z$ Größen $A_N$, $\beta_N$ gebildet, die der Nutationsamplitude ($A_N$) bzw. dem Phasenwinkel der Winkelgeschwindigkeit der Nutationsschwingung ($\beta_N$) entsprechen. Dies kann in einfacher Weise durch eine kartesisch-polare Koordinatentransformation gemäß der Vorschrift geschehen:

$$A_N = \sqrt{\widehat{w}_X{}^2 + \widehat{w}_Z{}^2} \qquad\qquad (3\ d)$$

$$\beta_N = \text{arctg}\ \frac{\widehat{w}_Z}{\widehat{w}_X}\ . \qquad\qquad (3\ e)$$

Bei Raumfahrzeugen, deren Querachsenträgheitsmomente $I_X$, $I_Z$ sich nur wenig unterscheiden, was praktisch immer bei spinstabilisierten und häufig bei dreiachsenstabilisierten Raumfahrzeugen, insbesondere Nachrichtensatelliten, der Fall ist, stellen diese Beziehungen ausreichend gute Näherungen dar. Sind die Querachsenträgheitsmomente unterschiedlich, so ist es erfindungsgemäß vorteilhaft, die Nutationsamplitude $A_N$ nach einer Formel zu ermitteln, die diesen Verhältnissen Rechnung trägt und die Form hat:

$$A_N = \sqrt{\frac{\hat{w}_x^2}{w_N^2} + \frac{\hat{w}_z^2}{w_N^2} \cdot \frac{I_z}{I_x}} \qquad (3\ f)$$

Eine genauere Beziehung für den Phasenwinkel lautet in diesem Fall:

$$\beta_N = \operatorname{arctg} \frac{\sqrt{I_z/I_x} \cdot \hat{w}_z}{\hat{w}_x} \qquad (3\ e)$$

und bedeutet, daß in dieser Definition die Nutationsphase durch Null geht, wenn die Nutationsbewegung um die zweite Querachse durch Null geht und gleichzeitig um die dazu orthogonale erste Querachse ihr Maximum (+ $A_N$) erreicht. Die in den vorstehend beschriebenen Funktionselementen nach den angegebenen Vorschriften schrittweise gebildeten Signale ($\Delta t_{CX}$; $A_N$, $\beta_N$) an den Ausgängen des Modulators 406 und des Amplituden-Phasen-Wandlers 409 werden miteinander verknüpft. Dies geschieht derart, daß der Modulator über Notwendigkeit. Vorzeichen und Dauer eines Stelleingriffs entscheidet und die Ausgangssignale des Amplituden-Phasen-Wandlers 409 über den Zeitpunkt des Stelleingriffs $\Delta T_{CX}$ innerhalb einer Nutationsperiode. Erfindungsgemäß sind dabei zwei Fälle zu unterscheiden, je nachdem, ob die Pulswiederholungsfrequenz des Modulators einen oder zwei Stelleingriffe pro Nutationsperiode vorschreibt.

Im erstgenannten Fall soll ein Stelleingriff wie vom Modulator nach Dauer und Vorzeichen vorgeschrieben in folgendem Bereich des Nutationswinkels ($\beta_N$, $0 \leq \beta_N \leq 360°$) vorgenommen werden:

$$\gamma_0 + \Delta\gamma - \Delta\beta \leq \beta_N(t) \leq \gamma_0 + \Delta\gamma + \Delta\beta \qquad (3\ g)$$

sofern:

$$\frac{1}{2} \leq \frac{A_N}{\Delta P_X} \leq \frac{3}{2} \qquad (3\ h)$$

d.h. wenn der Momentanwert (Gleichung 3d, 3f) der laufend ermittelten Nutationsamplitude $A_N$ mehr als die Hälfte, aber weniger als das Anderthalbfache des Nutationshalbkegels beträgt, den ein Minimalimpuls $\Delta P_X$ erzeugt, wobei:

$$\Delta P_X \equiv \frac{\Delta T_{cx}}{|H_Y|} = \frac{T_{cx} \cdot \Delta t_{cx}}{|H_Y|} \qquad (3\ i)$$

$$\Delta\gamma(t) \equiv \arccos\left(\frac{1}{2} \cdot \frac{A_N}{\Delta P_X} + \frac{3}{8} \cdot \frac{\Delta P_X}{A_N}\right) \qquad (3\ k)$$

13

oder näherungsweise:

$$\Delta\gamma(t) \cong \sqrt{1 - \left(\frac{1}{2} \cdot \frac{A_N}{\Delta P_x} + \frac{3}{8} \cdot \frac{\Delta P_x}{A_N}\right)^2} \qquad (3\ l)$$

und festen Werten $\gamma_O$, $\Delta\beta$ , vorzugsweise:

$$\Delta\beta \cong 0.1 \ rad$$

$\gamma_O = \pi-\alpha$ für positive Stelleingriffe      (3 m)

$\gamma_O = 2\pi-\alpha$ für negative Stelleingriffe

Ist dagegen die Nutationsamplitude ($A_N$, Gleichung 3d, 3f) größer oder kleiner als die angegebenen Schranken, dann soll der Stelleingriff in folgendem Bereich des Nutationswinkels ( $\beta_N(t)$; $0 \leq \beta_N \leq 2\pi$ ) erfolgen:

$\gamma_O - \Delta\beta \leq \beta_N(t) \leq \gamma_O + \Delta\beta$      (3 n)

Es bedeuten:

$\gamma = \gamma_O + \Delta\gamma$    - den optimalen Phasenwinkel für den Stelleingriff innerhalb einer Nutationsperiode, falls (3h) gilt,

$T_{CX}$    - das Momentenniveau des Stelleingriffs ,

$\Delta t_{CX}$    - die vom Modulator kommandierte Dauer des Stelleingriffs und

$\alpha$    - den Schrägeinbauwinkel des Stellgliedes.

Die anderen Größen ( $\Delta P_X$, $\gamma_O$ , $\Delta\gamma$ ) sind durch die sie beschreibenden Gleichungen (3i, 3m, 3l) definiert. Im Falle zweier Stelleingriffe pro Nutationsperiode ist der erste Stelleingriff erfindungsgemäß vorzunehmen, wenn:

$\gamma_O - \Delta\gamma_1 - \Delta\beta \leq \beta_{N1}(t) \leq \gamma_O - \Delta\gamma_1 + \Delta\beta$      (3 o)

sofern:

$A_N \leq 2\,\Delta P_X$      (3 p)

wobei:

$$\Delta\gamma_1 = arc\ cos\left(\frac{A_N}{2\Delta P_x}\right) \qquad (3\ q)$$

und der zweite Stelleingriff, wenn

$\gamma_O - \Delta\beta \leq \beta_{N2}(t) \leq \gamma_O + \Delta\beta$      (3 r)

Dazu ist allerdings unbedingt erforderlich, daß die Bestimmung der Nutationsamplitude $A_N$ und -phase $\beta_N$ in kürzerer Zeit erfolgt, als der halben Nutationsperiode (Gleichung 1c) entspricht. Wenn z.B. infolge hoher Nutationsfrequenz und/oder langsamer Datenverarbeitung in der Bordelektronik dies nicht gewahrleistet werden kann, dann ist nach der Vorschrift der vorliegenden Erfindung die Bedingung für den zweiten Impuls nach Gleichung (3 r) zu ersetzen durch:

$$\beta_{N2}(t) = 2(\pi - \Delta\gamma_1) \qquad (3\ s)$$

Ist dagegen

$$A_N > 2\ \Delta P_X \qquad (3\ t)$$

dann ist zu setzen

$$\Delta\gamma_1 = 0 \qquad (3\ u)$$

und die beiden Bedingungen (3 o) und (3 r) gehen ineinander über.

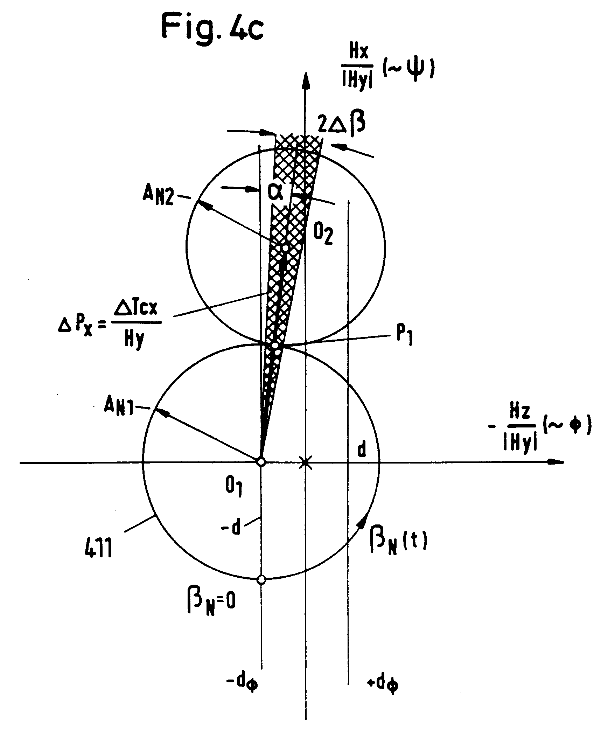

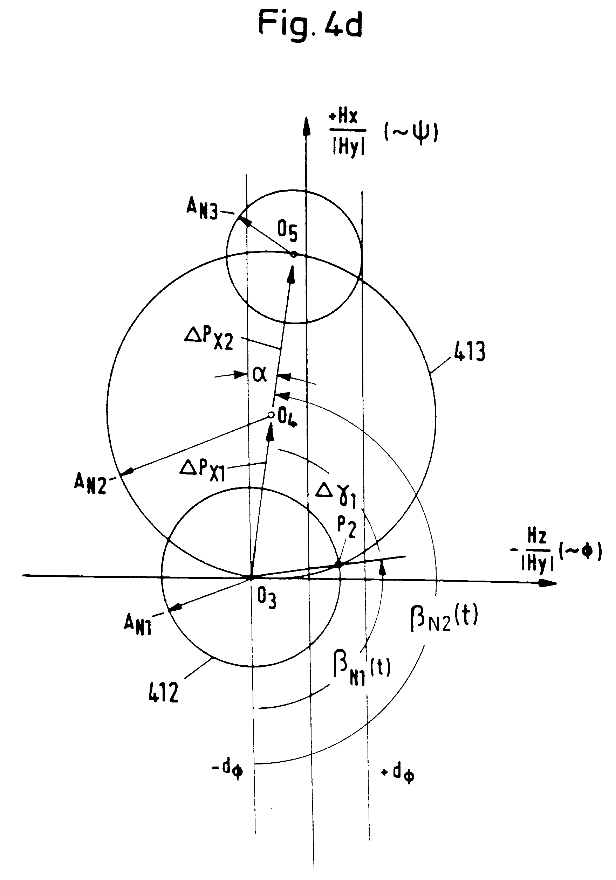

Die in den Ungleichungen (3 g), (3 o), (3 r) formulierten Bedingungen für die Erzeugung diskreter Stelleingriffe zur Sicherstellung hochgenauer Folgeregelung und energieoptimaler Nutationsdämpfung sollen mit Hilfe der Figuren 4 c und 4 d zum besseren Verständnis noch etwas näher erläutert werden:

Figur 4c zeigt die Eingriffsbedingung (3 g) anhand einer zweidimensionalen Darstellung der Bewegung des Drallvektors in der Umlaufebene eines Raumfahrzeuges der betrachteten Art. Die normierten Drallkomponenten in Richtung der zueinander orthogonalen Querachsen ($H_Z/|H_Y|$ ,$H_X/|H_Y|$) denkt man sich längs der Koordinatenachsen aufgetragen. Die zugehörigen, den Drallkomponenten proportionalen Eulerwinkel ( $\phi$ , $\psi$ ) sind in Klammern angegeben. Die eingezeichneten Kreise stellen in schematisierter Form Nutationsbewegungen dar, die die Spitze des im wesentlichen senkrecht in die Zeichenebene gehenden Raumfahrzeug-Drallvektors $H_Y$ dabei beschreibt. Der Mittelpunkt des jeweiligen Kreises 411, 412 markiert die Spitze des Gesamt-Drallvektors in der Darstellungsebene des Bahnkoordinatensystems. Der Anfangspunkt ($\beta_N$ = 0) der Nutationsbewegung mit einer Amplitude ($A_N$, Gleichung 3d, 3e, 3f), die dem Kreisradius (411) entspricht, sowie der angenommene Umlaufsinn, sind angegeben. Erreicht nun die Z-Komponente des Gesamt-Drallvektors die als Eingriffskriterium benutzte, zulässige Grenze der Totzone (-d), so wird ein Stelleingriff ($\Delta T_{CX}$) ausgelöst, der den Gesamt-Drallvektor um eine Strecke $\Delta P_X$ (Gleichung 3 i) in eine neue Position $O_2$ verschiebt. Wenn, wie im vorliegenden Fall angenommen, das Momentenniveau des Stelleingriffs hoch und die Impulsdauer sehr klein gegenüber der Nutationsperiode ist, dann führt der Drallvektor des Raumfahrzeuges $H_Y$ nach dem Stelleingriff um die neue Lage des Gesamt-Drallvektors als Mittelpunkt eine Nutationsbewegung aus, deren Anfangsbedingungen der Lage des Raumfahrzeug-Drallvektors vor dem Stelleingriff entsprechen, Ein Momenteninkrement $\Delta T_{CX}$ um die X-Achse entspricht im wesentlichen einem Drallinkrement $\Delta H_X$ entlang der gleichen Achse, verbunden mit einer kleinen Komponente entgegengesetzen Vorzeichens -$\Delta H_Z$ um die Z-Achse, wegen des bereits beschriebenen Schrägeinbaus der Reaktionsdüsen im betrachteten Beispiel. Die Mindestlänge des Drallverschiebungsvektors wird bestimmt durch die Größe des minimalen realisierbaren Impulsinkrementes.

Aus Figur 4c geht anschaulich hervor, daß der optimale Zeitpunkt für einen Stelleingriff dann gegeben ist, wenn der Phasenwinkel der Nutationsschwingung gerade in Richtung des Drallinkrementes zeigt, das durch den Stelleingriff erzeugt wird. Dieser Phasenwinkel mit einem Toleranzbereich $2\Delta\beta$ wird mathematisch durch die Bedingung nach Gleichung (3 g) beschrieben. Der zugehörige Punkt ist in Figur 4c mit $P_1$ bezeichnet. Abhängig von der Größe des Minimalimpulses ( $\Delta T_{CX}$), der Größe des gespeicherten Dralls $H_Y$ und der augenblicklichen Nutationsamplitude $A_N$ muß der Zeitpunkt des Stelleingriffs (3 g) variiert werden (3 i, 3 k), wenn sichergestellt werden soll, daß die verbleibende Nutationsamplitude nach jedem zur Korrektur der Drallrichtung vorgenommenen Stelleingriff gleichzeitig auch ihren kleinstmöglichen Wert annimmt. Liegen die Anfangsbedingungen im Gültigkeitsbereich der Ungleichung (3 h), so ist diese Forderung jeweils mit einem einzigen Stellimpuls erfüllbar. Außerhalb dieses Bereichs stellt die dann anzuwendende Vorschrift (Gleichung 3 n) zwar den bestmöglichen, energieoptimalen Nutationsabbau sicher, ohne daß jedoch mit einem einzigen Stelleingriff minimal mögliche Restnutation erreichbar ist.

Sind die auf ein Raumfahrzeug der betrachteten Art einwirkenden Störmomente oder die Abweichungen der Achsen von ihrer Sollage so groß, daß zwei Stelleingriffe pro Nutationsperiode vom Modulatorausgangssignal gefordert werden, so sind gemäß der Erfindung die Vorschriften nach Gleichung (3 o) bis (3 u) anzuwenden. Die entsprechenden Verhältnisse sind in Figur 4 d dargestellt. Eine energieoptimale Verschiebung des Drallvektors, d.h. bezogen auf Figur 4 d des Mittelpunktes $O_3$ eines Nutationskreises 412 , wird nach dem bereits erwähnten Posicastprinzip dann erreicht, wenn zwei gleich große Stelleingriffe im zeitlichen Abstand einer Nutationshalbperiode vorgenommen werden, ohne daß dabei allerdings gleichzeitig ein Abbau einer Anfangsnutation erreicht wird. Ist die Anfangsamplitude der Nutation kleiner als die durch zwei Stellimpulse bewirkte Verschiebung des Drallvektors (Gleichung 3 p) so wird ohne Erhöhung des zur Drallkorrektur erforderlichen Energieaufwandes die bestmögliche Nutationsdämpfung gemäß der erfindungsgemäßen Vorschrift (3 o) dann erreicht, wenn der erste Stelleingriff bei einem Phasenwinkel erfolgt, der dem Schnittpunkt $P_2$ des Anfangsnutationskreises 412 mit einem zweiten, gedachten Nutationskreis 413 entspricht, dessen Mittelpunkt $O_4$ um ein dem Stelleingriff nach Größe und Richtung entsprechendes Drallinkrement verschoben ist, wie in Figur 4 d angedeutet. Der zweite Stelleingriff (Gleichung 3 r) verschiebt den Bahndrallvektor dann zum richtigen Zeitpunkt an die Stelle, wo die Wirkungsrichtung des Stelleingriffs die Nutationsbewegung kreuzt, so daß die zur Drallverschiebung initiierte Nutationsbewegung ($A_{N2}$) eliminiert und die Restnutation ($A_{N3}$) minimiert wird.

Aus der Beschreibung der Funktionselemente 401 bis 410 der Erfindung nach den Figuren 4 a und 4 b , insbesondere den ihre Funktionsmerkmale darstellenden Gleichungen (3a) bis (3u) ist ersichtlich, daß zur Ausführung der erfindungsgemäßen Vorschriften die Kenntnis einiger systembedingter Parameter notwendig ist. Die numerischen Werte einiger dieser Systemparameter sind jedoch entweder bewußt oder aber wegen wechselnder operationeller Einsatzbedingungen, wie z.B. Temperaturschwankungen, Alterung, Lebensdauer und dergleichen, zeitlichen Schwankungen unterworfen, welche die Qualität der erfindungsgemäßen, auf optimales Verhalten ausgerichteten Vorrichtung beeinträchtigen. Gemäß einer weiteren Ausgestaltung der Erfindung wird daher vorgeschlagen, die augenblicklichen Werte der starken Änderungen unterworfenen Systemparameter zu ermitteln und bei der Ausführung der erfindungsgemäßen Lehren zum technischen Handeln zu berücksichtigen.

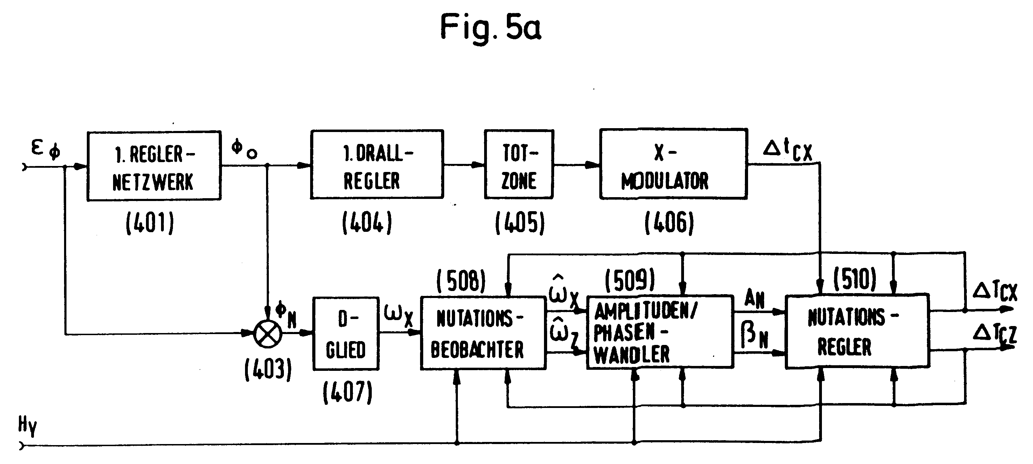

In Figur 5a ist das Funktionsschaltbild einer dementsprechend erweiterten Vorrichtung gezeigt. Es wurde bereits erwähnt, daß die Drallspeichereinrichtungen dazu benutzt werden, die Stabilisierung solcher Fahrzeuge um ihre zur Bahnebene orthogonale Nick-(Y-)Achse (Figur 1) zu benutzen. Im Rahmen des nominalen Arbeitsbereichs ist damit eine Betragsänderung des Dralls von z.B. ± 10 % verbunden. Da die Masseneigenschaften solcher Drallspeicherkomponenten sehr genau bekannt sind, läßt sich die Größe des Drehimpulses mit Hilfe einer Drehzahlmessung des Drallrades oder auch nur der Gegen-EMK seines Antriebsmotors an Bord des Fahrzeuges leicht ermitteln und sein genauer Wert bei Ausführung der erfingungsgemäßen Vorschriften ohne Schwierigkeit berücksichtigen. Wie man leicht erkennt geht die Drallgröße ($H_Y$) in die Bestimmungsgleichungen für die Nutationsfrequenz $W_N$ (Gleichung 1 c), die Nutationsamplitude $A_N$ (Gleichung 3 f), den Nutationsbeobachter (Gleichung 3 c), das normierte Drallinkrement (3 i), die Phasenwinkel der Stelleingriffe $\Delta\gamma$, $\Delta\gamma_1$ (Gleichungen 3 k, 3 l , 3 q) und damit in die Regelgesetze (Gleichung 3 g, 3 n, 3 o, 3 r, 3 s) und in deren Anwendungskriterien (3 h),(3 p) ein.

In entsprechender Weise führt die Berücksichtigung bestmöglicher Kenntnis des tatsächlich erzeugten Stelleingriffs, z.B. abgegebener Düsenimpulse ( $\Delta T_{CX}$, $\Delta T_{CZ}$), zur Einhaltung der Optimalitätsbedingungen und zu einem raschen Einschwingen der erfindungsgemäßen Funktionselemente 408, 409, 410 bzw. der sie repräsentierenden Algorithmen und/oder Netzwerke. Der Wirkungsgrad von Reaktionsdüsen, d.h. ihre effektiv abgegebenen Impulsinkremente, ist in erheblichem Maß von der Impulsdauer $\Delta t_{CX}$ ihrer Ansteuersignale abhängig und sinkt insbesondere bei kleinen Ansteuerzeiten (z.B. ≦10msec) bis unter 50 %. Gerade dieser Arbeitsbereich ist jedoch in der Praxis aus Genauigkeitsgründen von besonderem Interesse, denn durch diese Größe ist u.a. die Restnutation bestimmt. Die funktionale Abhängigkeit des effektiven Impulsinkrementes von der Einschaltdauer kann z.B. vor Einsatz solcher Komponenten durch Prüfstandmessungen ermittelt, an Bord gespeichert und für die von Modulator 406 geforderte Dauer der jeweiligen Stelleingriffe abgerufen und in den Algorithmen (Gleichung 3 c und ff.) entsprechend berücksichtigt werden. Diese Vorgehensweise wird als "gesteuerte Adaption" bezeichnet und ist in Figur 5a durch die zusätzliche Einführung bzw. Rückführung der Größen Drall $H_Y$ und Impulsinkremente $\Delta T_{CX}$, $\Delta T_{CZ}$ schematisch angedeutet. Selbstverständlich können statt dessen die genannten Parameter vollständig oder teilweise auch durch zusätzliche, an Bord oder am Boden vorgesehene Beobachter und Schätzalgorithmen ermittelt werden. Gemäß der in der praktischen Anwendung gültigen Regel, daß nicht geschätzt werden sollte, was mit einfachen Mitteln gemessen werden kann, empfiehlt es sich jedoch, zur weiteren Verbesserung nur solche Großen durch Schätzverfahren zu ermitteln, die einer direkten Messung überhaupt nicht oder nur mit erheblichem zusätzlichem Aufwand an Messmitteln zugänglich sind. Dies kann z.B. zutreffen auf unvorhergesehene oder über die Lebensdauer eintretende Anderungen des funktionalen Zusammenhangs zwischen Wirkungsgrad und Impulsdauer von Reaktionstriebwerken infolge von Änderungen des Förderdrucks, des Mischungsverhältnisses der Treibstoffkomponenten und von Alterungsprozessen. In diesem Fall läßt sich z.B. aus der Differenz von theoretischer und geschätzter Nutationsamplitude in einem erweiterten Nutationsbeobachter auch das effektive Impulsinkrement identifizieren sowie in den Datenaufbereitungs- und/oder Regelalgorithmen berücksichtigen. Die mehrmals erwähnten, gleichzeitig mit Stelleingriffen um eine erste Querachse erzeugten Momentenkomponenten um die zweite Querachse können statt durch Schrägeinbau der Stellglieder für die erste Querachse auch durch gleichzeitige Ansteuerung getrennter, auf die zweite Querachse wirkender Stellglieder mit dem gleichen Signal $\Delta t_{CX}$ , jedoch umgekehrtem Vorzeichen realisiert werden. Auf die möglichen Auswirkungen einer solchen Vorgehensweise soll später noch eingegangen werden.

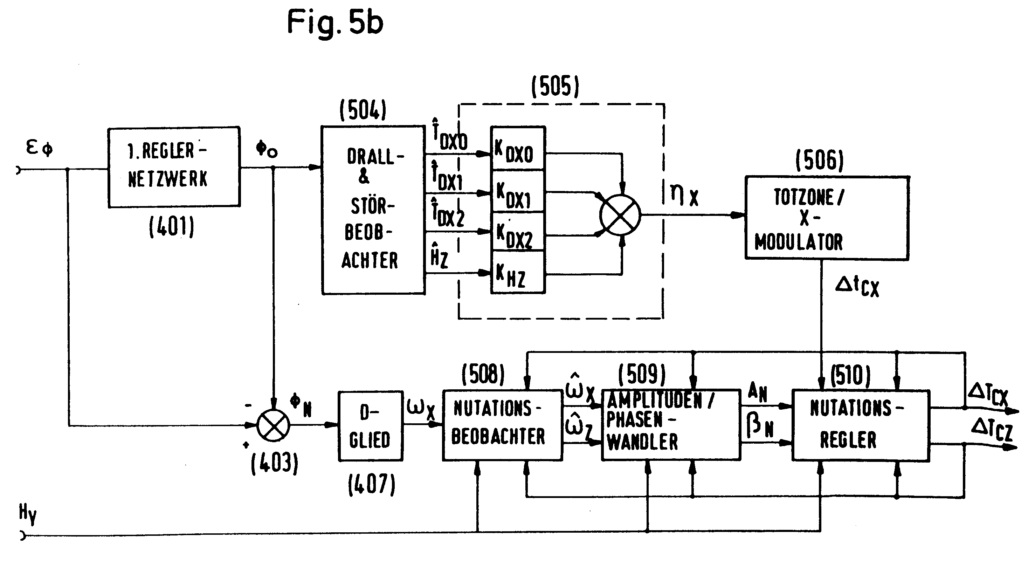

Eine andere, insbesondere für die Verbesserung der Ausrichtgenauigkeit bedeutsame, auf Beobachter und Schätzverfahren beruhende Erweiterung der vorliegenden Erfindung ist in den Figuren 5b und 5c gezeigt und besteht in der Ermittlung der auf das Fahrzeug wirkenden Störmomente und ihrer Kompensation.

Wie in Figur 5b schematisch angedeutet, wird dazu vorgeschlagen, den bereits beschriebenen Drallregler 404 um einen Störgrößenbeobachter Zu erweitern und einer nachfolgenden Kombination aus Totzone und X-Modulator 506 die gewonnenen Schätzwerte aufzuschalten. Die während der Normalbetriebsphase solcher Raumfahrzeuge auftretenden Störungen denke man sich mittels einer Fourieranalyse in Konstantanteile und ganzzahlige Vielfache der Bahnumlauffrequenz $w_O$ zerlegt, wobei die Amplituden der höheren Harmonischen $2w_O$ etc. je nach geometrischer Gestalt des Raumfahrzeuges mehr oder weniger stark ausgeprägt sind. Zur Erweiterung des Drallreglers 404 auf einen Drall- und Storgrößenbeobachter, 504 mit zustandsregler 505 wird auf die Beobachterform des Drallreglers (Gleichung 3 a) zurückgegriffen, deren vollständige Modellgleichungen Störmomententerme $T_{DX}$, $T_{DZ}$ um die Querachsen enthalten. Ersetzt man in dieser Darstellung z.B. das Störmoment um die erste Querachse $T_{DX}$ durch seinen optimalen Schätzwert $\hat{T}_{DX}$, der im Rahmen eines erweiterten Drall- und Störbeobachteralgorithmus (Gleichung 4a) gewonnen werden kann, und schaltet die so ermittelten Größen über geeignete Verstärkungsfaktoren $K_{HZ}$, $K_{DXO}$, $K_{DX1}$, $K_{DX2}$ nach Art eines Zustandsreglers (505, Gleichung 4 b) auf den Eingang der nachfolgenden, auf die erste Querachse (X-Achse) wirkenden Kombination aus Totzone und X-Modulator 506, so wird die gewünschte Drallregelung und Störgrößenkompensation erreicht. Unter der Annahme, daß das Störmomentenprofil um die erste Querachse durch seinen Konstantanteil und eine erste Harmonische hinreichend genau beschrieben wird, lauten die Beobachter- und Reglergleichungen:

$$
\begin{bmatrix} \dot{\hat{H}}_x \\ \dot{\hat{H}}_z \\ \dot{\hat{T}}_{DXO} \\ \dot{\hat{T}}_{DX1} \\ \dot{\hat{T}}_{DX2} \end{bmatrix} = \begin{bmatrix} 0 & -w_0 & 1 & 1 & 1 \\ w_0 & 0 & 0 & 0 & 0 \\ 0 & 0 & 0 & 0 & 0 \\ 0 & 0 & 0 & 0 & -w_0 \\ 0 & 0 & 0 & w_0 & 0 \end{bmatrix} \begin{bmatrix} \hat{H}_x \\ \hat{H}_z \\ \hat{T}_{DXO} \\ \hat{T}_{DX1} \\ \hat{T}_{DX2} \end{bmatrix} + \begin{bmatrix} k_{11} \\ k_{21} \\ k_{31} \\ k_{41} \\ k_{51} \end{bmatrix} (|H_Y| \phi_0 + \hat{H}_2)
$$

$$
\begin{bmatrix} 1 & 0 & 0 & 0 & 0 \\ 0 & 1 & 0 & 0 & 0 \end{bmatrix}^T \cdot \begin{bmatrix} T_{DX} \\ T_{DZ} \end{bmatrix}
\tag{4a}
$$

$$
\eta_X = [K_{HZ} K_{DXO} K_{DX1} K_{DX2}] \cdot [\hat{H}_Z \hat{T}_{DXO} \hat{T}_{DX1} \hat{T}_{DX2}]
\tag{4b}
$$

wobei die Bezeichnungen von Gleichung (3 a) gelten und zusätzlich

$\hat{T}_{DXO}$     - den Schätzwert der konstanten Störmomentenkomponente $T_{DXO}$ um die X-Achse,

$\hat{T}_{DX1}$, $\hat{T}_{DX2}$     - die Sinus-/und Cosinuskomponente einer auf die erste Querachse (X-Achse) wirkenden, mit der Bahnumlauffrequenz $w_O$ periodischen Störmomentenkomponente,

$k_{31}$, $k_{41}$, $k_{51}$     - Verstärkungsfaktoren,

$K_{HZ}$, $K_{DXO}$, $K_{DX1}$, $K_{DX2}$   - Aufschaltwerte des Zustandsreglers 505,

$\eta_X$     - das Ausgangssignal des Zustandsreglers 505 (Eingangssignal der Kombination aus Totzone und X-Modulator 506 und

$[\dots]^T$     - transponierte Vektoren/Matrizen bedeuten.

Im vorliegenden Fall genügt an sich die Aufschaltung nur einer Komponente (z.B. $T_{DX1}$) des harmonischen Störmomentenanteils im Kompensationsteil des Zustandsregler 505 , da sich die Phasenlage über den Störgrößenbeobachter automatisch einstellt. Für den Fall, daß die zweite oder höhere Harmonische der Störmomente nicht unerhebliche Amplituden aufweisen, können Störbeobachter und Regler natürlich in bekannter Weise entsprechend erweitert werden, und zwar um je zwei Ordnungen pro zusätzlicher periodischer Komponente.

Das Prinzip einer besonders vorteilhaften Ausgestaltung einer Störgrößenkompensation ist in Figur 5c dargestellt. Danach werden im Zustandsregler 505 statt der zum jeweiligen Zeitpunkt t ermittelten Schätz-

werte der Störgrößen $\hat{T}_{DXO}(t), \hat{T}_{DX1}(t)$ des Drall- und Störgrößenbeobachters 504 Prädiktionswerte dieser Größen $\hat{T}_{DXO}(t-1/w_O)$, $\hat{T}_{DX1}(t-1/w_O)$ aufgeschaltet, die einem Störgrößenspeicher 511 entnommen werden, dessen Werte zum entsprechenden Zeitpunkt der vorhergehenden Umlaufperiode $(1/w_O)$ ermittelt und festgehalten wurden. Die vom Drall- und Störgrößenbeobachter 504 in diesem Fall ermittelten Schätzwerte stellen dann nicht die Absolutwerte, sondern die Abweichung von den aufgeschalteten Prädiktionswerten dar und werden diesen zur Bildung eines neuen Prädiktionswertes für den gleichen Zeitpunkt der nachfolgenden Umlaufperiode hinzugeschlagen. Auf diese Weise tritt z.B. bei geosynchronen Satelliten im eingeschwungenen Zustand der Regelkreise jeweils nur die tägliche Änderung des Störmomentenprofils als auszuregelnde Störgröße auf. Die Bahndrallkomponte $\hat{H}_Z(t)$ dagegen wird, wie in Figur 5b gezeigt, direkt und ohne Zwischenspeicherung zur Drallregelung verwendet. In diesem Prinzipschaltbild ist auch von der erwähnten Tatsache Gebrauch gemacht, daß für eine harmonische Störmomentenkomponete im Normalfall nur ein Aufschaltwert $\hat{T}_{DZ1}$ genügt.

Die Genauigkeitsverbesserung der Folgeregelung eines Raumfahrzeuges der genannten Art nach den Figuren 5b, 5c bringt noch einen weiteren Vorteil mit sich. Es zeigt sich nämlich, daß der in einem Beobachter nach Gleichung (4 a) oder einer reduzierten Form desselben gewonnene Schätzwert für die Gesamtdrallkomponente $\hat{H}_X$ in Richtung der ersten Querachse ebenfalls eine erhebliche Genauigkeitsverbesserung erfährt. Wie bei der Diskussion der dynamischen Vorgänge im Zusammenhang mit den Figuren 4c und 4d ausgeführt, ist diese Drallkomponente proportional zum Ausrichtfehler um die zweite Querachse und kann daher bei geeigneter Verknüpfung im Nutationsregler 510 vorteilhaft zur Regelung um diese Achse eingesetzt werden. Dazu dient in Figur 5c ein dem Zustandsregler 505 entsprechender Zustandsregler 512 , der auch noch die Aufschaltung der zweiten Fourierkomponente der harmonischen Störung aus dem Drall- und Störgrößenbeobachter 504 über einen entsprechenden Verstärkungsfaktor $K_{DX2}$ enthalten kann und über eine zweite Totzone 503 und einen Z-Modulaton 513 auf den Nutationsregler 510 einwirkt. Für die Verknüpfung der zusätzlichen Ausgangssignale des Z-Modulators im Nutationsregler 510 zur Erzeugung von optimalen Stelleingriffen um die Querachsen gelten die bereits beschriebenen Eingriffsbedingungen (Gleichung 3g und ff.), sofern nur in den Definitionsgleichungen (3m) für die mit den jeweiligen Stelleingriffen verbundenen Drallverschiebungsrichtungen $\gamma_O$ die entsprechenden Zahlenwerte eingesetzt werden. Diese Werte $\gamma_O$ sind für alle möglichen Anfangsablagen und Stelleingriffe in Tabelle 1 zusammengestellt. Abschließend sei erwähnt, daß die Gestaltung des Drall - und Störgrößenbeobachters nach Gleichung (4 a) in vollständige oder vereinfachter Form wie etwa im Zusammenhang mit Gleichung (3 a) beschrieben ausgeführt werden kann. Eine eventuell zweckmaßige Umrechnung in entsprechende Übertragungsfunktionen und deren Realisierung durch äquivalente Algorithmen oder Netzwerke bereitet dem Fachmann keine Schwierigkeiten.

In den folgenden Figuren 6a bis 6d werden weitere Ausgestaltungen der Erfindung gezeigt, die dem Zweck dienen, möglichst ohne geratetechnischen Mehraufwand, d.h. unter Verwendung ohnehin vorhandener Meß- und Stellkomponenten die Ausrichtgenauigkeit um die zweite Querachse, die Z- oder Gierachse von Raumfahrzeugen der betrachteten Art weiter zu erhöhen. Im Zusammenhang mit der typischen Komponentenanordnung nach den Figuren 1b und 1c wurde bereits ausgeführt, daß mittels Sonnensensoren, die auch für Akquisitions- und Bahnkorrekturmanöver erforderlich sind, Lagereferenzsignale für die zweite Querachse über weite Winkelbereiche - bei geosynchronen Satelliten z.B. über zweimal 8 bis 10 Stunden pro Tag - verfügbar sind.

In Figur 6a wird von dieser (Gier-)Information Abweichung $E_\psi$ in einem zusätzlichen Reglerzweig Gebrauch gemacht, der aus einem dritten Reglernetzwerk 601 , einem zweiten Drallregler 602 und einem Z-Modulator 604 und einer Totzone 603 besteht und dem Nutationsregler 610 zusätzlich Information über Notwendigkeit, Vorzeichen und Dauer von Stelleingriffen um eine zweite Querachse liefert. Für die Regelung um eine erste Querachse wird in diesem Prinzipschaltbild zunächst nochmals von der Vorrichtung gemäß Figur 5a ausgegangen. Für die Gestaltung der Funktionselemente des zusätzlichen Reglerzweiges für die zweite Querachse, insbesondere des Reglernetzwerkes 601 , des Drallreglers 602 , der Totzone 603 des Modulators 604 gelten die gleichen Überlegungen wie sie bei der Beschreibung des Drallregelkreises für die erste Querachse angestellt wurden. Die über das vorzugsweise Tiefpaßverhalten aufweisende dritte Reglernetzwerk 601 aus dem Meßsignal für die Abweichung um die zweite Querachse von der Sollorientierung gewinnbare Bahnbewegungskomponente $\psi_O$ ist dann allerdings der Komponente des Raumfahrzeugdralls $H_X$ in Richtung der ersten (X-) Querachse proportional. Der zweite Drallregler 602 weist Proportional-, PD- oder PID-Verhalten auf und ist gegebenenfalls zusammen mit dem dritten Reglernetzwerk 601 nach den Merkmalen des Reglers 301 gemäß Fig. 3 ausgebildet. Überschreitet die X-Komponente des Raumfahrzeugdralls $H_X$ die Ansprechschwellen eines getrennt oder mit dem Modulator gemeinsam realisierten Totzonegliedes 603 , so entscheidet ein Modulator bereits beschriebener, möglicher Ausführungsformen über Notwendigkeit, Vorzeichen und Dauer von Stelleingriffen um eine zweite Querachse.

An dieser Stelle weist nun die vorliegende Erfindung ein sehr wesentliches, charakteristisches Merkmal auf. Bisher wurde nämlich immer davon ausgegangen, daß ein aus der Abweichung um eine erste Querachse (X-Achse) von der Sollorientierung gewinnbares Signal auch dazu benutzt wird, Stelleingriffe um die besagte erste Querachse nach den bereits ausführlich erläuterten Eingriffskriterien vorzunehmen. Es wäre an sich naheliegend, auch für die Stelleingriffe um die zweite Querachse (Z-Achse) in der gleichen Weise zu verfahren und folglich über das dritte Reglernetzwerk 601, dem zweiten Drallregler 602 , das Totzoneglied 603 und den Modulator 604 die notwendigen Stelleingriffe $\Delta T_{CZ}$ um eben diese zweite Querachse auszulösen. Es zeigt sich jedoch, daß eine solche Vorgehensweise nicht zu energieoptimalen Bewegungsabläufen führt. Aus Figur 4c und der zugehörigen Beschreibung ist nämlich ersichtlich, daß ein aus der Ablage zum eine erste Querachse (X-Achse) abgeleiteter, Stellmomente um diese erste Querachse erzeugender Stellimpuls vorwiegend eine Verschiebung des Gesamt-Drallvektors im Raum erzeugt, die einer Ablage zum die zweite Querachse von der Sollorientierung entspricht. Es erweist sich jedoch als zweckmäßiger, die Zuordnung der Stelleingriffe um die jeweiligen Achsen bzgl. der aus den Meßsignalen gewonnenen Informationen gerade zu vertauschen. Allerdings sollen die Stelleingriffe um beide Querachsen nach wie vor entsprechend der bisherigen Lehre der Erfindung in korrelation mit dem augenblicklichen Zustand der Nutationsbewegung vorgenommen werden.

Diese weitere Ausgestaltung der Erfindung ist aus Anspruch 2 zu entnehmen.

Die in den Ungleichungen (3g) bis (3u) allgemein mathematisch formulierten Bedingungen für den Zeitpunkt bzw. Phasenwinkel $\beta_N(t)$ der Stelleingriffe innerhalb einer Nutationsperiode und die auf die jeweilige Nutationsamplitude $A_N$ bezogenen Einsatzbereiche, z.B. Gleichung (3h, 3p), behalten ihre Gültigkeit, wenn man die dort verwendete Größe $\Delta P_X$ durchweg ersetzt durch eine neue Größe $\Delta P$, die wie folgt definiert ist:

$$\Delta P = \sqrt{\Delta P_X^2 + \Delta P_Z^2} \qquad (5\ a)$$

$$\Delta P_X = \frac{\Delta T_{cx}}{|H_Y|} = \frac{T_{cx} \cdot \Delta t_{cx}}{|H_Y|} \qquad (3\ i)$$

$$\Delta P_Z = \frac{\Delta T_{cz}}{|H_Y|} = \frac{T_{cz} \cdot \Delta t_{cz}}{|H_Y|} \qquad (5\ b)$$

wobei:

$\Delta P_X, \Delta P_Z$     - normierte Drallinkremente,

$T_{CX}, T_{CZ}$     - Stellmomentenniveaus um die Querachsen (X, Z) und

$\Delta T_{CX}, \Delta t_{CZ}$     - die vom jeweiligen (X-,Z-) Modulator für die entsprechende Querachse vorgeschriebene Dauer des Stelleingriffs bedeuten.

Ferner muß zur optimalen Drallregelung und gleichzeitigen Nutationsdämpfung für Stelleingriffe um die erste (X-) und/oder zweite (Z-) Querachse der zugehörige, richtige Bezugswinkel $\gamma_o$ des erzeugten Drallinkrementes $\Delta P$ in die Eingriffsbedingungen eingesetzt werden. Für dessen Definition müssen drei Fälle unterschieden werden, je nachdem, ob nach Anweisung der Modulatorausgangssignale ein Stelleingriff

    - nur um die erste Querachse (X-Achse)

    - nur um die zweite Querachse (Z-Achse) oder

    - um beide Querachsen

innerhalb einer Nutationsperiode erfolgen soll. Die Zahlenwerte für den besagten Bezugswinkel $\gamma_o$ sind in Abhängigkeit von den zugelassenen Abweichungen, d.h. den Ansprechschwellen der dem ersten (404) bzw. zweiten Drallregler 602 nachgeschalteten Totzoneglieder 405, 603 , fur alle auftretenden Fälle in Tabelle 2 zusammengestellt.

Zur Veranschaulichung der in Tabelle 2 angegebenen Zahlenwerte für die Auslösebedingungen der Stelleingriffe (Gleichung 3g und ff.) dient das Diagramm nach Figur 6e . Erfindungsgemäß wird zunächst von der Forderung ausgegangen, daß der verbleibende Nutationskegel nach vollzogenen Stelleingriffen so klein wie möglich sein soll. Unter Hinweis auf die Erläuterungen zu den Figuren 4c und 4d ist der stationäre Wert der Restnutation durch die Größe des physikalisch realisierbaren, minimalen Stellinkrementes bzw. des zugehörigen Drallinkrementes $\Delta P_{min}$ bestimmt, dessen Wert bei Erzeugung je eines Minimalimpulses $\Delta P_{Xmin}$, $\Delta P_{Zmin}$ um jede Querachse innerhalb einer Nutationsperiode durch Gleichung (4a) festgelegt ist.

Schreibt das Regelgesetz innerhalb einer Nutationsperiode einen Stelleingriff um beide Querachsen vor, so werden diese zweckmäßigerweise gleichzeitig ausgelöst, was bei gleichgrossen Inkrementen für beide Querachsen einer Drallverschiebungsrichtung unter 45° im Diagramm von Figur 6e entspricht. Wird dagegen ein Stelleingriff um nur eine Querachse gefordert, so kann dessen Wert bei betragsmäßig gleicher Verschiebung des Drallvektors um einen Faktor $\sqrt{2}$ größer als der vorgegebene Minimalwert gewählt werden, was z.B. bei Verwendung von Reaktionsdüsen eine erwünschte Verbesserung des Treibstoffwirkungsgrades zur Folge hat. Unter Bezug auf Figur 6e erfolgt die Drallverschiebung bei Eingriffen um nur eine Querachse parallel zu den Koordinatenachsen $\Delta H_X/|H_Y|$, $\Delta H_Z/|H_Y|$, was dementsprechend mindestens Ansprechschwellen $|d_\phi| = |d_\psi| = \Delta P_{min}/2$ erfordert und die mittlere Ausrichtgenauigkeit der Querachsen bestimmt. Mittlere Ausrichtfehler des Raumfahrzeug-Drallvektors (- $\Delta H_Z$, $\Delta H_X$), entsprechend den Abweichungen um die Querachsen ($E_\phi$,$E_\psi$) von der Sollorientierung stellen sich in Figur 6e durch Abweichungen aus dem Koordinatenursprung 0 dar und sollten theoretisch durch Drallinkremente bzw. Stelleingriffe ruckgängig gemacht werden, die den Drallvektor in den Ursprung 0 zurückführen, was bei vorgegebener Größe der Minimalimpulse nicht aus jeder, beliebigen Abweichungen um beide Querachsen entsprechenden Anfangslage in einem Schritt moglich ist.

Daher wird das Ablagenfeld der Figur 6e in acht Sektoren eingeteilt, aus denen die Rückführung in die bestmögliche Umgebung des Ursprungs ($\pm d_\phi$ ,$\pm d_\psi$) erfolgt durch Stelleingriffe

$\pm \Delta T_{CZ}$ aus den Sektoren I, II,

$\pm \Delta T_{CX}$ aus den Sektoren III, IV und

$\pm \Delta T_{CX}$ und $\Delta T_{CZ}$ aus den Sektoren V,VI,VII,VIII,

entsprechend den Wirkungsrichtungen ( $\gamma_O$ ) der durch Stelleingriffe bewirkten Dralländerungen $\Delta P_X$, $\Delta P_Z$ .So löst z.B. eine positive Ablage um die erste Querachse (X-Achse)($E_\phi \sim \phi_O \sim - \Delta H_Z > + d_\phi$) in Sektor I (Punkt $P_1$) einen Stellimpuls $+ \Delta T_{CZ} \sim + \Delta H_Z$ aus, der den Drallvektor parallel zur Abszissenachse der Figur 6 e von $P_X$ nach $P_X^*$ verschiebt, aber den Nullpunkt nur dann genau erreichen kann, wenn gleichzeitig die Ablage um die zweite Querachse (Z-Achse) gerade Null ist; d.h. die Ablage um die zweite Querachse bleibt unverändert, wenn man von der mit der Verschiebung gleichzeitig verbundenen Änderung der Nutationsschwingung absieht. Durch die Einhaltung der Phasenbedingungen im Nutationsbewegungsablauf zum Zeitpunkt des Stelleingriffs (Gleichung 3 g und ff.) und die vom Modulator bestimmte Dauer wird gleichzeitig mit der Drallvektorverschiebung optimale Nutationsdämpfung und minimale Restnutation sichergestellt.

Überschreiten in einem betrachteten zweiten Fall z.B. die Ablagen um beide Querachsen von der Sollorientierung die zulässigen Schranken ($E_\phi \sim \phi_O \sim - \Delta H_Z > + d_\phi$), ($E_\psi \sim \psi_O \sim + \Delta H_X > d_\psi$), was einem Punkt $P_{\underline{V}}$ im Eingriffssektor $\underline{V}$ (Figur 6 e) entspricht, so wird gleichzeitig ein positiver Stelleingriff um die zweite Querachse $\Delta T_{CZ} \sim + \Delta H_Z$ und ein negativer Eingriff um die erste Querachse - $\Delta T_{CX} \sim - \Delta H_X$ ausgelöst, die bei betragsmäßig gleicher Größe eine Verschiebung des Drallvektors unter 45° in Richtung des Nullpunktes bewirken. Gleichzeitiger Nutationsabbau wird wiederum durch die Einhaltung der Phasenbedingung für die Nutationsbewegung zum Eingriffszeitpunkt $\beta_N$(t) sichergestellt. Für die vollständige Zuordnung der Stelleingriffe nach Vorzeichen ($\pm \Delta T_{CZ}$, $\pm \Delta T_{CX}$) und für die zugehörigen, in die Eingriffsbedingungen (Gleichung 3 g und ff.) einzusetzenden Drallverschiebungsrichtungen ( $\gamma_O$ ) abhängig von den Ablagen um die Querachsen (Sektoren I bis VIII) wird auf die Tabelle 1 verwiesen.

In Figur 6a ist ein Doppel-Umschalter 607,617 angedeutet, der Umschaltkontakte in beiden Kanälen aufweist, und mit dessen Hilfe eine Umschaltung der Regelkreise bei Verlust der Lagereferenz um die zweite Querachse vorgenommen werden muß. Sind die Stellglieder um die erste Querachse, wie in den bisherigen Ausführungsbeispielen angenommen (z.B. durch Schrägeinbau um den Winkel $\alpha$ ) so angeordnet, daß sie gleichzeitig eine Momentenkomponente entgegengesetzten Vorzeichens um die zweite Querachse erzeugen, so genügt im einfachsten Fall eine Umschaltung der Achsenzuordnung, z.B. ihrer Modulatoren, in eine den vorhergehenden Ausführungsbeispielen (z.B. Figur 4a, 5a, 5b) entsprechende Konfiguration und gleichzeitige Abschaltung des zusatzlichen Drallregelkanals ($H_X$) nach Figur 6a . Die Lage der zweiten Querachse wird dann zwar unter dem Einfluß äußerer Störungen abhängig von deren Größe und Vorzeichen wegdriften, infolge ihrer relativ genauen Ausrichtung zum Umschaltzeitpunkt in den begrenzten Perioden nicht verfügbarer Lagereferenz im allgemeinen jedoch geringere Ausrichtfehler als in den vorher betrachteten Vergleichsfallen aufbauen. Sind die Stellglieder für die erste Querachse nicht so angeordnet, daß sie bei jedem Eingriff gleichzeitig auch Momentenkomponenten entgegengesetzen Vorzeichens um die zweite Querachse erzeugen, so kann gemäß einer weiteren Ausgestaltung der Erfindung für diesen Fall Stabilität und Ausrichtung um beide Querachsen in gleicher Weise dadurch sichergestellt werden, daß mit jedem Stelleingriff um die erste Querachse gleichzeitig auch durch entsprechende Ansteuerung der Stellglieder für die zweite Querachse ein Momenteninkrement entgegengesetzten Vorzeichens um diese Querachse erzeugt wird. Dieser Fall ist in Figur 6a schematisch eingezeichnet und entspricht der Position 2 des Doppel-Umschalters 607 ,617. Physikalisch gesehen entspricht dies bei gleichen Momenteninkrementen einem effektiven Schrägstellungswinkel der Stellglieder für die erste Querachse von 45°, und alle im Zusammenhang mit früheren entsprechenden Anführungsbeispielen angestellten Überlegungen behalten ihre Gültigkeit.

In Figur 6b ist das Funktionsschaltbild einer anderen Ausführungsform der vorliegenden Erfindung gezeigt, das die wesentlichen Merkmale der Vorrichtungen nach den Figuren 5c und 6a und somit deren Vorteile miteinander verbindet. In einem bereits beschriebenen Drall- und Störgrößenbeobachter 504 werden z.B. nach dem Algorithmus von Gleichung (4a) Schätzwerte der Komponenten des Raumfahrzeug-dralls ($\hat{H}_Z$, $\hat{H}_X$) und des Konstantanteils $\hat{T}_{DXO}$ sowie periodischer Störanteile gebildet, von denen hier wiederum der Einfachheit halber nur die Komponenten der ersten Harmonischen ($\hat{T}_{Dx1}$, $\hat{T}_{Dx2}$) gezeigt sind. Die Drallkomponente in Richtung der zweiten Fahrzeugquerachse ($H_Z$) wird jedoch unter Bezug auf die zu Figur 6a gemachten Ausführungen über einen passenden Verstärkungsfaktor $K_{HZ}$ im Sinne eines Zustandsreglers 608 und eine Totzone 603 zur Erzeugung von Stelleingriffen um die zweite Querachse (Z-Achse) mittels eines Modulators 604 eingesetzt. Anstelle eines im Drall- und Störbeobachter 504 gebildeten Schatzwertes für diese Drallkomponente ($H_z$) kann auch die diesem proportionale Ausgangsgröße $\phi_O$ des ersten Reglernetzwerks 401 direkt verwendet werden, was insbesondere dann vorteilhaft ist, wenn die Beobachtergleichungen (4a) als aquivalente Übertragungsfunktionen realisiert werden. Diese Moglichkeit wird im vorliegenden Fall zur Erzeugung der zweiten Drallkomponente $H^*_X$ aus dem Ablagesignal ($\psi_O$) über ein drittes Reglernetzwerk 601 und einen Proportionalitätsfaktor $1/H_Y$ angewandt. Solange Lagereferenz bezüglich der zweiten Querachse verfügbar ist, wird die so gebildete Größe zur Erzeugung von Stelleingriffen um die erste Querachse über einen Zustandsregler 609 und eine Totzone mit X-Modulator 506 herangezogen, da sie gleichwertige, auf einer direkten Messung beruhende Werte liefert. Geht jedoch die Lagereferenz für die zweite Querachse zeitweise verloren, so wird auf die Schätzwerte $\hat{H}_X$ aus dem Drall- und Störgrößenbeobachter 504 zurückgegriffen, was in Figur 6b mit einem Umschalter 611 (Position 2) angedeutet ist. Die Vorrichtung nach Figur 6b ist in der bereits beschriebenen Weise mit Störgrößenspeichern 511, 612 ausgestattet, deren Werte ($\hat{T}^*_{DXO}$, $\hat{T}^*_{DX1}$, $\hat{T}^*_{DX2}$) in Zustandsreglern 608, 609 zur Störgrößenkompensation mit verarbeitet werden. In den Figuren 6b und 5c wurden bei der Störgrößenkompensation die beiden Komponenten des harmonischen Störanteils ($\hat{T}_{DX1}$, $\hat{T}_{DX2}$), die ja Sinus- bzw. Cosinuskomponenten der ersten Harmonischen einer Fourierzerlegung darstellen, wegen ihrer Phasenverschiebung gegeneinander auch in den zueinander orthogonalen Achsen aufgeschaltet.

Figur 6c zeigt eine vorteilhafte weitere Ausgestaltung der vorliegenden Erfindung. Ihr liegt die Erkenntnis zu Grunde, daß bei wenigstens zeitweiliger Verfügbarkeit von Meßwerten für die Abweichung von der Sollorientierung um die zweite Querachse auch eine Identifikation und Kompensation der auf diese Achse einwirkenden äußeren Störungen möglich sein muß, zumindest was ihre konstanten- ($\hat{T}_{DZO}$) und ihre langsam veränderlichen periodischen Anteile ($\hat{T}_{DZ1}$, $\hat{T}_{DZ2}$) betrifft. Zu deren Bestimmung dient im vorliegenden Ausführungsbeispiel ein erweiterter Drall- und Störgrößenbeobachter 606 , dem als Eingangssignale beide für die Bahnbewegung repräsentativen, über ein erstes Reglernetzwerk 401 und ein drittes Reglernetzwerk 601 gewinnbaren, aufbereiteten Meßgrößen $\phi_O$, $\psi_O$ zugeführt werden. Zu diesem Zweck muß der zur Drall- und Störgrößenschatzung dienende Algorithmus oder die diesem äquivalente Darstellung durch Übertragungsfunktionen und/oder Netzwerke nach Gleichung (4a) entsprechend um drei Ordnungen erweitert werden. Diese Vorgehensweise ist jedem Fachmann geläufig und führt in der den Gleichungen (4a) und (4b) entsprechenden Zustandsdarstellung auf ein System von acht Gleichungen mit dem Zustandsvektor

$$X = [\hat{H}_X, \hat{H}_Z, \hat{T}_{DXO}, \hat{T}_{DX1}, \hat{T}_{DX2}, \hat{T}_{DZO}, \hat{T}_{DZ1}, \hat{T}_{DZ2}]^T \qquad (6a)$$

sowie einem Innovationsterm der Form

$$\begin{bmatrix} k_{11}, k_{21}, k_{31}, k_{41}, k_{51}, k_{61}, k_{71}, k_{81} \\ k_{12}, k_{22}, k_{32}, k_{42}, k_{52}, k_{62}, k_{72}, k_{82} \end{bmatrix}^T \cdot \begin{bmatrix} (|H_Y|\phi_O & +\hat{H}_Z) \\ (|H_Y|\psi_O & -\hat{H}_X) \end{bmatrix} \qquad (6b)$$

EP 0 333 808 B1

und dem der Gleichung (4b) entsprechenden Regelgesetz

$$\begin{bmatrix} \eta_X \\ \eta_Z \end{bmatrix} = \begin{bmatrix} K_{HX}, K_{DXO}, K_{DX1}, K_{DX2} \\ K_{HZ} \ H_{DZO} \ K_{DZ1} \ K_{DZ2} \end{bmatrix} \cdot \begin{bmatrix} \hat{H}_X \ \hat{H}_Z \\ \hat{T}_{DXO} \ \hat{T}_{DZO} \\ \hat{T}_{DX1} \ \hat{T}_{DZ1} \\ \hat{T}_{DX2} \ \hat{T}_{DZ2} \end{bmatrix} \qquad (6 \ c)$$

Im Regelgesetz (Gleichung 6c) und der zugehörigen Figur 6c wird wiederum pro Achse nur eine Komponente des harmonischen Störanteils ($\hat{T}_{DX1}$, $\hat{T}_{DZ1}$) verwendet, da sich bei Vorhandensein einer ersten Harmonischen diese Anteile ergänzen. Wird der Störbeobachter so ausgelegt, daß er in wesentlich kürzerer Zeit als einer halben Umlaufperiode einschwingt, und wird insbesondere von Störgrößenspeichern 511, 618 Gebrauch gemacht, so können auch Anteile höherer Harmonischer mit erfaßt und kompensiert werden.

Für die Störgrößenspeicherung genügt es, bei der Realisierung pro Umlaufperiode eine gewisse Anzahl, z.B. zwanzig oder dreißig, Werte mit ihrer Zeitzuordnung festzuhalten, die repräsentative Mittelwerte über zugeordnete Zeitintervalle darstellen, und zwischen denen für die Aufschaltung zum jeweils gultigen Zeitpunkt numerisch interpoliert werden kann. In Figur 6c ist wiederum angedeutet, daß bei Verlust der Lagereferenz um eine zweite Querachse (Z-Achse), was bei üblichen Meßgliedern durch ein logisches Signal angezeigt wird, die Schätzwerte der auf die zweite Querachse wirkenden Störmomente über einen Schalter 615 abgeschaltet werden müssen, da diese Größen dann nicht beobachtbar sind. Für die Regleraufschaltwerte ($\hat{T}^*_{DZO}$, $\hat{T}^*_{DZ1}$) am Ausgang des Störgrößenspeichers 618 werden erfindungsgemäß die letzten auf gültiger Schätzung beruhenden Störgrößen für den folgenden Zeitraum so lange konstant gehalten, bis wieder sensorgestützte, gültige Schätzwerte vorliegen oder aufgrund des vorhergenden Funktionsverlaufs nach dem zutreffenden Sinus-Kosinus-Gesetz ergänzt . Es empfiehlt sich ferner, die Verweildauer eines Satelliten in der vorher bekannten Erdschattenphase, wo die Solardruckmomente verschwinden, durch entsprechend vorprogrammierte Zustandsänderungen in der Störgrößenschätzung zu berücksichtigen.

In Figur 6d ist ein letztes Ausführungsbeispiel der vorliegenden Erfindung gezeigt, das sich von dem der vorhergehenden Figur 6c lediglich durch eine Aufspaltung des Drall- und Störgrößenbeobachters 606 in je einen Drall- und Störgrößenbeobachter 613, 504 pro Querachse unterscheidet. Für jede dieser Einheiten gilt die Form der Matrizengleichung (4a). Diese Ausführungsform empfiehlt sich insbesondere für die Realisierung in digitalen Bordrechnern, da die Komplexität gegenüber einem vollständigen Drall- und Störgrößenbeobachter 606 für beide Achsen (nach Figur 6c) wegen der niedrigeren Ordnung geringer ist und für die zweite Achse lediglich wiederholter Aufruf eines identischen Programmteils mit anderen numerischen Werten und EIngangs-Ausgangs-Größen erforderlich ist. Eine weitere Vereinfachung ergibt sich, wie bereits erwähnt, wenn in jeder Querachse statt eines Schätzwertes der Drallkomponenten $\hat{H}_X$, $\hat{H}_Z$ der jeweilige, die Bahnbewegung repräsentierende Signalanteil $\phi_O$ , $\psi_O$ oder dessen Drall-Aquivalent ($\hat{H}_X^*$, $\hat{H}_Z^*$) direkt verwendet und nur der jeweils zweite Anteil geschatzt wird. Auch in diesem Fall wird eine Umschaltung der in Richtung einer ersten Querachse weisenden Drallkomponente ($H_X$) bei Verlust der Lagereferenz um die zweite Querachse sowie eine Abschaltung der Störgrößen- Schätzwerte über die angedeuteten Schalter 611, 615 erforderlich.

Aus den Figuren 7a bis 7c wird die schrittweise Verbesserung des dynamischen Verhaltens der Querachsenbewegungen eines dreiachsenstabilisierten Satelliten der betrachteten Art bei Anwendung der verschiedenen Ausführungformen von Vorrichtungen zur Lageregelung gemäß der vorliegenden Erfindung ersichtlich. Für ein typisches Raumfahrzeug entsprechend Figur 1a und einer Komponentenanordnung nach Figur 1c wurden unter Beibehaltung der charakteristischen Systemparameter und Störmomentenprofile die beschriebenen Regleralgorithmen realisiert und bezüglich ihrer Funktionfähigkeit überprüft. Die Bewegung der quer zum gespeicherten Drall $H_Y$ und orthogonal zueinander angeordneten Fahrzeugachsen X, Z über eine volle Bahnumlaufperiode wurde in der üblichen Darstellung in Abhängigkeit voneinander in einem karthesischen Koordinatensystem aufgezeichnet, wie es bereits zur Erläuterung der dynamischen Vorgänge in den Figuren 4c und 4d herangezogen wurde. Die Eulerwinkel $\phi$, $\psi$ stellen Winkelabweichungen der Fahrzeugroll- bzw. Gierachse von ihren Sollwerten, d.h. den idealen Ausrichtungen eines mitgeführten Bahnkoordinatensystems gemäß Figur 1a dar. Die Kurven sind wieder in anschaulicher Weise als die Bewegungen der Spitze des Raumfahrzeugdrallvektors in der Umlaufebene interpretierbar.

22

Das Simulationsergebnis nach Figur 7a bezieht sich auf eine Vorrichtung gemäß Figur 3., Für den Fachmann ist die Verbesserung bezuglich energieoptimaler Stelleingriffe daraus erkennbar, daß Stelleingriffe dann und nur dann erfolgen, wenn die gemessene Ablage der ersten Querachse (X-Achse) von ihrer Sollrichtung die im Modulator eingebauten Ansprechschwellen ($\pm$ $h_E$, Figur 3) erreicht, die im vorliegenden Fall auf Werte von $\pm$ 0.6° eingestellt wurden, wegen des den Ablagesignalen überlagerten, systembedingten Rauschens jedoch in der Regel bereits bei Ausrichtfehlern von $\pm$ 0.5° Stelleingriffe auslöst. Bei herkömmlichen Regelsystemen dieser Art treten auch Stelleingriffe innerhalb des Totzonebereiches auf, die durch die beschriebene Nutationsdämpfungslogik (Figur 2) ausgelöst werden und durch abrupte Änderungen der Nutationsbewegung innerhalb des besagten Totzonebereichs erkennbar wären.

Das durch eine Vorrichtung gemäß Figur 4a erzeugte dynamische Verhalten ist in Figur 7b dargestellt. Die Funktionsweise dieser erfindungsgemäßen Vorrichtung ist deutlich daran erkennbar, daß die mittlere Ausrichtgenauigkeit bezüglich einer ersten Fahrzeugquerachse (X-Achse), die ja nach den gemachten Ausführungen im Mittelpunkt der jeweiligen Nutationskreise liegt, $\pm$ 0.3° beträgt, d.h. also doppelt so gut ist wie im Fall der Figur 7a . Die Genauigkeitsverbesserung der Folgeregelung um die erste Querachse hat, wie deutlich erkennbar, eine wesentliche Verbesserung der Ausrichtgenauigkeit um die zweite, über die Drallkopplung mitgeführte Querachse, die Gier- oder Z-Achse zur Folge. Diese Wirkung wird mit der erfindungsgemäßen Vorrichtung ohne den geringsten Mehraufwand an Stellenergie erreicht.

Figur 7c zeigt das Simulationsergebnis einer weiteren Ausgestaltung der Erfindung entsprechend Figur 6d . Dabei wurde angenommen, daß während einer Dauer von vier Stunden für einen Satelliten auf geostationärer Umlaufbahn keine Lagereferenz bezüglich der zweiten Querachse verfügbar ist und die Störmomente wahrend dieses Zeitraums in der beschriebenen Weise auf den letzten gültigen Schätzwerten konstant gehalten werden. Wie aus Figur 7c ersichtlich, ist die erzielbare Ausrichtgenauigkeit bezüglich der zweiten Querachse ($\psi$) außerordentlich hoch und trotz des Informationsausfalls für die zweite Querachse (Z-Achse) über den genannten Zeitraum mit der der ersten Querachse ($\phi$) durchaus vergleichbar.

Mit der vorliegenden Erfindung sind dem Fachmann eine Reihe neuartiger Möglichkeiten zur Sollwertregelung und Stabilisierung von frei beweglichen Körpern mit gespeichertem Drall an die Hand gegeben, die in den verschiedenen Ausführungsformen die Erfüllung der jeweils gestellten Anforderungen ohne gerätetechnischen Mehraufwand in energieoptimaler Weise ermöglichen.

Die detaillierte Beschreibung der physikalischen Zusammenhänge, die den Erfindungsgedanken zu Grunde liegen, und ihre Ausgestaltung in den verschiedenen Ausführungsformen versetzt den Fachmann darüber hinaus in die Lage, für den jeweiligen Anwendungsfall entsprechende Anpassungen, gegebenenfalls auch Modifikationen der Datenaufbereitungsalgorithmen und Regelgesetze vorzunehmen. Beispielsweise wurde der in verschiedenen Ausbaustufen erläuterte Nutationsmeß- und Regelzweig mit den Funktionselementen 402 , 403 , 407 bis 410 in den Figuren 4a , 5a und 508 bis 510 in den Figuren 5a bis 5c bzw. 610 in den Figuren 6a bis 6d grundsätzlich auf der Bildung eines Winkelgeschwindigkeitssignals $w_X$, $w_Z$ für die Nutationsbewegung des Raumfahrzeuges aufgebaut, was bei Ableitung einer solchen Größe aus einem Lagemeßsignal ($\epsilon_\phi$) die Realisierung eines Differenziergliedes 407 oder zumindest eines Hochpaßgliedes mit differenzierenden Eigenschaften im Frequenzbereich der Nutationsschwingung erforderlich macht. In Anbetracht der bereits erwähnten Verschlechterung der Signal-Rausch-Verhältnisse durch eine solche Maßnahme empfiehlt sich diese Vorgehensweise nur dann, wenn die den (Ablage-) Meßsignalen überlagerten, hochfrequenten Störungen (Sensorrauschen) noch in einem tragbaren Verhältnis zur Nutzsignalamplitude stehen. Zwar kann man durch ebenfalls bereits erwähnte zusätzliche Maßnahmen, insbesondere nichtlineare Filter mit geringem Phasenverlust die Signal-Rausch-Verhältnisse wieder verbessern, doch führt in einem solchen Fall eine einfache Umgestaltung dieses Signalpfades mit geringerem Aufwand zu gleichen, wenn nicht sogar besseren Ergebnissen. Wenn nämlich der besagte Signalaufbereitungs- und Regelzweig von Winkelgeschwindigkeitssignalen $w_X$, $w_Z$ in Lagewinkelsignale ($\phi_N$, $\psi_N$) übersetzt wird, was durch eine sinngemäße Anpassung des Nutationsbeobachters und Amplituden-Phasen-Wandlers ohne Schwierigkeiten möglich ist, so entfällt das Differenzierglied 407 vollständig und entsprechend auch seine nachteilige Auswirkung auf das Störrauschen. Die Matrizengleichung (3c) für den vollständigen Nutationsbeobachter (408, 508 je nach Ausführungsform) erhält dann die Form (3c*):

$$
\begin{bmatrix} \dot{\hat{\phi}}_N \\ \dot{\hat{\psi}}_N \end{bmatrix} = \begin{bmatrix} 0 & -\frac{1}{I_x}\left[(I_Y-I_Z)w_o - H_Y\right] \\ -\frac{1}{I_z}\left[(I_X-I_Y)w_o + H_Y\right] & 0 \end{bmatrix} + \begin{bmatrix} k_1^* \\ k_2^* \end{bmatrix}\left[\phi_N - \hat{\phi}_N\right]
$$

$$
+ \begin{bmatrix} -\frac{1}{H_Y}T_{cz} \\ \frac{1}{H_Y}T_{cx} \end{bmatrix} \qquad (3c^*)
$$

Mit:

$\phi_N$   - dem für die Nutationsbewegung repräsentativen Lageanteil des Meßsignals als Eingangsgröße und

$\hat{\phi}_N$, $\hat{\psi}_N$   - den Schätzwerten für die Rollwinkelkomponente ($\phi_N$) und Gierwinkelkomponente ($\psi_N$) der Nutationsschwingung als Ausgangsgrößen.

Die optimalen Aufschaltfaktoren dieses Beobachters ($k_1^*$, $k_2^*$) erhalten dann in bekannter Weise entsprechend angepaßte physikalische Dimension und Zahlenwerte als in Gleichung (3c).

Die dem nachgeschalteten Amplituden-Phasen-Wandler zugrunde liegenden Rechenvorschriften für Betrag ($A_N^*$) und Phasenwinkel ($\beta_N^*$) nach den Gleichungen (3e) und (3f) lauten dann sinngemäß (3e*,3f*):

$$
A_N^* = \sqrt{\hat{\phi}_N^2 + \frac{I_Z}{I_X}\hat{\psi}_N^2} \qquad (3e^*)
$$

$$
\beta_N^* = \operatorname{arc} tg\left[\frac{\hat{\phi}_N}{-\sqrt{I_Z/I_X}\cdot\hat{\psi}_N}\right] \qquad (3f^*)
$$

Die Phasenbedingungen für die Erzeugung von Stellimpulsen (Gleichungen 3g und folgende sowie Tabellen 1 und 2) bleiben von der Modifikation unberührt. In analoger Weise wie vorstehend an den Rechenvorschriften für Nutationsbeobachter und Amplituden-Phasen-Wandler gezeigt, ist es dem Fachmann bei Kenntnis der erfindungsgemäßen Lehren auch möglich die logischen Bedingungen für das Auslösen von Stelleingriffen auf der Basis anders definierter, aber in ihrer Wirkung äquivalenter Eingriffskriterien zu formulieren. Dies kann zum Beispiel unter Zuhilfenahme der in den Figuren 4c und 6e angedeuteten Vektoren der Nutationsbewegungen ($A_{N1}$, $A_{N2}$ in Figur 4c) und der Drallverschiebungsvektoren

$$
\overrightarrow{O_1 O_2}
$$

in Figur 4c,

$$
\overrightarrow{P_I P_I}^* \quad und \quad \overrightarrow{P_V P_I}^*
$$

in Figur 6e) bzw. deren Vektorkomponenten in einem geeigneten, etwa dem dort gewählten Koordinatensystem geschehen.

Abschließend sei noch auf Möglichkeiten zur wesentlichen Erweiterung der Einsatzbereiche der erfindungsgemäßen Vorrichtung hingewiesen Bislang sind die Einsatzbereiche von Raumfahrzeugen der betrachteten Art an eine enge Umgebung der vorgegebenen Mission gebunden, die durch die erforderlichen Ausleuchtgebiete der Sende- und Empfangseinrichtungen und die entsprechende Anordnung der Antennen bezüglich der Achsen gekoppelt ist. In den meisten Fällen liegen die geforderten Ausleuchtgebiete auf der nördlichen Hemisphäre, und ihre Versorgung für den Nachrichtenverkehr zwischen Kontinenten, wie z.B.

Europa und USA, wird durch entsprechende, von Satelliten aus gesehen nordöstlich und nordwestlich gerichtete Antennenreflektoren sichergestellt. Raumfahrzeuge der gleichen Nutzlastkonfiguration können im Bedarfsfalle auch auf der südlichen Erdhalbkugel etwa unter gleicher geographischer Breite und Längendifferenz gelegene Ausleuchtgebiete z.B. in Afrika und Südamerika bedienen, wenn es möglich ist, solche Satelliten in einer, um die zum Erdmittelpunkt gerichtete Achse um 180° gedrehten Winkellage, d.h. "auf dem Kopf stehend" zu betreiben. Regelungssysteme für Fahrzeuge mit gespeichertem Drall der beschriebenen Art sind unter solchen Betriebsbedingungen nur dann stabil, wenn der gespeicherte Drall, bezogen auf das Satellitenkoordinatensystem, "umgepolt" und das Vorzeichen der Stelleingriffe um die jeweils zweite, über die Drallkopplung mitgeführte und/oder direkt geregelte Querachse umgekehrt wird. Dies ist in allen beschriebenen Ausgestaltungen der vorliegenden Erfindung ohne Schwierigkeiten dann möglich, wenn die um eine jeweils erste Querachse Stellmomente erzeugenden Stellglieder bewußt nicht so angeordnet sind, daß sie, z.B. durch Schrägeinbau, mit jedem Stelleingriff gleichzeitig auch Momentenkomponenten entgegengesetzten Vorzeichens um eine jeweils zweite Querachse liefern, sondern zur Erzeugung der Momenteninkremente um diese zweite Querachse die eigens dafür vorgesehenen Stellglieder eingesetzt und entsprechend des Vorzeichen des gespeicherten Dralls auch vorzeichenrichtig betätigt werden. Diese Möglichkeit wurde bereits im Zusammenhang mit des Ausführungsbeispiel nach Figur 6a erläutert. Bei Kenntnis der Lehren zum technischen Handeln gemäß der vorliegenden Erfindung bereitet es dem Fachmann keinerlei Schwierigkeiten, die sinngemäße Zuordnung der erforderlichen Stelleingriffe für die verschiedenen Ausführungsformen zu treffen. Als einfache Merkregel gilt, daß in einem Bahnkoordinatensystem gemäß Figur 1a der Momentenkoppelfaktor (215, Figur 2, 3) gleiches Vorzeichen haben muß wie die Y-Komponente des Raumfahrzeugdrallvektors $\underline{H}_Y$ und des Winkelgeschwindigkeitsvektors $\underline{W}_O$ der Bahnumlauffrequenz.

EP 0 333 808 B1

| Sektor (Fig.6e) | Ablagewinkel | | Drallablage | | Stelleingriff | | Optimaler Phasenwinkel |
| | $\phi_o$ | $\Psi_o$ | $H_z$ | $H_x$ | $\Delta T_{Gz}$ | $\Delta T_{cx}$ | $\gamma_o$ |
|---|---|---|---|---|---|---|---|
| I + V | $>+d_\phi$ | $>-d_\Psi$ | $<-d_{Hz}$ | $>-d_{Hx}$ | 0 | - | $2\pi - \alpha$ |
| II + VII | $<-d_\phi$ | $<+d_\Psi$ | $>+d_{Hz}$ | $<+d_{Hx}$ | 0 | + | $\pi - \alpha$ |
| III + VI | $<+d_\phi$ | $>+d_\Psi$ | $>-d_{Hz}$ | $>+d_{Hx}$ | - | 0 | $\dfrac{\pi}{2}$ |
| IV + VIII | $>-d_\phi$ | $<-d_\Psi$ | $<+d_{Hz}$ | $<-d_{Hx}$ | + | 0 | $\dfrac{3}{2}\pi$ |

Tabelle 1 zu Figur 5c

| Sektor (Fig.6e) | Ablagewinkel $\varphi_0$ | Drallablage $H_z$ | $H_x$ | Stelleingriff $T_{uz}$ | $T_{ux}$ | Optimaler Phasenwinkel $\delta_0$ |
|---|---|---|---|---|---|---|
| I | $\varphi > -d\varphi$, $\varphi_0 < +d\varphi$ | $H_z < -dH_z$ | $-dH_x < H_x < +dH_x$ | $+$ | $0$ | $\dfrac{3}{2}\pi$ |
| II | $\varphi < -d\varphi$, $\varphi_0 < d\varphi$ | $H_z > dH_z$ | $> -dH_x$, $< +dH_x$ | $-$ | $0$ | $\dfrac{\pi}{2}$ |
| III | $\varphi > -d\varphi$, $\varphi < +d\varphi$ | $H_z > -dH_z$, $< +dH_z$ | $H_x > dH_x$ | $0$ | $-$ | $2\pi - \alpha$ |
| IV | $\varphi > -d\varphi$, $\varphi < +d\varphi$ | $H_z > -dH_z$, $< +dH_z$ | $H_x < -dH_x$ | $0$ | $+$ | $\pi - \alpha$ |
| V | $\varphi > +d\varphi$ | $H_z < -dH_z$ | $H_x > +dH_x$ | $+$ | $-$ | $\dfrac{7}{4}\pi - \alpha$ |
| VI | $\varphi < -d\varphi$ | $H_z > dH_z$ | $H_x > dH_x$ | $-$ | $-$ | $\dfrac{\pi}{4} - \alpha$ |
| VII | $\varphi < -d\varphi$ | $H_z > dH_z$ | $H_x < -dH_x$ | $-$ | $+$ | $\dfrac{3}{4}\pi - \alpha$ |
| VIII | $\varphi > d\varphi$ | $H_z < -dH_z$ | $H_x < -dH_x$ | $+$ | $+$ | $\dfrac{5}{4}\pi - \alpha$ |

Tabelle 2 (zu Figur 6a – 6e)

## Patentansprüche

1. Vorrichtung zur Lageregelung eines frei um seine rotatorischen Achsen beweglichen, drallbehafteten, elastischen Raumfahrzeuges bezüglich zweier, zueinander und zur Drallachse senkrecht orientierter, fahrzeugfester Querachsen, mit einem die Abweichung von der Sollorientierung des Raumfahrzeuges um eine erste der beiden Querachsen messenden Lagesensor, Reglern, einem Modulator und einem, um beide Querachsen Stellmomente erzeugenden Stellglied oder mehreren, insgesamt um beide Querachsen Stellmomente erzeugenden Stellgliedern, **dadurch gekennzeichnet**, daß dem ein Meßsignal für die Abweichung ($\epsilon_\phi$) um die erste Querachse (X-Achse) abgebenden Lagesensor einerseits ein erstes, einen für eine erste Komponente der Bahnbewegung repräsentativen Signalanteil ($\phi_O$) erzeugendes Reglernetzwerk (401), ein Drallregler (404), ein Totzoneglied (405) und ein nach Vorzeichen, Pulsfrequenz und Pulsdauer variable Steuerimpulse ($\Delta t_{CX}$) erzeugender Modulator (406) und andererseits ein zweites, einen für die Nutationsbewegung repräsentativen Signalanteil ($\phi_N$) erzeugendes Reglernetzwerk (402), ein Differenzierglied (407), ein Nutationsbeobachter (408) und ein Amplituden-Phasen-Wandler (409) nachgeschaltet sind und ein die Ausgangssignale ($A_N, \beta_N$) des Amplituden-Phasen-Wandlers (409) mit den vom Modulator (406) abgegebenen Steuerimpulsen ($\Delta t_{CX}$) verknüpfender Nutationsregler (410) vorhanden ist, der mit Hilfe der Ausgangssignale ($A_N$, $\beta_N$) den oder die Zeitpunkte für den oder die innerhalb der jeweiligen Nutationsperiode vorzunehmenden, durch die Steuerimpulse ($\Delta t_{CX}$) bestimmten Stelleingriffe festlegt.

2. Vorrichtung zur Lageregelung eines frei um seine rotatorischen Achsen beweglichen, drallbehafteten, elastischen Raumfahrzeuges bezüglich zweier zueinander und zur Drallachse senkrecht orientierter, fahrzeugfester Querachsen, mit einem oder mehreren, die Abweichungen von den Sollorientierungen des Raumfahrzeuges um beide Querachsen messenden Lagesensoren, Reglern, Modulatoren und einem, um beide Querachsen Stellmomente erzeugenden Stellglied oder mehreren, insgesamt um beide Querachsen Stellmonente erzeugenden Stellgliedern, **dadurch gekennzeichnet**, daß

einem das Meßsignal für die Abweichung ($\epsilon_\phi$) um eine erste Querachse (X-Achse) aufnehmenden, einen für eine erste Komponente der Bahnbewegung repräsentativen Signalantell ($\phi_O$) erzeugenden, ersten Reglernetzwerk (401) ein erster Drallregler (404), eine erste Totzone (405) und ein Steuerimpulse ($\Delta t_{CZ}$) für Stelleingriffe um eine zweite Querachse (Z-Achse) erzeugender, zweiter Modulator (604) nachgeschaltet sind,

einem das Meßsignal für die Abweichung ($\epsilon_\psi$) um eine zweite Querachse (Z-Achse) aufnehmenden, einen für eine zweite Komponente der Bahnbewegung repräsentativen Signalanteil ($\psi_O$) erzeugenden, dritten Reglernetzwerk (601) ein zweiter Drallregler (602), ein zweites Totzoneglied (603) und ein Steuerimpulse ($\Delta t_{CX}$) für Stelleingriffe um eine erste Querachse (X-Achse) erzeugender, erster Modulator (605) nachgeschaltet sind,

einem ebenfalls das Meßsignal für die Abweichung ($\epsilon_\phi$) um die erste Querachse (X-Achse) aufnehmenden, einen für die Nutationsbewegung repräsentativen Signalanteil ($\phi_N$) erzeugenden, zweiten Reglernetzwerk (402) ein Differenzierglied (407), ein Nutationsbeobachter (508) und ein Amplituden-Phasen-Wandler (509) nachgeschaltet sind

und ein die Ausgangssignale ($A_N$, $\beta_N$) des Amplituden-Phasen-Wandlers (509) mit den Vom ersten und zweiten Modulator (605, 604) abgegebenen Steuersignalen ($\Delta t_{CX}$, $\Delta t_{CZ}$) verknüpfender Nutationsregler (610) vorhanden ist, der mit Hilfe der Ausgangssignale ($A_N$, $\beta_N$) den oder die Zeitpunkte für den oder die innerhalb der jeweiligen Nutationsperiode vorzunehmenden, durch die Steuerimpulse bestimmten Stelleingriffe um die erste und/oder zweite Querachse festlegt.

3. Vorrichtung nach Anspruch 1 oder 2, **dadurch gekennzeichnet**, daß anstelle des zweiten Reglernetzwerkes (402) ein Summierglied (403) vorhanden ist, welches vom Meßsignal für die Abweichung ($\epsilon_\phi$) um die erste Querachse (X-Achse) den für die erste Komponente der Bahnbewegung repräsentativen, vom ersten Reglernetzwerk (401) erzeugten Signalanteil ($\phi_O$) subtrahiert und ausgangsseitig mit dem Differenzierglied (407) verbunden ist.

4. Vorrichtung nach einem der Ansprüche 1 bis 3, dadurch gekennzeichnet, daß als erste Reglernetzwerke (401) Tiefpaßfilter und als zweite Reglernetzwerke (402) Filter mit Hochpaßcharakter verwendet sind.

5. Vorrichtung nach einem der Ansprüche 1 bis 4, **dadurch gekennzeichnet**, daß Modulatoren (406, 604, 605) verwendet sind, die erste und zweite Ansprechschwellen ($\pm d_1$, $\pm d_2$, $|d_2|>|d_1|$) aufweisen und Impulsfolgen erzeugen, deren Folgefrequenz konstanter Minimal-Impulse nach Überschreiten der ersten Ansprechschwelle ($\pm d_1$) und deren Pulsbreite ($\Delta t_{CX}$, $\Delta t_{CZ}$) bei konstanter Maximal-Folgefrequenz nach Überschreiten der zweiten Ansprechschwelle ($\pm d_2$) jeweils proportional zum Modulator-Eingangssignal ist.

6. Vorrichtung nach einem der Ansprüche 1 bis 5, **dadurch gekennzeichnet**, daß als erste und/oder zweite Drallregler (404, 602) einfache Verstärkungsfaktoren, Vorhaltglieder erster oder zweiter Ordnung, PID-Regler und/oder der Schätzung von Komponenten des Fahrzeugdralls ($\hat{H}_X$, $\hat{H}_Z$) und/oder konstanter bzw. periodischer Störmomentenkomponenten (z.B. $\hat{T}_{DXO}$, $\hat{T}_{DX1}$, $\hat{T}_{DX2}$) des Fahrzeugs dienende Beobachteralgorithmen oder diesen äquivalente Übertragungsfunktionen bzw. Netzwerke verwendet sind.

7. Vorrichtung nach einem der Ansprüche 1 bis 6, **dadurch gekennzeichnet**, daß ein Amplituden-Phasen-Wandler (409, 509) verwendet ist, der die Nutationsamplitude $A_N$ und den Phasenwinkel der Nutation $\beta_N$ nach den folgenden Vorschriften berechnet:

$$A_N = \sqrt{\frac{\hat{\omega}_X^2}{\omega_N^2} + \frac{\hat{\omega}_Z^2}{\omega_N^2} \cdot \frac{I_Z}{I_X}}$$

$$\beta_N = \text{arctg} \frac{\hat{\omega}_Z}{\hat{\omega}_X} \sqrt{\frac{I_Z}{I_X}}$$

wobei $\hat{\omega}_X$, $\hat{\omega}_Z$ die Ausgangssignale des Nutationsbeobachters (408, 508), $\omega_N$ die Nutationsfrequenz und $I_Y$, $I_Z$ die Querachsenträgheitsmomente bedeuten.

8. Vorrichtung nach einem der Ansprüche 1 bis 6, **dadurch gekennzeichnet**, daß ein Amplituden-Phasen-Wandler (409, 509) verwendet ist, der die Nutationsamplitude $A_N$ und den Phasenwinkel der Nutation $\beta_N$ nach den folgenden Vorschriften berechnet:

$$A_N = \sqrt{\hat{\omega}_X^2 + \hat{\omega}_Z^2}$$

$$\beta_N = \text{arctg} \frac{\hat{\omega}_Z}{\hat{\omega}_X}$$

wobei $\hat{\omega}_X$, $\hat{\omega}_Z$ die Ausgangssignale des Nutationsbeobachters (408, 508) sind.

9. Vorrichtung nach einem der Ansprüche 1 bis 8, **dadurch gekennzeichnet**, daß ein Nutationsregler (410, 610) verwendet ist, der den Zeitpunkt für einen Stelleingriff innerhalb einer Nutationsperiode nach den folgenden Vorschriften bestimmt:

$$\gamma_0 + \Delta\gamma - \Delta\beta \leq \beta_N(t) \leq \gamma_O + \Delta\gamma + \Delta\beta$$

sofern gilt:

$$\frac{1}{2} \leq \frac{A_N}{\Delta P} \leq \frac{3}{2} \text{ ,}$$

anderenfalls:

$$\gamma_O - \Delta\beta \leq \beta_N(t) \leq \gamma_O + \Delta\beta,$$

wobei $A_N$, $\beta_N$ die Nutationsamplitude und den Phasenwinkel der Nutation, $\Delta P$ das auf den Fahrzeugdrall normierte Drallinkrement des minimal möglichen Stelleingriffs, $\pm \Delta\beta$ den als Winkel bereich ausgedrückten Toleranzbereich für den Zeitpunkt des Stelleingriffs und $\gamma_O$ die Wirkungsrichtung eines durch einen Stelleingriff erzeugten Drallinkrements in der Bahnebene, bezogen auf den Nutations-Anfangswinkel $\beta_N$, bedeuten und ferner gilt:

$$\Delta\gamma(t) = \text{arc cos } \left(\frac{A_N}{2\Delta P} + \frac{3\Delta P}{8A_N}\right),$$

oder näherungsweise:

$$\Delta\gamma(t) = \sqrt{1 - \left(\frac{A_N}{2\Delta P} + \frac{3\Delta P}{8A_N}\right)^2}$$

10. Vorrichtung nach einem der Ansprüche 1 bis 8, **dadurch gekennzeichnet**, daß ein Nutationsregler (410, 610) verwendet ist, der die Zeitpunkte für die Erzeugung zweier optimaler Stelleingriffe $\beta_{N1}$, $\beta_{N2}$ innerhalb einer Nutationsperiode nach den folgenden Vorschriften bestimmt:

$$\gamma_O - \Delta\gamma_1 - \Delta\beta \leq \beta_{N1}(t) \leq \gamma_O - \Delta\gamma_1 + \Delta\beta$$

für den ersten Stelleingriff, sofern gilt: $A_N \leq 2\Delta P$,
und:

$$\gamma_O - \Delta\beta \leq \beta_{N2}(t) \leq \gamma_O + \Delta\beta$$

für den zweiten Stelleingriff, wobei $A_N$, $\beta_N$ die Nutationsamplitude und den Phasenwinkel der Nutation, $\Delta P$ das auf den Fahrzeugdrall normierte Drallinkrement des minimal möglichen Stelleingriffs, $\pm \Delta\beta$ den als Winkel bereich ausgedrückten Toleranzbereich für den Zeitpunkt des Stelleingriffs und $\gamma_O$ die Wirkungsrichtung eines durch einen Stelleingriff erzeugten Drallinkrements in Bahnkoordinaten bedeuten und ferner gilt:

$$\Delta\gamma_1 = \text{arccos } \left(\frac{A_N}{2\Delta P}\right)$$

bzw. für

$$A_N > 2\Delta P : \Delta\gamma_1 = 0.$$

11. Vorrichtung nach einem der Ansprüche 1 bis 10, **dadurch gekennzeichnet**, daß die Nutationsbeobachter (408, 508) und/oder Amplituden-Phasen-Wandler (409, 509) und/oder Nutationsregler (410, 610) durch Algorithmen entsprechende Netzwerke verkörpert sind.

12. Vorrichtung nach einem der Ansprüche 1 bis 11, **dadurch gekennzeichnet**, daß die Nutationsbeobachter (408, 508) und/oder Amplituden-Phasen-Wandler (409, 509) und/oder Nutationsregler (410, 610)

EP 0 333 808 B1

zur Aufnahme über zusätzliche Meßwerte und/oder funktionale Zusammenhänge gewinnbarer, systembedingt veränderlicher Parameter, wie gespeicherter Drall ($H_Y$) und/oder effektiv erzeugte Stellinkre-mente ($\Delta T_{CX}$, $\Delta T_{CZ}$), ausgelegt sind.

**13.** Vorrichtung nach einem der Ansprüche 1 bis 12, **dadurch gekennzeichnet**, daß der ausgangsseitig dem ersten und/oder dritten Reglernetzwerk (401, 601) folgende Drallregler als Schätzwerte konstanter und/oder periodischer Störmomentkomponenten ($\widehat{T}_{DXO}$, $\widehat{T}_{DX1}$, $\widehat{T}_{DX2}$, $\widehat{T}_{DZO}$, $\widehat{T}_{DZ1}$) bildender Drall- und Störgrößenbeobachter (504, 606, 613) mit nachgeschaltetem, den Störmomentkomponenten jeweils zugeordnete Verstärkungsfaktoren ($K_{DXO}$ usw.) enthaltendem Zustandsregler (505, 512, 608, 609, 614) ausgebildet ist.

**14.** Vorrichtung nach Anspruch 13, **dadurch gekennzeichnet**, daß dem Zustandsregler (505, 608, 609, 614) jeweils ein die Schätzwerte für die Störmomentkomponenten ($\widehat{T}_{DXO}$ usw.) aufnehmender Störgrößenspeicher (511, 612, 618) vorgeschaltet ist.

**15.** Vorrichtung nach Anspruch 14, **dadurch gekennzeichnet**, daß in den die Signale für die Schätzwerte der Störmomentkomponenten ($\widehat{T}_{DZO}$, $\widehat{T}_{DZ1}$) führenden Verbindungsleitungen zwischen dem auf das dritte Reglernetzwerk (601) folgenden Drall- und Störgrößenbeobachter (606, 613) und dem diesem nachgeschalteten Störgrößenspeicher (618) bei zeitweiligem Verlust der der zweiten Querachse zuge-ordneten Lagereferenz (Meßsignal $\epsilon_\psi$) die Verbindung unterbrechende Schalter (615) eingebaut sind.

**16.** Vorrichtung nach einem der Ansprüche 12 bis 15, **dadurch gekennzeichnet**, daß zumindest einer der Drall- und Störgrößenbeobachter (504, 606, 613) dazu ausgelegt ist, Schätzwerte ($\widehat{H}_Z$, $\widehat{H}_X$) für durch Abweichungen ($\epsilon_\phi$, $\epsilon_\psi$) von den Sollorientierungen um die erste und/oder zweite Querachse (X- bzw. Z-Achse) verursachte Komponenten des Fahrzeugdralls ($H_Z$, $H_X$) in Richtung der zweiten und/oder ersten Querachse zu bilden.

**17.** Vorrichtung nach Anspruch 16, **dadurch gekennzeichnet**, daß der Schätzwerte ($\widehat{H}_X$, $\widehat{H}_Z$) für beide Komponenten des Fahrzeugdralls bildende Drall- und Störgrößenbeobachter (504, 606) mit dem ersten und/oder zweiten Reglernetzwerk (401, 601) verbunden ist.

**18.** Vorrichtung nach Anspruch 1 oder 2, **dadurch gekennzeichnet**, daß zusätzliche, die Winkelgeschwindigkeit um mindestens eine der Querachsen messende Sensoren, z.B. Geschwindigkeitskreisel, vorhanden sind, die ausgangsseitig über Hochpaßfilter und/oder Nutationsbeobachter mit dem Amplituden-Phasen-Wandler verbunden sind.

## Claims

**1.** Device for the attitude control of an elastic spinning space vehicle which is freely movable around its rotary axes, relative to two fixed vehicular transverse axes which are oriented towards one another and perpendicularly to the spin axis, comprising an attitude sensor which measures the deviation from the space vehicle's ideal orientation around the first of the two transverse axes, regulators, a modulator and one control element which produces control moments around both transverse axes, or a plurality of control elements which produce overall control moments around both transverse axes, **characterised in that** the attitude sensor, which supplies a measuring signal for the deviation ($\epsilon_\phi$) around the first transverse axis (X-axis), has on the output side on the one hand a first regulator circuit (401) which produces a signal portion ($\phi_O$) which is representative of a first component of the orbital motion, a spin regulator (404), a dead zone section (405) and a modulator (406) producing control pulses ($\Delta t_{CX}$) which are variable according to sign, pulse frequency and pulse duration, and on the other hand a second regulator circuit (402) which produces a representative signal portion ($\phi_N$) for the nutation motion, a differentiating element (407), a nutation monitor (408) and an amplitude-phase converter (409), and that there is a nutation regulator (410), which combines the output signals ($A_N$, $\beta_N$) of the amplitude-phase converter (409) with the control pulses ($\Delta t_{CX}$) delivered by the modulator (406) and which, with the aid of the output signals ($A_N$, $\beta_N$), sets the moment(s) in time for control operation(s), which are to be carried out within the respective nutation period and which are determined by the control pulses ($\Delta t_{CX}$).

**2.** Device for the attitude control of an elastic spinning space vehicle which is freely movable around its rotary axes, relative to two fixed vehicular transverse axes which are oriented towards one another and

31

perpendicularly to the spin axis, comprising one or a plurality of attitude sensors which measure the deviation from the space vehicle's ideal orientation around both transverse axes, regulators, modulators and one control element, which produces control moments around both transverse axes, or a plurality of control elements, which produce overall control moments around both transverse axes, **characterised in that**

a first regulator circuit (401), which receives the measuring signal for the deviation ($\epsilon_\phi$) around a first transverse axis (X-axis) and which produces a signal portion ($\phi_O$) which is representative of a first component of the orbital motion, has on its output side a first regulator (404), a first dead zone (405) and a second modulator (604), which produces control pulses ($\Delta t_{CZ}$) for control operations around a second transverse axis (Z-axis),

a third regulator circuit (601), which receives the measuring signal for the deviation ($\epsilon_\psi$) around a second transverse axis (Z-axis) and which produces a signal portion ($\psi_O$) which is representative of a second component of the orbital motion, has on its output side a second spin regulator (602), a second dead zone section (603) and a first modulator (605), which produces control pulses ($\Delta t_{CX}$) for control operations around a first transverse axis (X-axis),

a second regulator circuit (402), which also receives the measuring signal for the deviation ($\epsilon_\phi$) around the first transverse axis (X-axis) and which produces a signal portion ($\phi_N$) which is representative of the nutation movement, has on the output side a differentiating element (407), a nutation monitor (508) and an amplitude-phase converter (509), and

a nutation regulator (610) is provided, which combines the output signals ($A_N$, $\beta_N$) of the amplitude-phase converter (509) with the control signals ($\Delta t_{CX}$, $\Delta t_{CZ}$) delivered by the first and second modulator (605, 604), which, with the aid of the output signals ($A_N$, $\beta_N$), sets the moment(s) in time for the control operation(s) around the first and/or second transverse axis, which are to be carried out within a respective nutation period.

3.   Device according to claim 1 or 2, **characterised in that** in place of the second regulator circuit (402) is provided a summation element (403), which subtracts from the measuring signal for the deviation ($\epsilon_\phi$) around the first transverse axis (X-axis) the signal portion ($\phi_O$), which is representative of the first component of the orbital motion and produced by the first regulator circuit (401), and which is at its output connected to the differentiating element (407.

4.   Device according to one of claims 1 to 3, **characterised in that** low-pass filters are used as first regulator circuits (401), and filters with high-pass characteristics as second regulator circuits (402).

5.   Device according to one of claims 1 to 4, **characterised in that** modulators (406, 604, 605) are used which have first and second response thresholds ($\pm d_1$, $\pm d_2$, $|d_2| > |d_1|$) and which produce pulse sequences, their sequential rate of constant minimum pulses after passing the first response threshold ($\pm d_1$) and the pulse width ($\Delta t_{CX}$, $\Delta t_{CZ}$) at constant maximum sequential rate after passing the second response threshold ($\pm d_2$) are respectively proportional to the modulator input signal.

6.   Device according to one of claims 1 to 5, **characterised in that** simple amplification factors, derivative elements of the first or second order, PID action controllers and/or monitoring algorithms serving the evaluation of components of the vehicle spin ($\hat{H}_X$, $\hat{H}_Z$) and/or of constant or periodic interference-moment components (for example $\hat{T}_{DXO}$, $\hat{T}_{DX1}$, $\hat{T}_{DX2}$) of the vehicle, or thereto equivalent transfer functions or circuits are used.

7.   Device according to one of claims 1 to 6, **charactarised in that** an amplitude-phase converter (409, 509) is used, which calculates the nutation amplitude $A_N$ and the phase angle of the nutation $\beta_N$ according to the following equations:

$$A_N = \sqrt{\frac{\hat{\omega}_X^2}{\omega_N^2} + \frac{\hat{\omega}_Z^2}{\omega_N^2} \cdot \frac{I_Z}{I_X}}$$

$$\beta_N = \text{arctg} \, \frac{\hat{\omega}_Z}{\hat{\omega}_X} \sqrt{\frac{I_Z}{I_X}}$$

where $\hat{\omega}_X$, $\hat{\omega}_Z$ represent the output signals of the nutation monitor (408, 508), $\omega_N$ the nutation frequency and $I_X$, $I_Z$ the transverse axis moment of inertia.

8. Device according to one of claims 1 to 6, **characterised in that** an amplitude-phase converter (409, 509) is used, which calculates the nutation amplitude $A_N$ and the phase angle of the nutation $\beta_N$ according to the following equations:

$$A_N = \sqrt{\hat{\omega}_X^2 + \hat{\omega}_Z^2}$$

$$\beta_N = \text{arctg} \, \frac{\hat{\omega}_Z}{\hat{\omega}_X}$$

where $\hat{\omega}_X$, $\hat{\omega}_Z$ represent the output signals of the nutation monitor (408, 508).

9. Device according to one of claims 1 to 8, **characterised in that** a nutation regulator (410, 610) is used, which determines the moment of time for a control operation within a nutation period according to the following equations:

$$\gamma_0 + \Delta\gamma - \Delta\beta \leq \beta_N(t) \leq \gamma_0 + \Delta\gamma + \Delta\beta$$

if:

$$\frac{1}{2} \leq \frac{A_N}{\Delta P} \leq \frac{3}{2} \, ,$$

otherwise:

$$\gamma_0 - \Delta\beta \leq \beta_N s(t) \leq \gamma_0 + \Delta\beta,$$

where $A_N$, $\beta_N$ represent the nutation amplitude and the phase angle of the nutation, $\Delta P$ the spin increment of the minimum control operation scaled to the vehicle spin , $\pm\Delta\beta$ the tolerance expressed as an angular range for the moment of time of the control operation, and $\gamma_0$ the effective direction of a spin increment produced by a control operation in the plane of the path, relative to the starting angle of the nutation $\beta_N$. Furthermore, the following applies:

33

$$\Delta\gamma(t) = \text{arc cos}\left(\frac{A_N}{2\Delta P} + \frac{3\Delta P}{8A_N}\right),$$

or approximately:

$$\Delta\gamma(t) = \sqrt{1 - \left(\frac{A_N}{2\Delta P} + \frac{3\Delta P}{8A_N}\right)^2}$$

**10.** Device according to one of claims 1 to 8, **characterised in that** a nutation regulator (410, 610) is used, which calculates the moments in time for producing two optimum control operations $\beta_{N1}$, $\beta_{N2}$ within a nutation period according to the following equations:

$$\gamma_0 - \Delta\gamma_1 - \Delta\beta \leq \beta_{N1}(t) \leq \gamma_0 - \Delta\gamma_1 + \Delta\beta$$

for the first control operation if: $A_N \leq 2\Delta P$ and

$$\gamma_0 - \Delta\beta \leq \beta_{N2}(t) \leq \gamma_0 + \Delta\beta$$

for the second control operation, where $A_N$, $\beta_N$ represent the nutation amplitude and the phase angle of the nutation, $\Delta P$ the spin increment scaled to the vehicle spin of a minimum control operation, $\pm\Delta\beta$ the tolerance expressed as an angular range for the moment of time of the control operation, and $\gamma_0$ the effective direction of a spin increment produced by a control operation in the path coordinates. Furthermore, the following applies:

$$\Delta\gamma_1 = \text{arccos}\left(\frac{A_N}{2\Delta P}\right)$$

or for $A_N > 2\Delta P : \Delta\gamma_1 = O$

**11.** Device according to one of claims 1 to 10, **characterised in that** the nutation monitor (408, 508) and/or amplitude-phase converters (409, 509) and/or nutation regulators (410, 610) are represented by circuits corresponding with algorithms.

**12.** Device according to one of claims 1 to 11, **characterised in that** the nutation monitors (408, 508) and/or amplitude-phase converters (409, 509) and/or nutation monitors (410, 610) are designed to receive parameters which are changeable due to the system, such as the stored spin ($H_Y$) and/or effectively produced control increments ($\Delta T_{CX}$ $\Delta T_{CZ}$), which are obtainable by means of additional measuring values and/or operational links.

**13.** Device according to one of claims 1 to 12, **characterised in that** the spin regulator on the output side of the first and/or third regulator circuit (401, 601) is arranged as a spin or interference volume monitor (504, 606, 613), which offers evaluating values of constant and/or periodical interference moment components ($\hat{T}_{DXO}$, $\hat{T}_{DX1}$, $\hat{T}_{DX2}$, $\hat{T}_{DZO}$, $\hat{T}_{DZ1}$), which has on its output side state controls (505, 512, 608, 609, 614) with amplification factors ($K_{DXO}$ etc.) which are associated with the respective interference moment components.

**14.** Device according to claim 13, **characterised in that** the state control (505, 608, 609, 614) is connected on its input to an interference volume store (511, 612, 618) which receives the evaluating values for the interference moment components ($\hat{T}_{DXO}$ etc.).

**15.** Device according to claim 14, **characterised in that** switches (615), which disconnect during temporary loss of the attitude reference (measuring signal $\epsilon_\psi$) which is associated with the second transverse axis, are placed in the connecting lines which duct the signals for the evaluation values of the interference moment components ($\hat{T}_{DZO}$, $\hat{T}_{DZ1}$) between the spin and interference volume monitor (606, 613) on the output side of the third regulator circuit (601) and the interference volume store (618) on the output side of the latter.

**16.** Device according to one of claims 12 to 15, **characterised in that** at least one of the spin and interference volume monitors (504, 606, 613) is designed to establish evaluation values ($\hat{H}_Z$, $\hat{H}_X$) for components of the vehicle spin ($H_Z$, $H_X$) in the direction of the second and/or first transverse axis as formed by deviations ($\epsilon_\phi$, $\epsilon_\psi$) from the ideal orientations around the first and/or second transverse axis (X- or Z-axis).

**17.** Device according to claim 16, **characterised in that** the spin and interference volume monitor (504, 606), which establishes evaluating values ($\hat{H}_X$, $\hat{H}_Z$) for both components of the vehicle spin, is connected to the first and/or second regulator circuit (401, 601).

**18.** Device according to claim 1 or 2, **characterised in that** additional sensors which measure the angular speed around at least one of the transverse axes, for example speed gyros, are provided which are on the output side connected via high-pass filters and/or nutation monitors to the amplitude-phase converter.

**Revendications**

**1.** Dispositif de réglage de la position d'un véhicule spatial élastique, animé d'un mouvement de rotation, librement mobile autour de ses axes de rotation, par rapport à deux axes transversaux fixes du véhicule perpendiculaires entre eux et à l'axe de rotation, comportant un détecteur de position qui mesure l'écart du véhicule spatial par rapport à l'orientation de consigne autour d'un premier axe parmi les deux axes transversaux, des dispositifs de réglage, un modulateur et un moyen de réglage qui produit des moments de réglage autour des deux axes transversaux ou plusieurs moyens de réglage qui produisent globalement des moments de réglage autour des deux axes transversaux, caractérisé par le fait qu'il est monté à la suite du détecteur de position qui détivre un signal de mesure de l'écart ($\epsilon_\phi$) autour du premier axe transversal (axe X), d'une part un premier circuit de réglage (401) qui produit une partie de signal ($\phi_O$) représentative d'une première composante du déplacement de la trajectoire, un moyen de réglage de rotation (404), un élément de zone neutre (405) et un modulateur (406) qui produit des impulsions de commande ($\Delta t_{CX}$) variables en fonction du signe, de la fréquence et de la durée d'impulsion et, d'autre part un deuxième circuit de réglage (402) qui produit une partie de signal ($\phi_N$) représentative du mouvement de nutation, un élément comparateur (407), un moyen d'observation de la nutation (408) et un convertisseur amplitude-phase (409) et par le fait qu'il est prévu un moyen de réglage de nutation (410) qui établit une relation entre les signaux de sortie ($A_N$, $\beta_N$) du convertisseur amplitude-phase (409) et les impulsions de commande ($\Delta t_{CX}$) délivrées par le modulateur (406), lequel moyen de réglage de nutation, à l'aide des signaux de sortie ($A_N$, $\beta_N$), détermine l'instant ou les instants pour le ou les réglages déterminés par les impulsions de commande ($\Delta t_{CX}$) qui doivent être effectués dans la période de nutation concernée,.

**2.** Dispositif de réglage de la position d'un véhicule spatial élastique, animé d'un mouvement de rotation, librement mobile autour de ses axes de rotation, par rapport à deux axes transversaux fixes du véhicule perpendiculaires entre entre eux et à l'axe de rotation, comportant un ou plusieurs détecteurs de position qui mesurent l'écart du véhicule spatial par rapport à l'orientation de consigne autour des deux axes transversaux, des dispositifs de réglage, des modulateurs et un moyen de réglage qui produit des moments de réglage autour des deux axes transversaux ou plusieurs moyens de réglage qui produisent globalement des moments de réglage autour des deux axes transversaux, caractérisé par le fait
qu'il est monté, à la suite d'un premier circuit de réglage (401) qui reçoit le signal de mesure pour l'écart ($\epsilon_\phi$) autour d'un premier axe transversal (axe X) et produit une partie de signal ($\phi_O$) représentative d'une première composante du déplacement de la trajectoire, un premier moyen de réglage de rotation (404), un premier élément à zone neutre (405) et un deuxième modulateur (604) qui produit des impulsions de commande ($\Delta t_{CZ}$) pour des réglages autour d'un deuxième axe transversal (axe Z),

qu'il est monté à la suite d'un troisième circuit de réglage (601) qui reçoit le signal de mesure pour l'écart ($\epsilon_\psi$) autour d'un deuxième axe transversal (axe Z) et produit une partie de signal ($\psi_O$) représentative d'une deuxième composante du déplacement de la trajectoire, un deuxième moyen de réglage de rotation (602), un deuxième élément à zone neutre (603) et un premier modulateur (605) qui produit des impulsions de commande ($\Delta t_{CX}$) pour des réglages autour d'un premier axe transversal (axe X),

qu'il est monté à la suite d'un deuxième circuit de réglage (402) qui reçoit également le signal de mesure pour l'écart ($\epsilon_\phi$) autour du premier axe transversal (axe X) et produit une partie de signal ($\phi_N$) représentative du mouvement de nutation, un élément comparateur (407), un moyen d'observation de la nutation (508) et un convertisseur amplitude-phase (509)

et par le fait qu'il est prévu un moyen de réglage de nutation (610) qui établit une relation entre les signaux de sortie ($A_N$, $\beta_N$) du convertisseur amplitude-phase (509) et les signaux de commande ($\Delta t_{CX}$, $\Delta t_{CZ}$) délivrés par les premier et deuxième modulateurs (605, 604), lequel moyen de réglage de nutation à l'aide des signaux de sortie ($A_N$, $\beta_N$) détermine l'instant ou les instants pour le ou les réglages déterminés par les impulsions de commande qui doivent être effectués autour du premier et/ou du deuxième axe transversal dans la période de nutation concernée.

3. Dispositif selon la revendication 1 ou 2, caractérisé par le fait qu'il est prévu, à la place du deuxième circuit de réglage (402), un élément additionneur (403) qui retranche du signal de mesure pour l'écart ($\epsilon_\phi$) autour du premier axe transversal (axe X) la partie de signal ($\phi_O$) représentative de la première composante du déplacement de la trajectoire produite par le premier circuit de réglage (401) et est relié côté sortie à l'élément comparateur (407).

4. Dispositif selon l'une des revendications 1 à 3, caractérisé par le fait que l'on utilise comme premiers circuits de réglage (401) des filtres passe-bas et comme deuxième circuits de réglage (402) des filtres à caractéristique passe-haut.

5. Dispositif selon l'une des revendications 1 à 4, caractérisé par le fait que l'on utilise des modulateurs (406, 604, 605) qui présente des premiers et seconds seuils de réaction ($\pm d_1$, $\pm d_2$, $|d_2|>|d_1|$ et produisent des séries d'impulsions dont la fréquence d'impulsion minimale constante, au delà du premier seuil de réaction ($\pm d_1$) et la largeur ($\Delta t_{CX}$, $\Delta t_{CZ}$) pour une fréquence maximale constante au delà du deuxième seuil de réaction ($\pm d_2$) est chaque fois proportionnelle au signal d'entrée du modulateur.

6. Dispositif selon l'une des revendications 1 à 5, caractérisé par le fait que l'on utilise comme premier et/ou deuxième moyen de réglage de rotation (404, 602) de simples facteurs d'amplification, des éléments à dérivation d'ordre un ou deux, des régulateurs PID et/ou des algorithmes d'observateur qui servent à évaluer des composantes de la rotation du véhicule ($\hat{H}_X$, $\hat{H}_Z$) et/ou des composantes de moments perturbateurs constants ou périodiques (par exemple $\hat{T}_{DXO}$, $\hat{T}_{DX1}$, $\hat{T}_{DX2}$) du véhicule ou des fonctions de transfert équivalentes et des circuits.

7. Dispositif selon l'une des revendications 1 à 6, caractérisé par le fait que l'on utilise un convertisseur amplitude-phase (409, 509) qui calcule l'amplitude de nutation $A_N$ et l'angle de phase de la nutation $\beta_N$ d'après les formules suivantes:

$$A_N = \sqrt{\frac{\hat{\omega}_X^2}{\omega_N^2} + \frac{\hat{\omega}_Z^2}{\omega_N^2} \cdot \frac{I_Z}{I_X}}$$

$$\beta_N = \text{arctg} \frac{\hat{\omega}_Z}{\hat{\omega}_X} \sqrt{\frac{I_Z}{I_X}}$$

$\hat{\omega}_X$, $\hat{\omega}_Z$ représentant les signaux se sortie du moyen d'observation de la nutation (408, 508), $\omega_N$ la fréquence de nutation et $I_X$, $I_Z$ les moments d'inertie des axes transversaux.

**8.** Dispositif selon l'une des revendications 1 à 6, caractérisé par le fait que l'on utilise un convertisseur amplitude-phase (409, 509) qui calcule l'amplitude de nutation $A_N$ et l'angle de phase de la nutation $\beta_N$ d'après les formules suivantes:

$$A_N = \sqrt{\hat{\omega}_X^2 + \hat{\omega}_Z^2}$$

$$\beta_N = \text{arctg} \frac{\hat{\omega}_Z}{\hat{\omega}_X}$$

$\hat{\omega}_X$, $\hat{\omega}_Z$ représentant les signaux se sortie du moyen d'observation de la nutation (408, 508).

**9.** Dispositif selon l'une des revendications 1 à 8, caractérisé par le fait que l'on utilise un élément de réglage de nutation (410, 610) qui détermine l'instant pour une intervention de réglage dans une période de nutation d'après les règles suivantes:

$$\gamma_O + \Delta\gamma - \Delta\beta \leq \beta_N(t) \leq \gamma_O + \Delta\gamma + \Delta\beta$$

lorsque:

$$1/2 \leq A_N/\Delta P \leq 3/2$$

sinon:

$$\gamma_O - \Delta\beta \leq \beta_N(t) \leq \gamma_O + \Delta\beta$$

$A_N$, $\beta_N$ représentant l'amplitude de nutation et l'angle de phase de la nutation, $\Delta P$ l'incrément de rotation de l'intervention de réglage minimale possible, normé sur la rotation du véhicule, $\pm\Delta\beta$ la plage de tolérance pour l'instant de l'intervention de réglage exprimée sous forme de plage angulaire et $\gamma_O$ la direction d'action d'un incrément de rotation dans le plan de la trajectoire, produit par une intervention de réglage, rapporté à l'angle de nutation d'origine $\beta_N$ et avec

$$\Delta\gamma(t) = \arccos\left(\frac{A_N}{2\Delta P} + \frac{3\Delta P}{8A_N}\right),$$

ou approximativement:

$$\Delta\gamma(t) = \sqrt{1 - \left(\frac{A_N}{2\Delta P} + \frac{3\Delta P}{8A_N}\right)^2}$$

**10.** Dispositif selon l'une des revendications 1 à 8, caractérisé par le fait que l'on utilise un élément de réglage de nutation (410, 610) qui détermine les instants pour produire deux interventions optimales de réglage $\beta_{N1}$, $\beta_{N2}$ dans une période de nutation d'après les règles suivantes:

$$\gamma_0 + \Delta\gamma_1 - \Delta\beta \leq \beta_{N1}(t) \leq \gamma_0 - \Delta\gamma_1 + \Delta\beta$$

pour la première intervention de réglage, dans la mesure où: $A_N \leq 2\Delta P$, et:

$$\gamma_0 - \Delta\beta \leq \Delta\beta_{N2}(t) \leq \gamma_0 + \Delta\beta$$

pour la deuxième intervention de réglage, $A_N$, $\beta_N$ représentant l'amplitude de nutation et l'angle de phase de la nutation, $\Delta P$ l'incrément de rotation de l'intervention de réglage minimale possible, normé sur la rotation du véhicule, $\pm\Delta\beta$ la plage de tolérance pour l'instant de l'intervention réglage exprimée sous forme de plage angulaire et $\gamma_0$ la direction d'action d'un incrément de rotation dans le système de coordonnées de la trajectoire produit par une intervention de réglage et avec:

$$\Delta\gamma_1 = \arccos\left(\frac{A_N}{2\Delta P}\right)$$

ou pour

$$A_N > 2\Delta P : \Delta\gamma_1 = 0.$$

**11.** Dispositif selon l'une des revendications 1 à 10, caractérisé par le fait que le moyen d'observation de la nutation (408, 508) et/ou le convertisseur amplitude-phase (409, 509) et/ou l'élément de réglage de nutation (410, 610) sont constitués par des algorithmes qui correspondent à des circuits.

**12.** Dispositif selon l'une des revendications 1 à 11, caractérisé par le fait que le moyen d'observation de la nutation (408, 508) et/ou le convertisseur amplitude-phase (409, 509) et/ou l'élément de réglage de nutation (410, 610) sont agencés pour recevoir des valeurs de mesure supplémentaires et/ou des relations fonctionnelles de paramètres variables provenant du système tels que la rotation mémorisée ($H_Y$) et/ou des incréments de réglage ($\Delta T_{CX}$, $\Delta T_{CZ}$) effectivement produits.

**13.** Dispositif selon l'une des revendications 1 à 12, caractérisé par le fait que l'élément de réglage de la rotation monté derrière le premier et/ou le troisième circuit de réglage (401, 601), côté sortie, est agencé sous forme de moyen d'observation de rotation et de grandeurs perturbatrices (504, 606, 613) qui délivre des grandeurs d'évaluation de composantes de moments perturbateurs ($\hat{T}_{DXO}$, $\hat{T}_{DX1}$, $\hat{T}_{DX2}$, $\hat{T}_{DZO}$, $\hat{T}_{DZ1}$) constants et/ou périodiques, suivi d'un élément de réglage d'état (505, 512, 608, 609, 614) contenant des facteurs d'amplification ($K_{DXO}$, etc.) associés à chacune des composantes de moments perturbateurs.

**14.** Dispositif selon la revendication 13, caractérisé par le fait qu'une mémoire de grandeur perturbatrice (511, 612, 618) qui reçoit les grandeurs d'évaluation pour les composantes des moments perturbateurs ($\widehat{T}_{DXO}$, etc.) est placée avant l'élément de réglage d'état (505, 608, 609, 614).

**15.** Dispositif selon la revendication 14, caractérisé par le fait qu'un commutateur (615) est disposé dans les lignes de liaison qui acheminent les signaux pour les grandeurs d'évaluation des composantes des moments perturbateurs ($\widehat{T}_{DZO}$, $\widehat{T}_{DZ1}$), entre le moyen d'observation de grandeurs perturbatrices et de rotation (606, 613) monté à la suite du troisième circuit de réglage (601) et la mémoire de grandeurs perturbatrices (618) montée derrière celui-ci, lequel commutateur interrompt la liaison avec perte momentanée de la référence de position (signal de mesure $\epsilon_\psi$) associée au deuxième axe transversal.

**16.** Dispositif selon l'une des revendications 12 à 15, caractérisé par le fait qu'au moins un moyen d'observation de grandeurs perturbatrices et de rotation (606, 613) est agencé pour produire des grandeurs d'évaluation ($\widehat{H}_Z$, $\widehat{H}_X$) pour des composantes de la rotation du véhicule ($H_Z$, $H_X$) dans la direction du deuxième et/ou du premier axe transversal résultant d'écarts ($\epsilon_\phi$, $\epsilon_\psi$) par rapport à l'orientation de consigne autour du premier et/ou du deuxième axe transversal (axe X ou Z).

**17.** Dispositif selon la revendication 16, caractérisé par le fait que le moyen d'observation de grandeurs perturbatrices et de rotation (504, 606) qui produit des grandeurs d'évaluation ($\widehat{H}_X$, $\widehat{H}_Z$) pour les deux composantes de la rotation du véhicule est connecté au deuxième circuit de réglage (401, 601).

**18.** Dispositif selon la revendication 1 ou 2, caractérisé par le fait qu'il est prévu des détecteurs supplémentaires (par exemple des gyroscopes de vitesse) qui mesurent la vitesse angulaire autour d'au moins l'un des axes transversaux, lesquels détecteurs sont reliés côté sortie au convertisseur amplitude-phase par l'intermédiaire de filtres passe-haut et/ou de moyens d'observation de nutation.

Fig. 1a

Fig.1b

# Fig.1c

SONNEN-SENSOR 3

SONNEN SENSOR 1&2

(113)

(112)

60°

60°

60°

60°

SOLAR GENERATOR

(108)

DRALL-RAD

(103)

X

SONNEN SENSOR 4

(114)

ERD-SENSOR (109)

(105)

120°

Z

EP 0 333 808 B1

# Fig. 2

NUTATIONS - DÄMPFUNGS -
LOGIK (220)

SENSOR $\quad$ FILTER $\quad$ PR-MODULATOR

$\phi_C \quad \varepsilon_\phi$

(201)

(204)
(205)

(208)

$T_{DX}$
(216)

(214)

SATELLIT-DYNAMIK

ROLLEN $\qquad \phi_i$

$\psi$

$\dfrac{K_S}{1+T_S s}$ (202)

$\dfrac{K_R K_M}{1+T_F s}$ (203)

(206)

$T_D$

$\Delta t$

$+T_{CX}$

$-k$
(215)

$T_{DZ}$
(217)

GIEREN
(218)

-1

$\dfrac{K_M}{1+T_M s}$ (207)

(209)

$T_D$

$\Delta t$

$-T_{CX}$

(210) $\quad$ (211) $\quad$ (212) (213)

$\phi_i$

-1

EP 0 333 808 B1

# Fig. 3

STELLGLIEDER

$T_C$

$+$ $-$

(213)

SATELLIT-
DYNAMIK

$T_{DX}$

(216)

ROLLEN

$\phi$

REGLER

(217)

$\psi$

$\phi_C$ (201)

SENSOR

$\Phi_M$

$K_R$ $\dfrac{\displaystyle\prod_{i=1}^{n}(S+W_{vi})}{\displaystyle\prod_{i=1}^{n+3}(S+W_{Fi})}$

(205)

$h_E$ $h_A$

(206)

$-k$

(215)

GIEREN

(218)

$\dfrac{K_S}{1+T_S\cdot S}$

(202)

(301)

$-1$

PR-MODULATOR

(204)

$T_{DZ}$

$\dfrac{K_M}{1+T_M S}$

(207)

$-1$

<div style="text-align:right">EP 0 333 808 B1</div>

# Fig. 4a

EP 0 333 808 B1

$\varepsilon_\phi$ → | 1. REGLER-NETZWERK (401) | $\phi_0$ → | 1. ORALL-REGLER (404) | $H_Z^*$ → | TOT-ZONE (405) | → | X-MODULATOR (406) | $\Delta t_{CX}$

| 2. REGLER-NETZWERK (402) | $\phi_N$ → | D-GLIED (407) | $\omega_X$ → | NUTATIONS-BEOBACHTER (408) | $\hat{\omega}_X$ $\hat{\omega}_Z$ → | AMPLITUDEN/PHASEN-WANDLER (409) | $A_N$ $\beta_N$ → | NUTATIONS-REGLER (410) | $\Delta r_{CX}$ $\Delta r_{CZ}$

# Fig. 4b

EP 0 333 808 B1

Fig. 4c

# Fig. 4d

# Fig. 5a

EP 0 333 808 B1

# Fig.5b

Fig. 5c

EP 0 333 808 B1

Fig. 6a

Fig. 6b

EP 0 333 808 B1

Fig. 6c

$\hat{T}_{Di}^{*} = \hat{T}_{Di}(t-1/W_0)$

Fig. 6d

EP 0 333 808 B1

## Fig. 6e

Fig.7a   Fig.7b   Fig.7c